Europäisches Patentamt

European Patent Office

Office européen des brevets

(19)

(11) Publication number: **0 000 946**
A2

## (12) EUROPEAN PATENT APPLICATION

(21) Application number: 78100748.9

(22) Date of filing: 25.08.78

(51) Int. Cl.²: **G 11 B 5/58,** G 11 B 5/55,
G 05 D 3/00

(30) Priority: 31.08.77 US 829312

(43) Date of publication of application: 07.03.79
Bulletin 79/5

(84) Designated Contracting States: DE FR GB SE

(71) Applicant: Hewlett-Packard Company, 1501 Page Mill
Road, Palo Alto California 94304 (US)

(72) Inventor: McKnight, Robert N., 47 Harold Parker Road,
Andover Massachusetts (US)

(74) Representative: Schulte, Knud, Dipl.-Ing.,
Lindenstrasse 16, D-7261 Gechingen/Bergwald (DE)

(54) Apparatus for controlling the movement of the data head in a moving-head data recording system.

(57) Two servoing functions, both operating from the data reading and recording transducer, are performed in a high performance movinghead disc drive. One servo rapidly moves the head from its current track to any other track utilizing absolute track identifying addresses recorded in the inter-sector gap between data sectors. Once located on a track, the other servo maintains head location precisely over the center of that track while data is being read or recorded employing track following information also recorded in the inter-sector gap. The resolution of transducer location is enhanced by secondary use of the track following information.

0000946

Int.Re: Case 1205
Hewlett-Packard Company

In a typical prior art moving-head disc drive, the data reading and recording transducer, hereinafter referred to as the data head or head, is moved from one track to another under servo control to ensure that the data head will stop directly over the target track (e.g. US patent 35 34 344). Given practical acceleration limitations, the data head carrier or actuator is typically accelerated at the maximum level possible until half the total distance has been traveled, then decelerated until it is stopped over the target track. An open-loop head position system is impractical because electrical and mechanical perturbations will result in over-shoot and under-shoot of the target track.

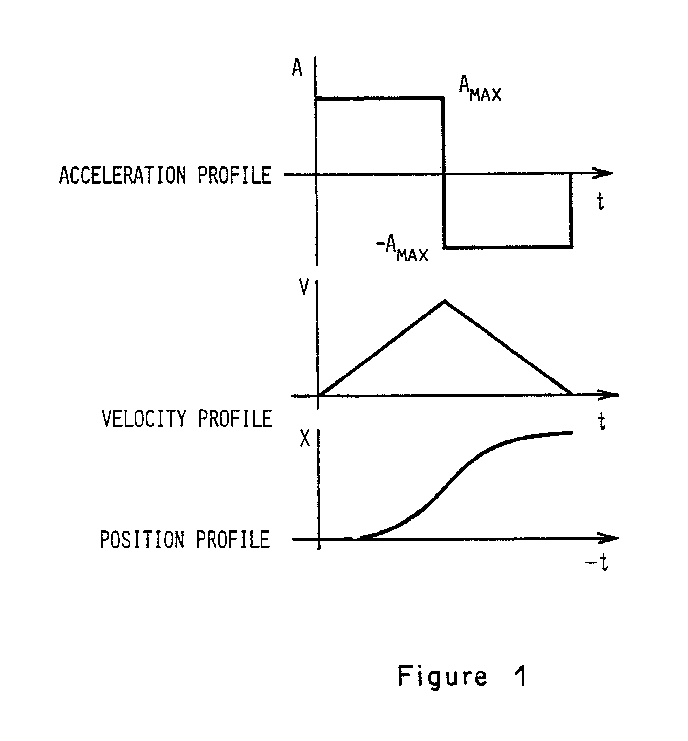

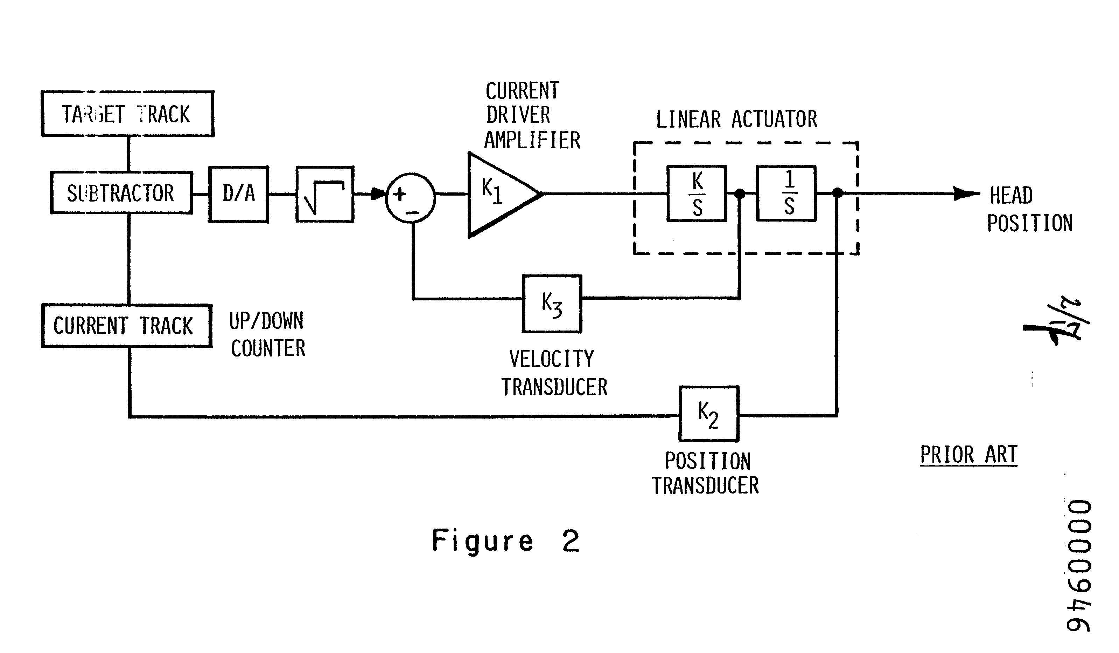

The acceleration, velocity and position profiles of such a conventional system are shown in Figure 1. Combining the velocity and position curves, it is clear that the velocity at any instant in time is proportional to the square root of the distance yet to be traveled. Such proportionality is the principle of many conventional track locating servos such as the one shown in Figure 2. Such servos typically include one register for containing the target track information and another for containing current track location, the latter being updated as the head moves. Update information is obtained by counting track crossings from a glass encoder or dedicated, continuous servo surface. The informational difference between these two registers represents the distance yet to be traveled and is converted to an analog voltage which is proportional to the distance to the target track. The desired velocity of the carrier is obtained by taking the square root of the analog voltage which is then compared to the actual velocity to derive a current proportional to the difference between the two velocities for driving the motor.

For the conventional track locating system diagrammed in Figure 2, the position transducer is a pulse generator which produces a pulse to increment or decrement the up/down counter (or current

0000946

Int. Re: Case 1205
Hewlett-Packard Company

track register) whenever a track center is crossed. Track centers are obtained by detecting lines on a glass encoder attached to the structure for moving the head, or by detecting specially written tracks on a dedicated surface of the disc pack which is read by a separate servo head. However, such systems require a dedicated servo surface or position transducers other than the data head itself. Moreover, such systems define the relative position of the servo head to servo track, not of the data head to data track. Other prior art systems use encoders on the head carriage. In addition to expense, however, encoder systems define the relative position of the casting to head carriage, not of the data head to data track.

The system shown in U.S. Patent 3 924 268 is typical of more recent prior art moving head disc track locating systems. It describes a system, having track following information recorded in the inter-sector gap between data sectors and read by the data head, which is  dependent on sensing the velocity of the transducer carriages while moving to another track. In this case there is a primary and a low-mass secondary carriage for supporting and translating the data head. The position of transducer carriages is determined with respect to a reference plane by servo circuitry which includes a register for storing a commanded track position, a counter which is incremented or decremented relative to the reference plane as the transducer moves across data tracks and a comparator for comparing the contents of the counter and register. The low-mass secondary  carriage to which the head is actually coupled, is used for fast response movement to follow, for example, the radial runout of the track, such movement typically being limited to a single track width.

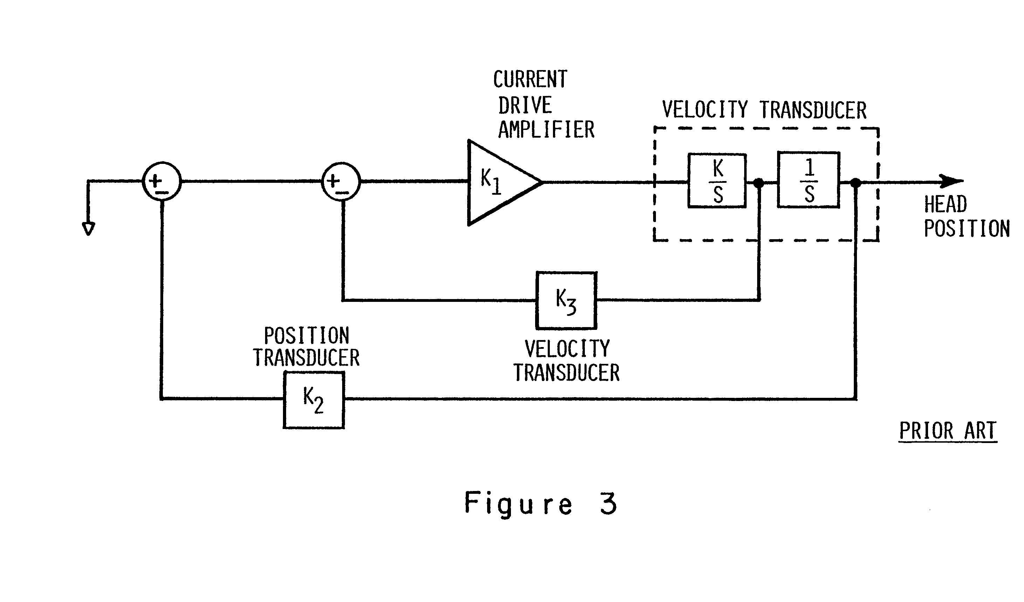

Conventional track following systems, such as the one shown in Figure 3, employ rate and position feedback in a continuous null-seeking analog servo system. The rate information is obtained from a velocity transducer, and the position information from one of several possible transducers.

Int. Re: Case 1205
Hewlett-Packard Company

Position transducers may consist of an optical or magnetic encoder attached to the same moving structure as the head, or a separate head which reads magnetic transitions on the surface of the disc pack dedicated to servo information (servo surface). A continuous, linear voltage-versus-distance signal (with zero volts at track center) is derived from the encoder or separate head output.

In most prior art track following systems, the object is to center a data head over a data track based on reference information derived from servo data written on another servo surface. Thus, these systems depend on the stability, fidelity and integrity of the mechanical linkages between the reference- and data tracks for assuring that the data head are over data track centers. Such mechanical linkages are inadequate at best owing to misalignments, uncompensated temperature coefficients and spindle runout.

A track locating servo constructed according to the present invention servos on the position profile of Figure 1 rather than on the velocity profile. Hence, the need for an expensive velocity transducer is eliminated. Data relating to the current track, the target, and maximum actuator acceleration and deceleration levels, is provided to a microprocessor which mathematically generates a characteristic curve of position-versus-time.

The desired position is compared to the actual position. The error signal representing the difference between the actual and desired position is processed by digital signal processing circuitry which determines the linear actuator motor current, since no direct velocity feedback is used.

No encoder or dedicated servo head and surface is required in the present invention since position information for track locating is provided by the data head reading track identifying addresses recorded on the data surface. Track identification data, in the form of coded track addresses, are pre-recorded on the surfaces of the disc in the gap between the sectors of data on each

Int. Re: Case 1205
Hewlett-Packard Company

track (inter-sector gap hereafter). The track addresses are sampled and stored and are updated as each inter-sector gap is read by the data head.

For track following, again no remote reference exists since magnetic transitions detected by the data head, to produce a tracking signal, also have been written on the data surface. These transitions are written in the inter-sector gaps but separate from track addresses. The tracking signal is updated by reading the magnetic transitions at each inter-sector gap. Again, the velocity transducer has been eliminated and, for this mode, replaced by analog lead networks to compensate the servo loop. In addition, the resolution of data head position is enhanced by adding data, derived from the tracking signal produced by the track following servo, for determining which side of and the distance from a track's center the data head is located to the coded track address data produced by the track locating servo.

The microprocessor used in the present invention is located in the disc controller, and otherwise would be idle while the drive is in track locating mode. Since the present invention has no dedicated servo surface, data storage capacity is maximized. The present system also has no velocity transducers or decoders, thus reducing manufacturing cost.

Figure 1 shows the acceleration, velocity and position profiles for conventional disc drive head positioning systems.

Figure 2 is a block diagram of a typical track locating servo used in a conventional disc drive head positioning system.

Figure 3 is a block diagram of a typical track following servo used in a conventional disc drive head positioning system.

Figure 4 is an overall block diagram of a moving-head disc drive head positioning system constructed according to the preferred embodiment of the present invention.

Int. Re: Case 1205
Hewlett-Packard Company

Figure 5 is a block diagram of the signal conditioner used in the
head positioning system of Figure 4.

Figure 6 is a block diagram of the track following data decoder
used in the head positioning system of Figure 4.

Figure 7 is a diagram of the track following and track address data
as recorded in the inter-sector gap of a disc used in the
head positioning system of Figure 4.

Figure 8 is a block diagram of the track address decoder used in
the head positioning system of Figure 4.

Figure 9 is a block diagram of the actuator drive amplifier used in
the head positioning system of Figure 4

Figure 10 is a diagram of the tracking signal showing the points
thereon corresponding to track centers, and showing points
thereon at which the recorded track addresses change code.

Figure 11 is a diagram of the tracking signal of Figure 10 showing
points thereon at which the extended precision information
changes.

Figures 12A-12C are flow charts of the algorithms used by the microprocessor of the positioning system of Figure 4 to compute
the position profile according to the present invention.

Figure 13A is a characteristic curve of position-versus-time showing
settling time over target track in the positioning system
of Figure 4 uncorrected for steady-state track locating error.

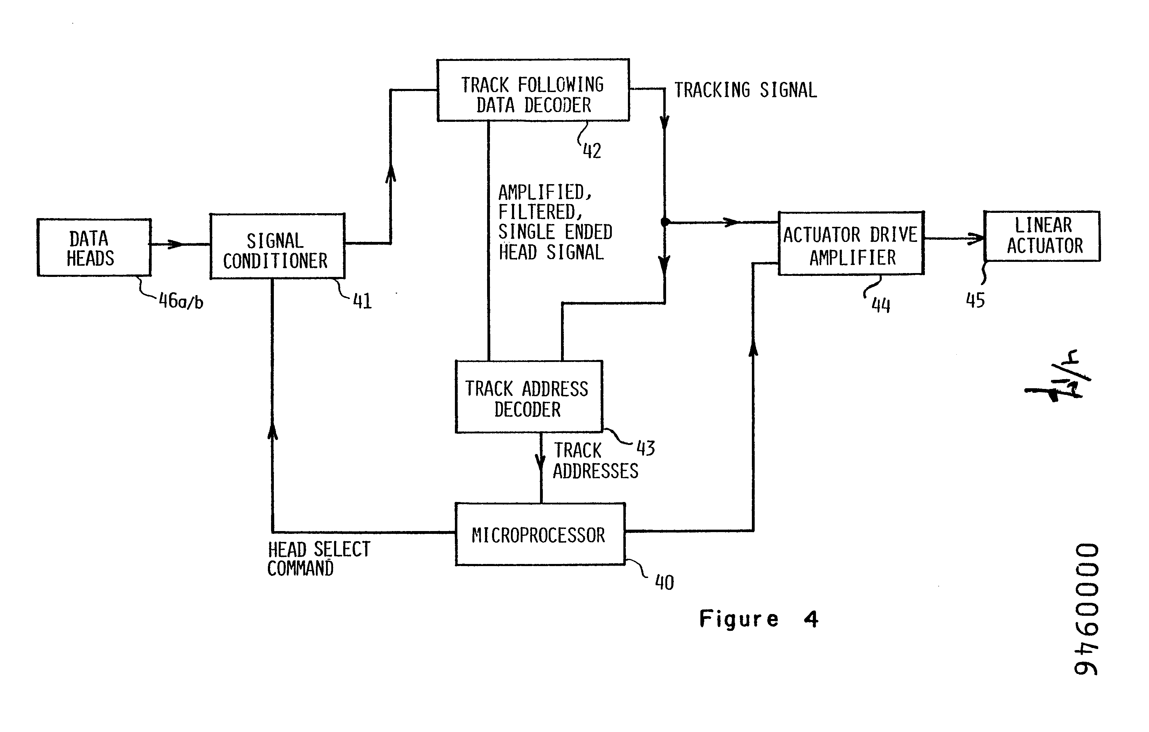

Figure 13B is a characteristic curve of position-versus-time showing
settling time over target track in the positioning system of
Figure 4 corrected for steady-state track locating error.

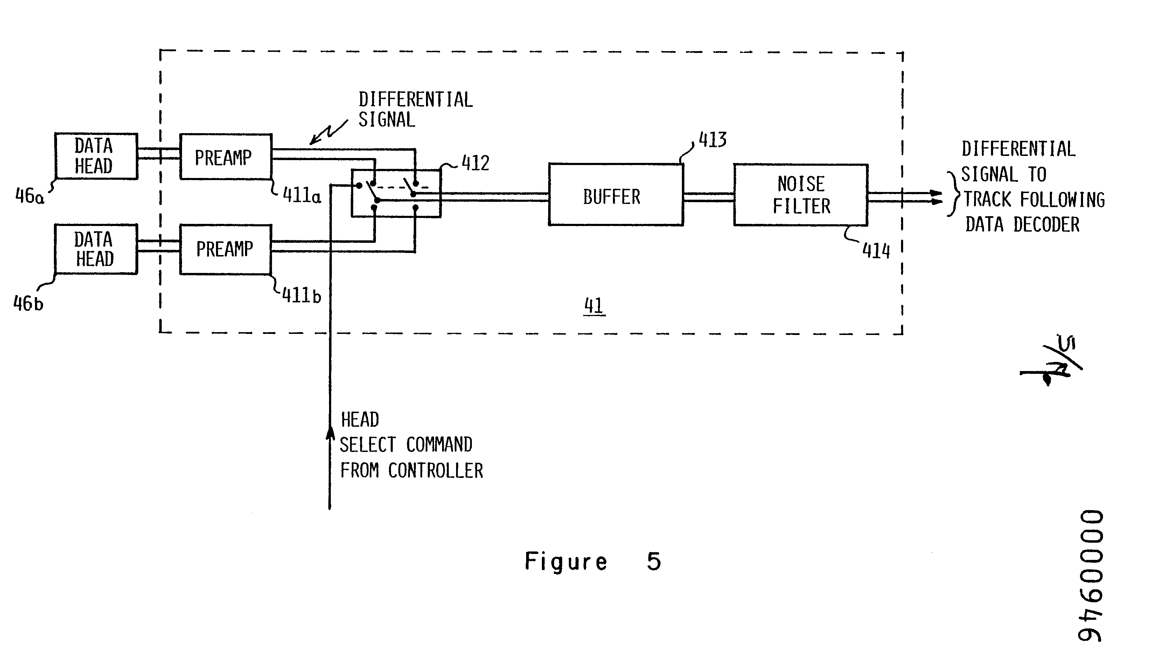

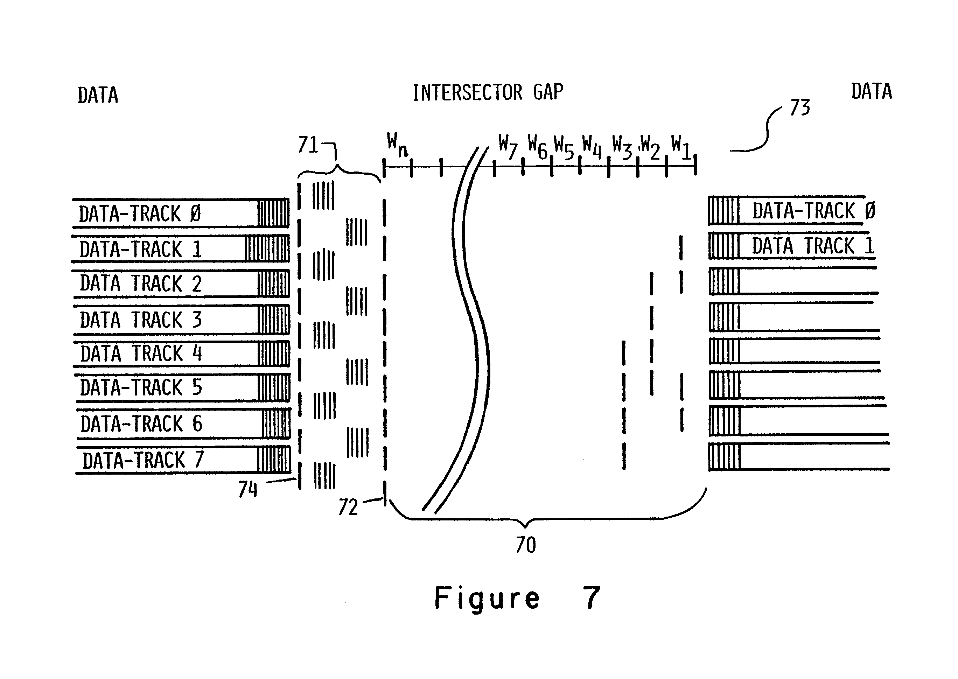

Referring to Figures 4 and 5, the disc drive servos of the present
invention comprise microprocessor 40, signal conditioner 41, track
following data decoder 42, track address decoder 43, actuator drive
amplifier 44, and data heads 46a and 46b carried by linear actuator 45.
Magnetic transitions, recorded in the inter-sector gap as shown,
for example at 71, in Figure 7, are detected by data head 46a and
46b as the inter-sector gap passes beneath them. The differential
signals produced by the data heads are amplified by preamps 411a
and 411b and one of the signals, as selected by head selector switch

Int. Re: Case 1205
Hewlett-Packard Company

412 in response to a head select command from microprocessor 50,
is transmitted to track following data decoder 42 via buffer 413
and filter 414.

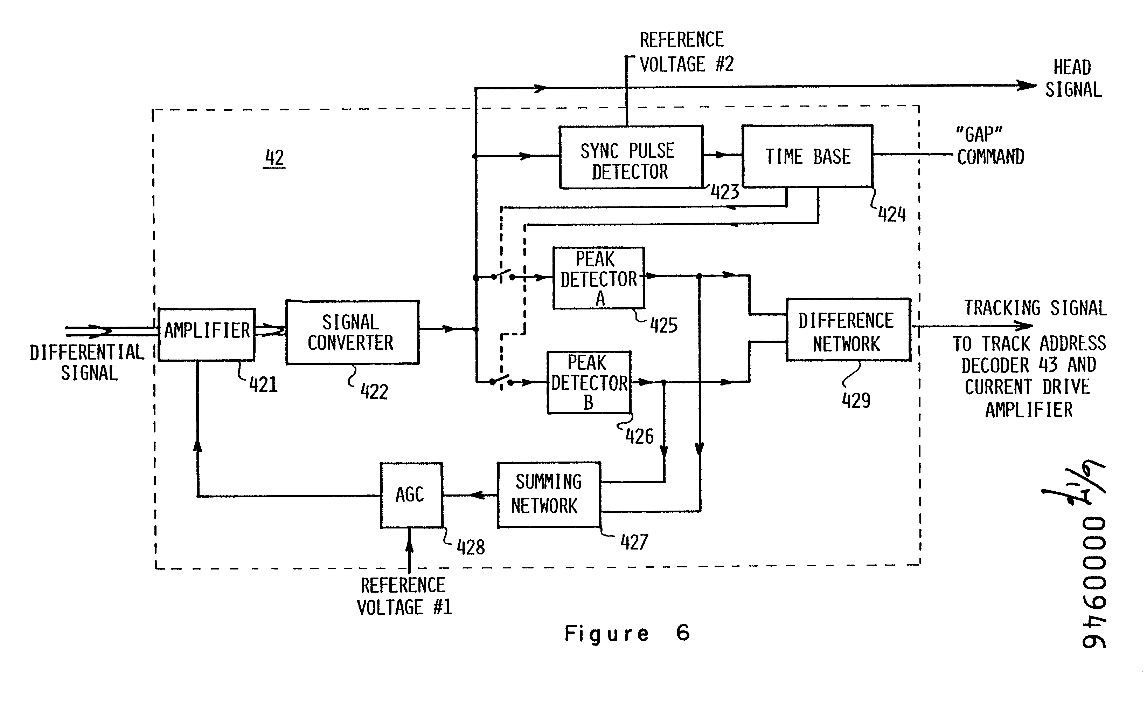

In Figure 6, track following data decoder 42 comprises voltage-
controlled-gain amplifier 421 for receiving the differential head
signal from signal conditioner 41, signal converter 422 for converting input signal from a differential signal to a single-ended
signal, that single-ended signal hereinafter referred to as the
head signal, and pulse detector 423 for initiating time base 424
in cooperation with GAP command from microprocessor 40. The GAP
command is timed to activate time base 424 circuitry to process the
head signal at and during the time the inter-sector gap passes
beneath the data head. Synchronization (sync) pulse detector 423
detects a first sync pulse derived from magnetic transition 74 on
the head signal. Peak detectors 425 and 426, the input to which
being controlled by time base 424 via switches $S_1$ and $S_2$, respec-
tively, transmits the head signal to summing and difference networks 427 and 429 in response to control signals from time base 424.
Summing network 427 in turn controls the gain of amplifier 421 via
AGC (automatic gain control) 428 and difference network 429 transmits a signal, hereinafter referred to as the tracking signal, to
track address decoder 43 and actuator drive amplifier 44.

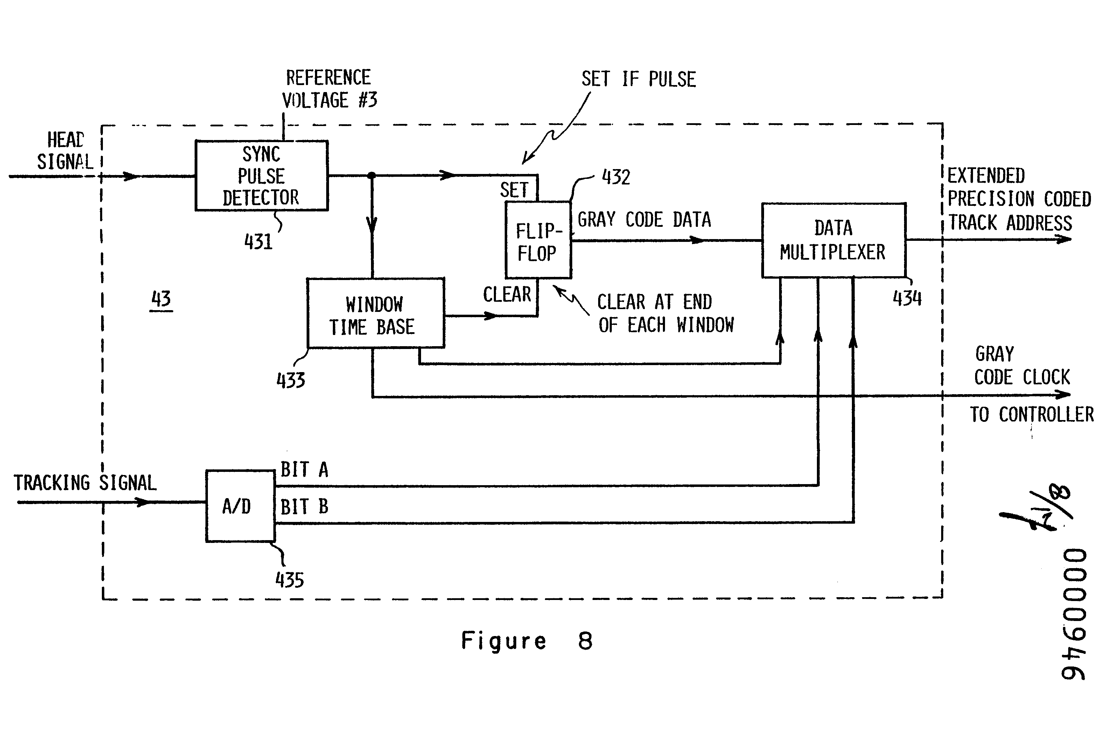

Referring now to Figures 7 and 8, coded track identifying data are
recorded in the form of magnetic transitions (or lack thereof) at
regularly spaced intervals, designated $W_1$ - $W_n$ and referred to
hereafter as address intervals 73 in the inter-sector gap. Window
time base 433 generates "bit windows" synchronously timed with disc
rotation speed to correspond to detection of address intervals 73
by one of the data heads, 46a or 46b, in response to a second sync
pulse derived from magnetic transition 72. Transition 72, also
recorded in the inter-sector gap, is located just ahead in sequence,

Int. Re: Case 1205
Hewlett-Packard Company

of the coded track identifying data. Window time base 433 automatically terminates bit window generation at the end of bit window
$W_n$.

The presence of a magnetic transition recorded in an address
interval $W_1$ - $W_n$ causes a pulse to be transmitted on the head
signal. That pulse is interpreted by multiplexer 434 at a "one"
in the corresponding bit window generated by window time base 433.
The absence of a magnetic transition in an address interval is
conversely interpreted as a "zero". The cumulative result of bit
window data is a coded track address.

If the data head is moving to another track and crosses more than
one track as the inter-sector gap passes beneath it, the data head
will sense all "ones" common to all track addresses sensed. The
decoded track address, however, can be resolved to $\pm$ 1/2 track
maximum simply by using the address coding scheme described later
in this specification and by suitably limiting the length of the
track address code. Thus, track addresses should be limited in
length so that the head travels over parts of no more than two
such addresses at maximum translation velocity of the head and
rotation speed of the disc.

According to Figure 8, track address decoder 43 comprises pulse
detector 431, flip flop 432, multiplexer 434, window time base 433
and analog-to digital (A/D) converter 435. Pulse detector 431
actuates window time base 433 upon detection of the second sync
pulse representing magnetic transition 72. Flip flop 432 is set by
pulses representing magnetic transitions in intervals $W_1$ - $W_n$. Flip
flop 432 is reset by window time base 433 at the end of each data
window. If no pulse appears in a data window, flip flop 432 remains
reset. Thus, the output of flip flop 432 is coded address data,
hereinafter referred to as the track address, uniquely identifying
each track, and derived from the head signal for the time period
during which the intersector gap passes beneath the data head. Flip

Int. Re: Case 1205
Hewlett-Packard Company

flop 434 ignores the third sync pulse and pulse detector 431 is insensitive to interval pulses.

Multiplexer 434 combines the track address data from flip flop 432 with two additional bits of data from A/D converter 435 in accordance with the timing of bit windows received from window time base 433 to produce an extended precision track address as explained later in this specification with respect to Table I. A/D converter 435 produces the additional data from the tracking signal as also described in connection with Table I later in this specification.

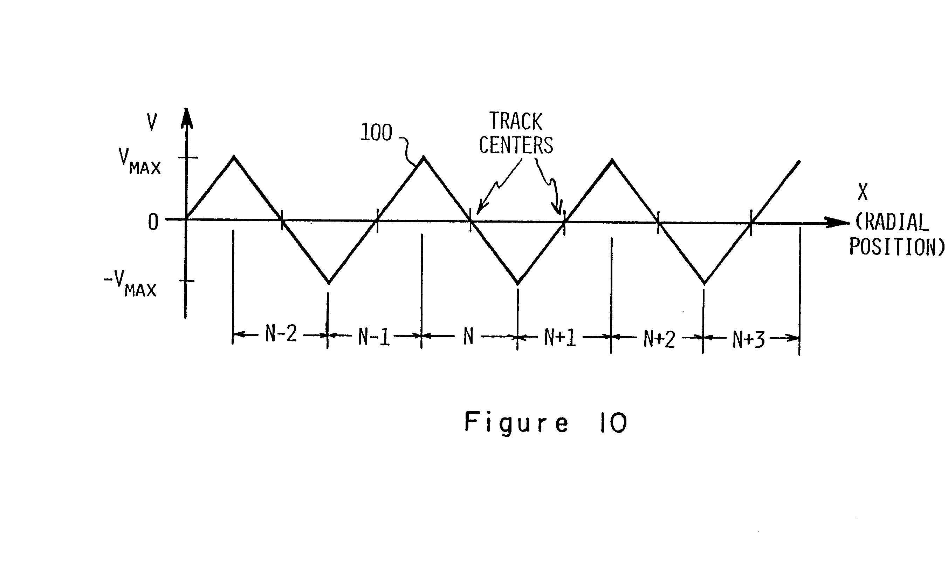

Among the features of the present invention is the method used to determine data head location while it is moving to another track. Track addresses are written in the inter-sector gap as shown in Figure 7 at 70 for tracks Ø - 7, together with track following magnetic transitions shown at 71 which are used by the track following servo described elsewhere in this specification. As the inter-sector gap passes beneath the data head, it detects at least one track address for processing into position information by microprocessor 40. Since a track address is available only at inter-sector gaps, track following data decoder 42 produces tracking signal 100 as shown in Figure 10, which is similar to a position signal produced by "sampling" the output signal of a servo head detecting transitions on a dedicated servo disc surface.

In Figure 10 V in the tracking signal resulting from the data head being at position X at the time an inter-sector gap passes under the head. N is the approximate distance over which unit distance code address "N" in read by the data head. $V_{MAX}$ is the maximum tracking signal amplitude produced when the data head is exactly between two data tracks.

Referring also to Figure 7, each magnetic transition at 71 is centered between tracks such that slightly less than one-half of

0000946

Int. Re: Case 1205
Hewlett-Packard Company

two serially disposed transitions for each track is on a track. The other half of the two transitions are disposed approximately equally to each side of each track. Thus, if the data head is exactly at center track, the tracking signal amplitude is zero; if the data head is off track center, the tracking signal amplitude increases toward $\pm V_{MAX}$ as the center of a magnetic transition is approached. At $\pm V_{MAX}$, the data head is exactly between tracks.

At high head velocities and track densities, as many as 10 tracks may be crossed between "samples" taken at each gap in the present invention. A track address according to the present invention, therefore, is written in absolute form and formatted to minimize decoding errors if the data head is instantaneously positioned between tracks when the inter-sector gap passes beneath it.

Decoding errors are limited to $\pm 1/2$ track in the present invention by writing the track addresses in a unit distance code. Track locating resolution is improved to at least $\pm 1/8$ track by addition of two bits of track locating data generated from processing of track following data as explained later in this specification. Track addresses in the preferred embodiment of the present invention are written in a unit distance code known as the Gray code. The Gray code is described in detail in U.S. Patent 2 632 058 which is incorporated by reference as if set forth fully herein. In a unit distance code, consecutive binary numbers differ by only one bit of digital data. Therefore, the addresses of neighboring tracks differ by only one data bit. Hence, if the head is between two adjacent tracks and reads a part of the address of both, the ambiguity is limited to $\pm 1/2$ track.

In the unit distance code addressing scheme of the present invention, the address of the track over which the data head is located is read as the inter-sector gap passes under the head. Again, this address could be as much as 1/2 track in error, simply because the same address is produced even if the head is up to 1/2 track to either

0000946

Int. Re: Case 1205
Hewlett-Packard Company

side of the track center. However, in this invention, the resolution of data head position is improved by using the tracking signal produced by track following data decoder 42 to determine which side of and the distance from track center the data head is located. The tracking signal is processed by A/D converter 435 to provide bits A and B which are added to the track address produced by the track locating servo. A single, unit distance code having greater precision is thus produced.

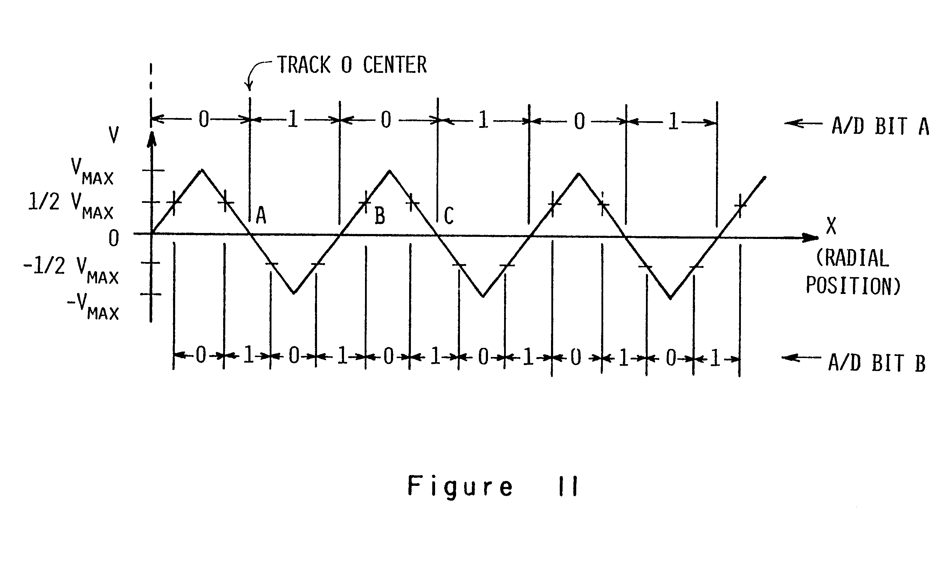

Referring to Figure 11, the A/D converter 435 outputs two bits according to the following criteria:
Bit A is high if the track following position signal is negative.
Bit A is low if the track following position signal is positive.
Bit B is high if the magnitude of the track following position signal (V) is less than $1/2$ $V_{MAX}$.
Bit B is low if the magnitude of the track following position signal (V) is greater than $1/2$ $V_{MAX}$.

Table I summarizes the resulting sequence of increased precision bits of track locating data code as the radial position of the data head is increased. It should be noted that the points at $\pm$ $V_{MAX}$ on the waveform represent the midpoint between tracks, but also the points at which the track address code changes.

Int. Re: Case 1205
Hewlett-Packard Company

| Increasing X | A | B | Final Bits of Track Address Unit Distance Code |
|---|---|---|---|
| Track Ø Center | 1 | 1 | 00 |
| | 1 | 0 | 00 |
| | 1 | 0 | 01 |
| | 1 | 1 | 01 |
| Track 1 Center | 0 | 1 | 01 |
| | 0 | 0 | 01 |
| | 0 | 0 | 11 |
| | 0 | 1 | 11 |
| Track 2 Center | 1 | 1 | 11 |
| | 1 | 0 | 11 |
| | 1 | 0 | 10 |
| | 1 | 1 | 10 |
| Track 3 Center | 0 | 1 | 10 |
| | 0 | 0 | 10 |

Table I      X

The sequence is itself a unit distance code. Thus, the precision of the track locating servo system has been increased to at least $\pm$ 1/8 track.

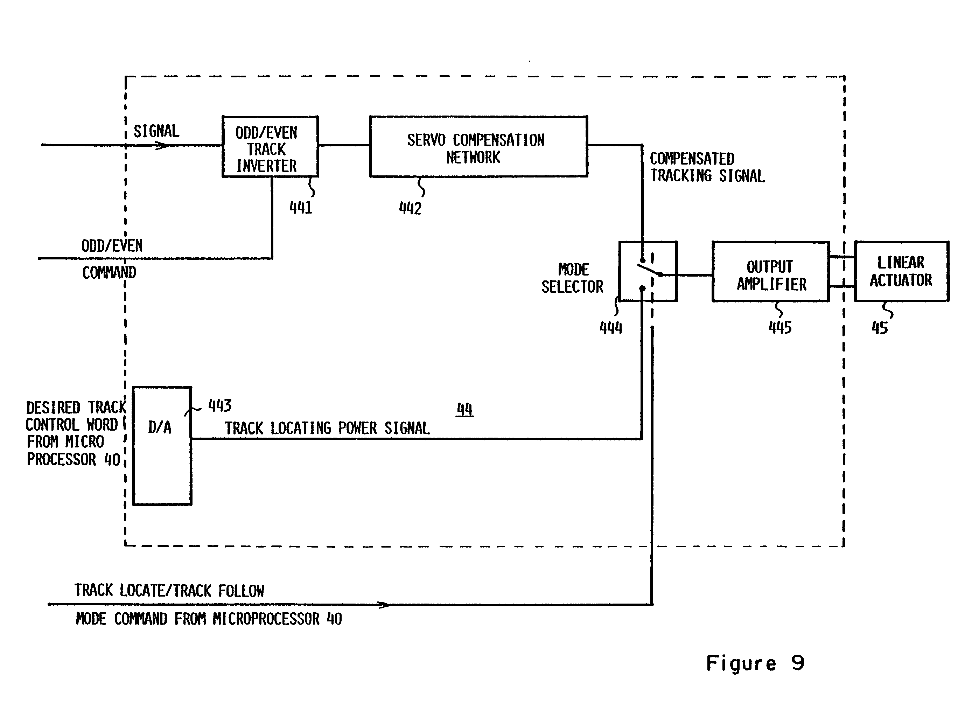

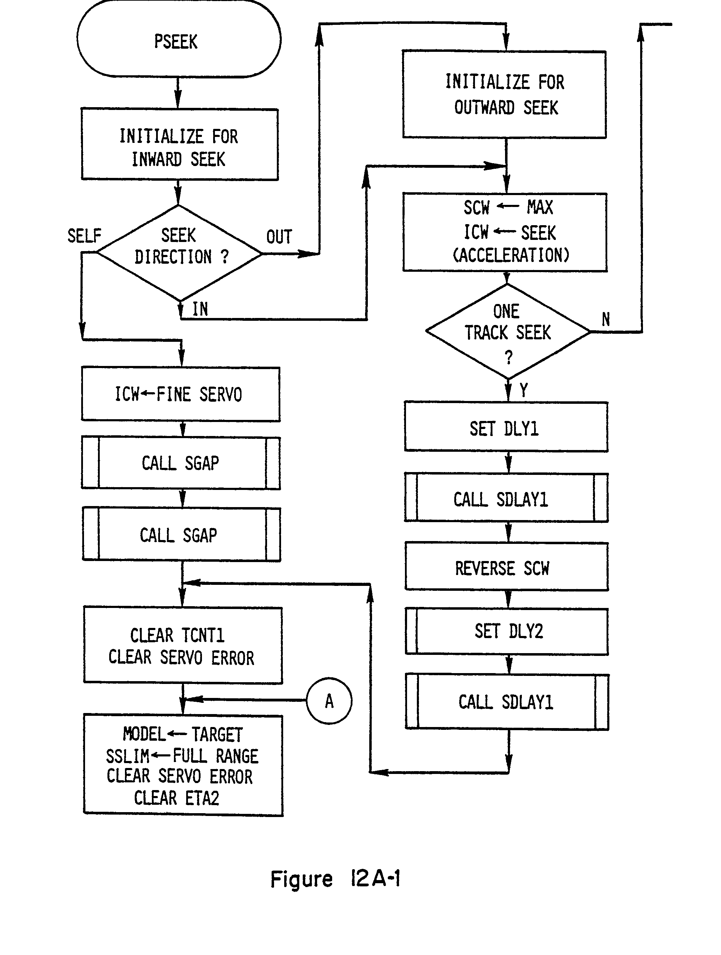

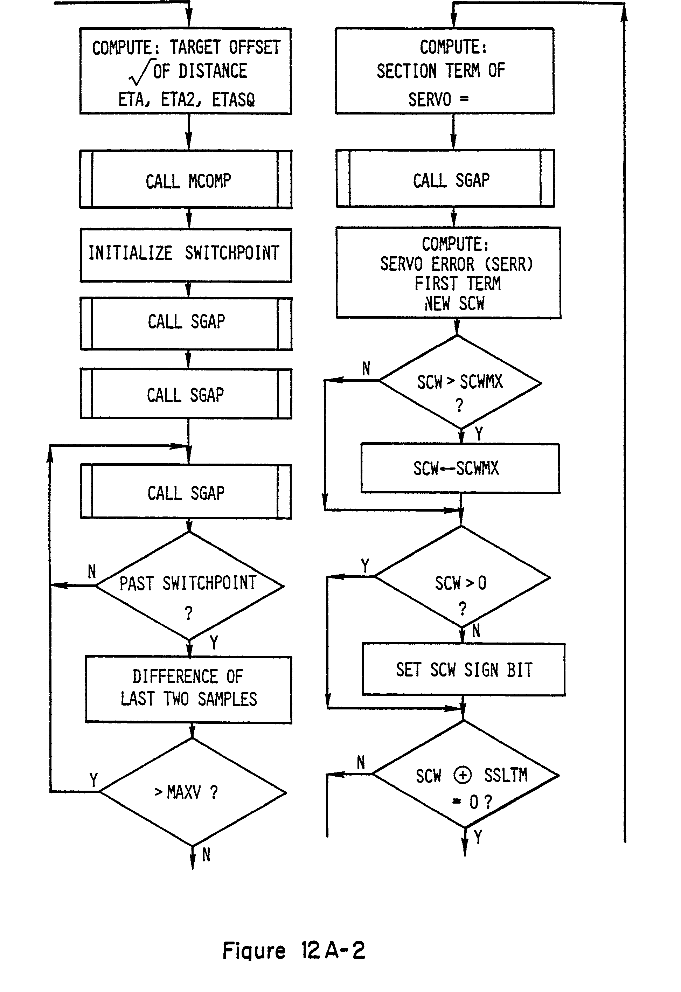

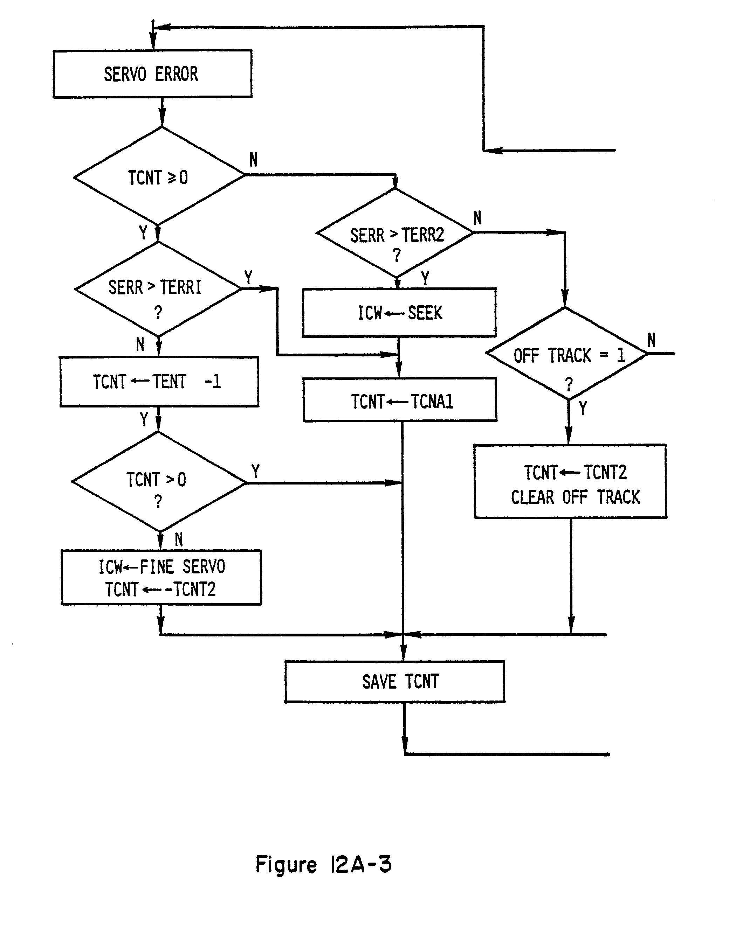

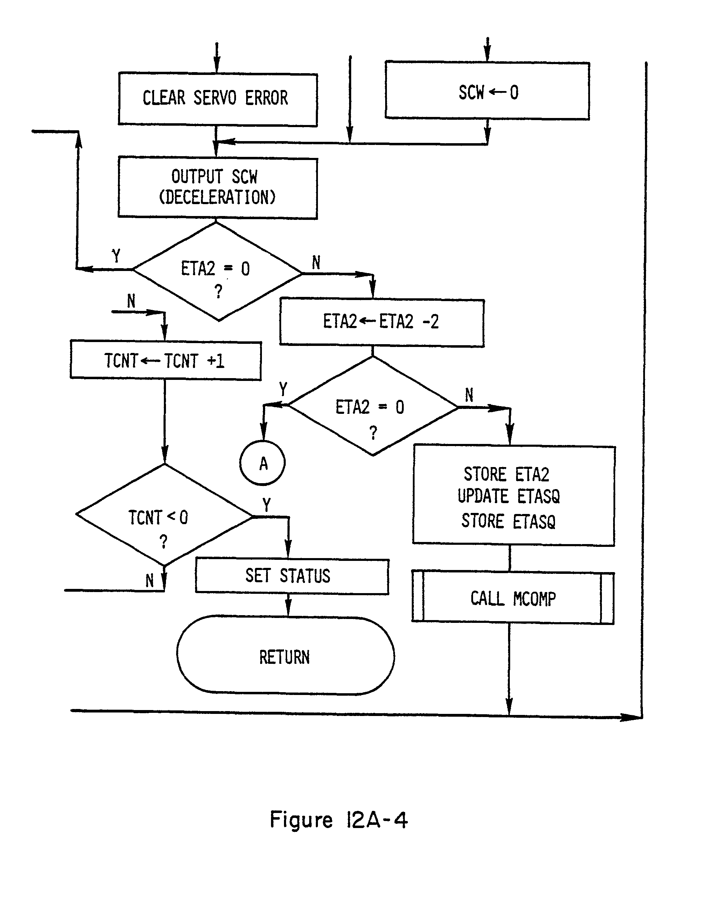

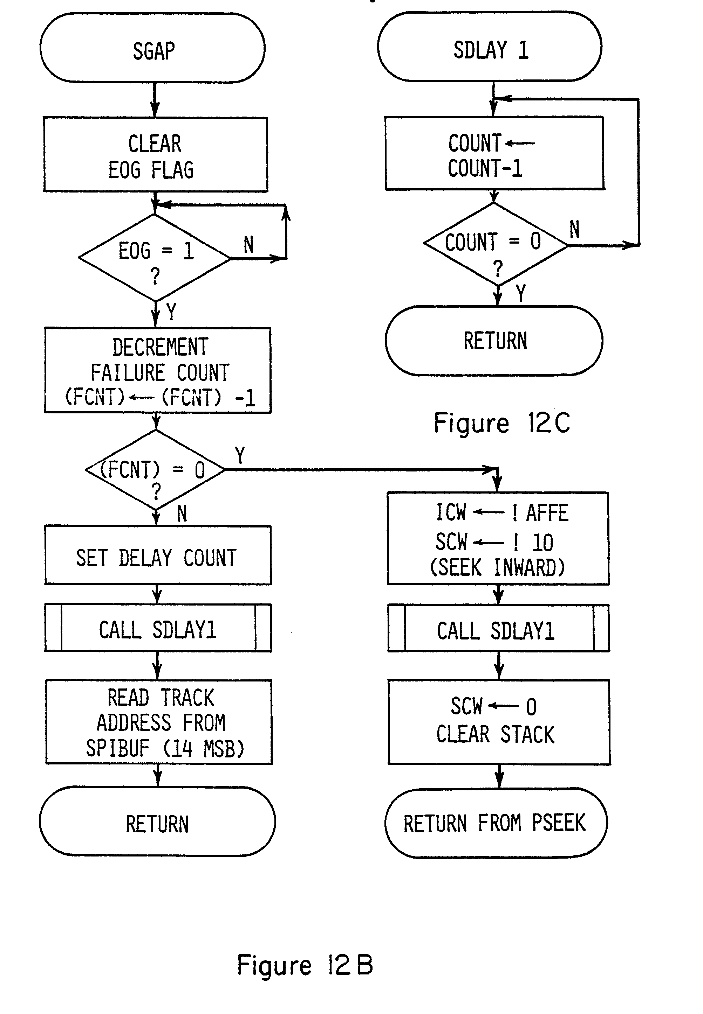

Referring now to Figure 9, actuator drive amplifier 44 comprises odd/even track inverter 441, servo compensation network 442, digital-to-analog (D/A) converter 443, mode selector 444 and output amplifier 445. Linear actuator 45 is driven by output amplifier 445 which is powered by the tracking signal or a track locating power signal as determined by mode selector 444 in response to appropriate command from microprocessor 40. Compensated error signals, representing the difference between actual head position and the computed position profile for a given target track, are derived by microprocessor 40 in the form of digital control words in accordance with the algorithm shown in Figures 12A - 12C, utilizing track addresses detected by the data head as it moves in the track

0000946

Int. Re: Case 1205
Hewlett-Packard Company

locating mode. Digital-to-analog (D/A) converter 443 then converts the control words into track locating power signals for driving actuator 45. The computed position profile then converges on the target track.

Referring also to Figure 11, track $\emptyset$ center is identified at A on the signal waveform. Similarly, track 1 center is identified at B, track 2 center is at C, and so on. While each track center is at zero, the slope of the signal is of opposite polarity for adjacent tracks, such as tracks $\emptyset$ and 1, and the slope is the same for every other track, such as tracks $\emptyset$ and 2. Thus, if the head were slightly off-center to the left on track $\emptyset$, the polarity of the signal required to move it back to center track might be, for example, positive, but negative for the same error on track 1. Therefore, odd/even track inverter 441 arbitrarily inverts the tracking signal for every other track so that the head moves in the same direction relative to track center for every track in response to the tracking signal.

Servo compensation network 442 comprises lead and lag networks well known to those skilled in system technology to provide loop stability, noise reduction and resistance to steady-state forces on the actuator. These, as well as other specific circuits which perform the functions described in Figures 4-6, 8 and 9 are well known to those skilled in the art. Since such circuits form no part of the present invention, they are not detailed in this specification.

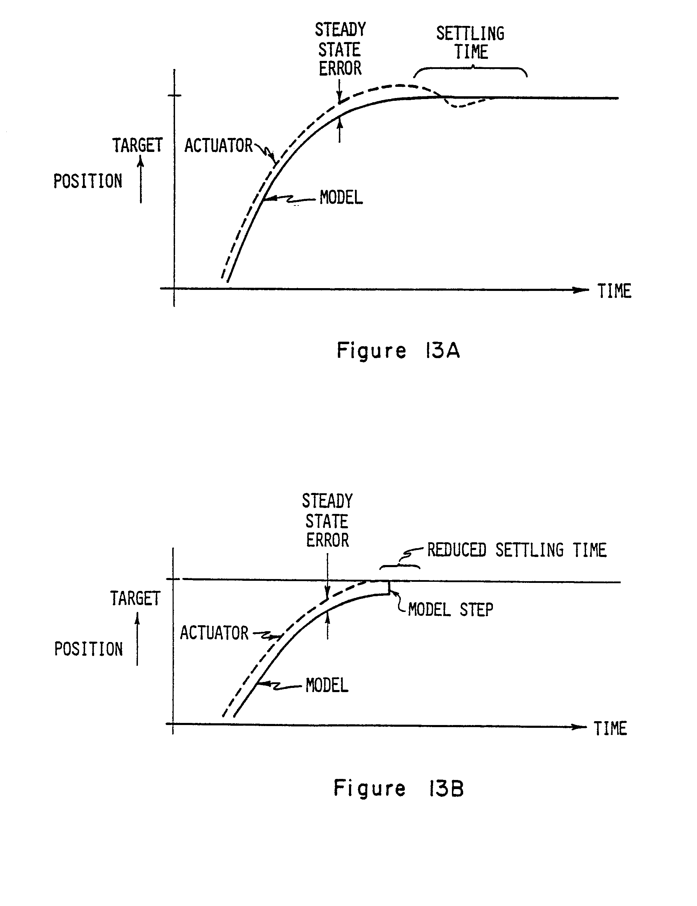

The track following and track locating servos of the present invention rely on a sampled servo signal rather than a continuous servo signal. For that reason the band-width and the servo loop gain are less than the bandwidth and the servo loop gain of a conventional track locating system. Thus, the track locating servo o the present invention inherently includes a steady-state error of several tracks, where conventional

Int. Re: Case 1205
Hewlett-Packard Company

systems have steady-state errors of only a fraction of a track. To compensate for this large error and reduce settling time of the actuator at the target track, microprocessor 40 actually computes a positive profile for several tracks short of the target track. The profile generated then "jumps" when the true target is finally approached as shown in Figure 13B. The steady-state error is controlled, primarily by compensation network 442.

This method of reducing settling time requires that short track locating seeks be considered as special cases -i.e., seeks shorter than the steady-state error. Thus,for short seeks in the present invention, the position profile is essentially set equal to the target tracks for the entire duration of the seek.

Single track seeks must be as fast as possible to facilitate repaid transfer of large segments of data.  Therefore, a one track seek is performed entirely "open loop" whereby the arm is accelerated, then decelerated, for the required amounts of time to step over one track. The track following servo is then initiated immediately.

A complete listing of the routines and subroutines of instructions, including all constants, employed by the head positioning system of the present invention is given below.

<u>Tabel of Contents</u>

Page

| 15 | Logical Seek Routine | Introduction |
| 16 | Logical Seek Routine | Definition of Constants |
| 17 | Logical Seek Routine | Current Track Determination |
| 18 | Logical Seek Routine | Target Track Bounds Check |
| 19 | Logical Seek Routine | Target Track Offsetting |
| 20 | Logical Seek Routine | Head / Sector Bounds Check |
| 21 | Logical Seek Routine | Physical Seek Invocation |
| 22 | Logical Seek Routine | Exit Code & Delay Routine |
| 23 | Logical Seek Routine | Drive Recovery Routine |
| 24 | Logical Seek Routine | External Links |

```
****************************** LSEEK04 ******************3/9/77.1050****   00002000
*                                                                     *   00003000
*                      LOGICAL SEEK ROUTINE                           *   00004000
*                                                                     *   00005000
*      THIS ROUTINE PERFORMS AN INTERFACE BETWEEN THE SEEK COMMAND    *   00006000
* PROCESSOR AND THE PHYSICAL SEEK ROUTINE.  IT ACCEPTS A LOGICAL      *   00007000
* TARGET TRACK ADDRESS, PERFORMS BOUNDS CHECKING, SETS UP THE NEW     *   00008000
* ICW VALUE, COMPUTES THE PHYSICAL TARGET ADDRESS, AND INVOKES THE    *   00009000
* PHYSICAL SEEK ROUTINE.  IT THEN SETS UP THE TERMINATION STATUS      *   00010000
* AND RETURNS.                                                        *   00011000
*                                                                     *   00012000
* AT ENTRY:  TARG CONTAINS THE TARGET TRACK NUMBER (LOGICAL)          *   00013000
*            CTRK HAS THE CURRENT TRACK # (PHYSICAL*4) IF ON TRACK     *   00014000
*            THSEC CONTAINS THE TARGET HEAD/SECTOR ADDRESS            *   00015000
* AT EXIT:   FINE SERVO CONTROL IS RESTORED                           *   00016000
*            REGISTER 2 CONTAINS SEEK TERMINATION STATUS             *   00017000
*                0 FOR SUCCESSFUL COMPLETION                          *   00018000
*                1 FOR BOUNDS VIOLATION (CYLINDER OR HEAD/SECTOR)      *   00019000
*                -1 FOR UNSUCCESSFUL SEEK ATTEMPT (SEEK FAILURE)      *   00020000
*            REGISTER 1 CONTAINS RESULT STATUS OF REGISTER 2          *   00021000
*            ALL OTHER REGISTERS ARE VOLATILE                         *   00022000
*            CICW IS UNCHANGED FOR A BOUNDS VIOLATION, OTHERWISE IT   *   00023000
*                HAS THE FINE SERVO ICW VALUE AT THE TARGET TRACK.    *   00024000
*            CTRK IS UNCHANGED FOR A BOUNDS VIOLATION, OTHERWISE IT   *   00025000
*                HAS THE VALUE OF THE PHYSICAL TARGET TRACK * 4.      *   00026000
*                                                                     *   00027000
*                                                                     *   00028000
************************************************************************   00029000


        F800      ORG    IS    $F800                                      00031000
```

```
            ************************************************************     00033000
            *                                                          *     00034000
            *       THE FOLLOWING VALUES ARE VARIABLES STORED IN THE RAM.  * 00035000
            *       THE FIRST VARIABLE (TARG) IS THE VALUE OF THE LOGICAL TARGET * 00036000
            *  TRACK NUMBER.  THIS VARIABLE IS SET UP BY THE SEEK COMMAND  *    00037000
            *  INTERPRETER BEFORE THIS ROUTINE IS CALLED (SEE ABOVE).  THE *    00038000
            *  SEEK ROUTINE DOES NOT CHANGE THIS VALUE.                    *    00039000
            *       THE SECOND VARIABLE (FCNT) IS A TIMEOUT INDEX THAT IS  *    00040000
            *  DECREMENTED EVERY SAMPLE TIME AND GOES TO ZERO IF THE SEEK  *    00041000
            *  DOES NOT COMPLETE WITHIN 200 MILLISECONDS (320 SAMPLE TIMES). *  00042000
            *  IF DECREMENTED TO ZERO, THE SEEK ABORTS AND RETURNS AN ERROR *   00043000
            *  STATUS.                                                     *    00044000
            *       THE THIRD VARIABLE (CTRK) CONTAINS THE PHYSICAL ADDRESS OF THE * 00045000
            *  CURRENT TRACK (TIMES 4).  THIS VALUE IS ASSUMED TO HAVE BEEN SET * 00046000
            *  BY THE PREVIOUS SEEK AND IS SET BY THIS ROUTINE FOR THE FOLLOWING * 00047000
            *  SEEK.  IF THE OFF TRACK FLAG IS SET THEN ALL BETS ARE OFF AND THE * 00048000
            *  CURRENT TRACK VALUE WILL BE OBTAINED BY TRACK SAMPLING.     *     00049000
            *       THE FOURTH VARIABLE (CICW) IS THE CURRENT VALUE OF THE ICW AND * 00050000
            *  IS UPDATED BY THIS ROUTINE TO REFLECT THE VALUE AT THE TARGET. *  00051000
            *       THE FIFTH VARIABLE (THSEC) IS THE HEAD AND SECTOR ADDRESS OF * 00052000
            *  THE SEEK TARGET.  THE HIGH BYTE SPECIFIES THE HEAD (SURFACE) AND * 00053000
            *  THE LOW BYTE SPECIFIES THE SECTOR.                          *     00054000
            *                                                             *     00055000
            ************************************************************     00056000


    0069    TARG   IS    :0069          * TARGET TRACK                         00058000
    006A    FCNT   IS    :006A          * SEEK TIMEOUT COUNT                   00059000
    0066    CTRK   IS    :0066          * CURRENT TRACK # SAVE LOCATION        00060000
    0064    CICW   IS    :0064          * CURRENT ICW VALUE                    00061000
    0060    THSEC  IS    :0060          * TARGET HEAD/SECTOR VALUE             00062000
```

LOGICAL SEEK ROUTINE     DEFINITION OF CONSTANTS

```
****************************************************************     00064000
*                                                             *     00065000
*        THE FOLLOWING VALUES ARE CONSTANTS USED BY THE SEEK ROUTINE.  *  00066000
*        OFSET IS THE TRACK OFFSET BETWEEN PHYSICAL TRACK NUMBERS AND   *  00067000
*    LOGICAL TRACK NUMBERS.   TMOUT IS THE MAXIMUM NUMBER OF SAMPLE     *  00068000
*    TIMES ALLOWED FOR ANY SINGLE SEEK.   MAXTR IS THE MAXIMUM LOGICAL  *  00069000
*    TARGET TRACK VALUE.   QUAD IS THE NUMBER OF TRACKS IN A QUADRANT.  *  00070000
*    MXSEC IS THE MAXIMUM SECTOR ADDRESS.                       *     00071000
*                                                             *     00072000
****************************************************************     00073000


     000F     OFSET IS·     15     * PHYSICAL TRACK OFFSET IS 15 TRACKS          00075000
     0140     TMOUT IS      320    * SEEKS TIME OUT IN 320 SAMPLE TIMES (200 MSEC)  00076000
     02EC     MAXTR IS      748    * THE MAXIMUM LOGICAL TRACK NUMBER IS 748     00077000
     00BB     QUAD  IS      187    * QUADRANTS ARE 187 TRACKS WIDE               00078000
     001F     MXSEC IS      31     * THE MAXIMUM SECTOR ADDRESS IS 31            00079000
```

```
                    PORG  ORG+!100                                      00081000
                    DORG  *                                            00082000


        ****************************************************************  00084000
        *                                                             *  00085000
        *       THE FOLLOWING CODE INITIALIZES THE SEEK TIMEOUT INDEX (FCNT)  *  00086000
        *    AND DETERMINES THE CURRENT TRACK.  THE FIRST INSTRUCTION TESTS  *  00087000
        *    THE NOT READY FLAG AND THE FOLLOWING INSTRUCTION CALLS THE DRIVE *  00088000
        *    RECOVERY ROUTINE IF THE NOT READY FLAG IS SET.  THIS ROUTINE WILL *  00089000
        *    BRING THE ARM TO THE OUTSIDE CRASH STOP AND CLEAR THE NOT READY   *  00090000
        *    FLAG (THE ROUTINE DOES NOT WAIT FOR THE DRIVE TO BECOME READY).  *  00091000
        *    THE FOLLOWING TWO INSTRUCTIONS SET FCNT TO THE SEEK TIMEOUT VALUE *  00092000
        *    (TMOUT).  THIS VALUE DETERMINES WHEN THE SEEK WILL TIMEOUT AND IS *  00093000
        *    RETAINED IN R3 FOR SUBSEQUENT USE.  THE NEXT INSTRUCTION LOADS R6 *  00094000
        *    WITH THE VALUE OF CTRK.  THE FOLLOWING TWO INSTRUCTIONS TEST THE  *  00095000
        *    OFF TRACK FLAG AND BRANCH TO LS02 IF ITS CLEAR WHICH INDICATES    *  00096000
        *    THAT CTRK (AND THUS R6) SHOULD CONTAIN THE CORRECT CURRENT TRACK  *  00097000
        *    VALUE (PHYSICAL*4).                                         *  00098000
        *       IF THE OFF TRACK FLAG IS SET THEN THE CURRENT TRACK VALUE IS   *  00099000
        *    OBTAINED BY READING A TRACK SAMPLE WHICH IS PERFORMED BY THE NEXT *  00100000
        *    INSTRUCTION.  THE FOLLOWING TWO INSTRUCTIONS SET R6 TO THIS VALUE *  00101000
        *    ROUNDED TO THE NEAREST TRACK+1/2.  THE CODE THEN DROPS TO THE     *  00102000
        *    FOLLOWING BLOCK OF CODE WHICH PERFORMS A REDUNDANT CALL TO THE    *  00103000
        *    TRACK SAMPLING ROUTINE TO CHECK FOR A POSSIBLE SAMPLING ERROR.    *  00104000
        *                                                             *  00105000
        ****************************************************************  00106000


   F900  2ADC   8  LSEEK BTST  R2 = XR4(13)       * TEST NOT READY FLAG         00108000
   F901  9543   9        CALL  RECOV IF <>        * CALL RECOVERY ROUTINE IF NOT READY  00109000
   F902  B803   6        LLIT  R3 = TMOUT         * R3 := TIMEOUT COUNT         00110000
   F903  0140
   F904  0003  12        STOR  FCNT = R3          * INITIALIZE TIMEOUT COUNT    00111000
   F905  0068
   F906  C006  12        LOAD  R6 = CTRK          * R6 := PHYSICAL CURRENT TRACK VALUE  00112000
   F907  006U
   F908  2FEC   8        BTST  R7 = XR4(14)       * TEST OFF TRACK FLAG         00113000
   F909  6217   6        GOTO  LS02  IF =         * BRANCH IF ON TRACK          00114000
   F90A  9F5F   9  LS01  CALL  IGAP,I             * READ TRACK ADDRESS          00115000
   F90B  1EE2   7        USET  R6 = R2(14)        * ROUND TO TRACK + 1/2        00116000
   F90C  0EF6   7        BCLR  R6(15)                                          00117000
```

```
*********************************************************************   00119000
*                                                                 *   00120000
*        AT ENTRY INTO THE FOLLOWING CODE R6 CONTAINS A CURRENT TRACK  *   00121000
*    VALUE THAT HAS BEEN OBTAINED FROM A TRACK SAMPLING.  THIS CODE    *   00122000
*    CHECKS THE TRACK VALUE FOR A POSSIBLE SAMPLING ERROR.  THE FIRST  *   00123000
*    INSTRUCTION PERFORMS A REDUNDANT TRACK SAMPLING.  THE FOLLOWING   *   00124000
*    INSTRUCTION SETS R2 WITH DIFFERENCE BETWEEN THIS SAMPLE AND R6.   *   00125000
*    THE FOLLOWING TWO INSTRUCTIONS YIELD THE ABSOLUTE VALUE OF THIS   *   00126000
*    DIFFERENCE.  THE NEXT TWO INSTRUCTIONS TEST THIS VALUE AND BRANCH *   00127000
*    TO LS02 IF IT IS LESS THAN FOUR (1 TRACK).  OTHERWISE THE NEXT    *   00128000
*    TWO INSTRUCTIONS TEST THE TIMEOUT INDEX AND BRANCH BACK TO LS01   *   00129000
*    IF ITS GREATER THAN TWO.  IF THE TIMEOUT INDEX IS TWO OR LESS, A  *   00130000
*    TIMEOUT ERROR IS ASSUMED AND THE FOLLOWING TWO INSTRUCTIONS SET   *   00131000
*    R2 TO ZERO (INDICATING A SEEK FAILURE) AND BRANCH TO LS04.        *   00132000
*                                                                 *   00133000
*********************************************************************   00134000
```

19

```
      F90D   9F5F   9      CALL   IGAP,I            * TEST WITH REDUNDANT TRACK SAMPLING   00136000
      F90E   7A26   7             R2 = R6-R2                                               00137000
      F90F   8311   6      GOTO   *+2    IF >=                                            00138000
      F910   8332   6             R2 = -R2                                                00139000
      F911   6A04   6             R2 = R2-4                                               00140000
      F912   8617   6      GOTO   LS02   IF <=      * BRANCH IF <= 1 TRACK DIFFERENCE      00141000
      F913   6B02   6             R3 = R3-2         * TEST TIMEOUT                         00142000
      F914   810A   6      GOTO   LS01   IF >       * LOOP IF TIME OK                      00143000
      F915   E200   6             R2 = 0            * R2 INDICATES SEEK FAILURE            00144000
      F916   873C   6      GOTO   LS04              * BRANCH TO ERROR CODE                 00145000
```

LOGICAL SEEK ROUTINE    TARGET TRACK BOUNDS CHECK

```
*********************************************************************    00147000
*                                                                   *    00148000
*       THE FOLLOWING CODE TESTS FOR A TRACK BOUNDS VIOLATIONS ON THE  *  00149000
*   TARGET TRACK TRACK AND COMPUTES THE QUADRANT BITS FOR THE ICW.   *    00150000
*   THE FIRST INSTRUCTION SETS R2 TO TWO WHICH INDICATES A BOUNDS    *    00151000
*   VIOLATION.  THE FOLLOWING SIX INSTRUCTIONS SET R7 TO THE LOGICAL *    00152000
*   TARGET TRACK VALUE AND BRANCH TO LS05 IF IT IS LESS THAN ZERO OR *    00153000
*   GREATER THAN MAXTR (MAXIMUM TRACK VALUE).  THESE SIX INSTRUCTIONS *   00154000
*   DROP THROUGH WITH R4 CONTAINING THE NEGATIVE VALUE TARGET-MAXTR. *    00155000
*   THE NEXT INSTRUCTION LOADS R3 WITH THE ICW VALUE FOR NOP, RUN,   *    00156000
*   AND FINE SERVO.  THE NEXT FOUR INSTRUCTIONS SIT IN A LOOP THAT   *    00157000
*   INCREMENTS R4 BY THE QUADRANT WIDTH (SEE DESCRIPTION OF QUAD)    *    00158000
*   UNTIL IT REACHES ZERO, EACH TIME INCREMENTING THE QUADRANT FIELD *    00159000
*   (BITS 12&13) OF THE ICW MASK (R3).  THE CODE EXITS TO LS03 WITH  *    00160000
*   R3 CONTAINING THE PROPER QUADRANT BITS FOR THE TARGET TRACK.     *    00161000
*                                                                   *    00162000
*********************************************************************    00163000

    F917  E202  6   LS02        R2 = 2          * R2 INDICATES BOUNDS VIOLATION      00165000
    F918  C007 12         LOAD  R7 = TARG       * R7 := LOGICAL TARGET TRACK VALUE   00166000
    F919  0069
    F91A  6700  6               R7 = R7+0       * TEST LOGICAL TRACK VALUE           00167000
    F91B  843E  6         GOTO  LS05  IF <      * EXIT IF NEGATIVE                   00168000
    F91C  8H04  6         LLIT  R4 = MAXTR      * R4 := MAXIMUM TRACK VALUE          00169000
    F91D  02EC
    F91E  7C27  7               R4 = R7-R4      * R4 := TARGET - MAXIMUM             00170000
    F91F  813E  6         GOTO  LS05  IF >      * EXIT IF TARGET > MAXIMUM           00171000
    F920  8H03  6         LLIT  R3 = !AF9E      * R3 := ICW MASK (FINE SERVO)        00172000
    F921  AF9E
    F922  64HH  6               R4 = R4+QUAD    * TEST TARGET QUADRANT               00173000
    F923  8326  6         GOTO  LS03  IF >=     * BRANCH IF QUADRANT BITS RIGHT      00174000
    F924  6H04  6               R3 = R3-4       * DECREMENT QUADRANT FIELD           00175000
    F925  8722  6         GOTO  *-3             * LOOP UNTIL QUADRANT BITS OK        00176000
```

LOGICAL SEEK ROUTINE     TARGET TRACK OFFSETTING

```
****************************************************************************   00178000
*                                                                         *   00179000
*          AT #1                                                          *   00180000
*      R0  := LSEEK RETURN ADDRESS                                        *   00181000
*      R2  := 2 (BOUNDS VIOLATION INDICATOR)                              *   00182000
*      R3  := ICW MASK                                                    *   00183000
*      R4  := SCRATCH                                                     *   00184000
*      R5  := SCRATCH                                                     *   00185000
*      R6  := CURRENT TRACK VALUE (PHYSICAL*4)                            *   00186000
*      R7  := TARGET TRACK VALUE (LOGICAL)                                *   00187000
*                                                                         *   00188000
****************************************************************************   00189000


****************************************************************************   00191000
*                                                                         *   00192000
*        THE FOLLOWING CODE COMPUTES THE PHYSICAL TARGET TRACK VALUE       *   00193000
*   AND SETS UP THE EVEN/ODD BIT OF THE ICW MASK (R3).  THE FIRST          *   00194000
*   INSTRUCTION ADDS THE LOGICAL TRACK OFFSET TO R7 LEAVING IT WITH        *   00195000
*   THE PHYSICAL TARGET TRACK NUMBER.  THE NEXT INSTRUCTION SHIFTS         *   00196000
*   THIS VALUE LEFT ONE PLACE (MULTIPLIES BY 2).  THE FOLLOWING TWO        *   00197000
*   INSTRUCTIONS EXTRACT THE LSB OF THE INTEGER PART OF R7 (BIT 14)        *   00198000
*   AND USE IT TO SET THE EVEN/ODD BIT OF THE ICW MASK (R3(14)).          *   00199000
*   (1 FOR EVEN, 0 FOR ODD).  THE NEXT INSTRUCTION AGAIN SHIFTS R7 TO  *   00200000
*   THE LEFT ONE PLACE LEAVING IT WITH FOUR TIMES THE PHYSICAL TARGET  *   00201000
*   TRACK NUMBER.                                                      *   00202000
*                                                                         *   00203000
****************************************************************************   00204000


F926  670F  6  LS03          R7 = R7+OFSET      * R7 := PHYSICAL TRACK # OF TARGET   00206000
F927  0737  6         LSL    R7,F               * R7 := 2*TARGET TRACK               00207000
F928  2CE7  7         BTSI   R4 = R7(14)        * R4(14) := TARGET LSB               00208000
F929  3324  7                R3 = R3 XOR R4     * SET EVEN/ODD BIT IN ICW MASK       00209000
F92A  0707  6         LSL    R7                 * R7 := TARGET*4                     00210000
```

```
************************************************************************  00212000
*                                                                    *   00213000
*      THE FOLLOWING CODE PERFORMS A BOUNDS CHECK OF THE HEAD/SECTOR  *   00214000
* ADDRESS AND SETS UP THE SURFACE BIT OF THE ICW MASK (R3).  THE      *   00215000
* FIRST INSTRUCTION LOADS R4 WITH THE TARGET HEAD/SECTOR ADDRESS.     *   00216000
* THE FOLLOWING THREE INSTRUCTIONS TEST THE HEAD ADDRESS BIT AND      *   00217000
* SET THE SURFACE BIT IN THE ICW MASK (R3(10)) IF SURFACE 1 IS THE    *   00218000
* ADDRESSED SURFACE, OTHERWISE LEAVING THE BIT CLEAR.                 *   00219000
*      THE FOLLOWING INSTRUCTION CLEARS THE SURFACE BIT FROM R4 WHICH *   00220000
* SHOULD RESULT IN R4 CONTAINING JUST THE SECTOR ADDRESS.  THE NEXT   *   00221000
* THREE INSTRUCTIONS WILL BRANCH TO LS05 IF THESE REMAINING BITS      *   00222000
* ARE NEGATIVE OR GREATER THAN MXSEC WHICH WOULD INDICATE A BOUNDS    *   00223000
* VIOLATION.                                                          *   00224000
*                                                                    *   00225000
************************************************************************  00226000


   F92B  C004 12      LOAD  R4 = THSEC         * R4 := TARGET HEAD/SECTOR VALUE    00228000
   F92C  0060
   F92D  2D74  7      BTST  R5 = R4(7)         * TEST SURFACE BIT                  00229000
   F92E  8230  6      GOTO  *+2    IF =        * SKIP IF SURFACE 0                 00230000
   F92F  18A3  7      BSET  R3(10)             * SET ICW MASK TO SURFACE 1         00231000
   F930  0C74  7      BCLR  R4(7)              * CLEAR SURFACE BIT                 00232000
   F931  843E  6      GOTO  LS05   IF <        * EXIT IF HEAD/SECTOR BOUNDS ERROR  00233000
   F932  6C1F  6            R4 = R4-MXSEC      * TEST HEAD/SECTOR VALUE            00234000
   F933  813E  6      GOTO  LS05   IF >        * EXIT IF HEAD/SECTOR BOUNDS ERROR  00235000
```

```
************************************************************************  00237000
*                                                                     *  00238000
*        AT *:                                                        *  00239000
*    R0 := LSEEK RETURN ADDRESS                                       *  00240000
*    R2 := SCRATCH                                                    *  00241000
*    R3 := FINE SERVO ICW VALUE FOR TARGET                           *  00242000
*    R4 := SCRATCH                                                    *  00243000
*    R5 := SCRATCH                                                    *  00244000
*    R6 := CURRENT TRACK VALUE (PHYSICAL*4)                          *  00245000
*    R7 := TARGET TRACK VALUE (PHYSICAL*4)                           *  00246000
*                                                                     *  00247000
************************************************************************  00248000


************************************************************************  00250000
*                                                                     *  00251000
*       THE FOLLOWING CODE SETS UP AND INVOKES PSEEK (PHYSICAL SEEK   *  00252000
* ROUTINE).  THE FIRST INSTRUCTION SETS R2 TO THE SEEK ICW VALUE.    *  00253000
* THE FOLLOWING INSTRUCTION STORES THE TARGET'S ICW VALUE INTO CICW  *  00254000
* (CURRENT ICW LOCATION).  THE NEXT INSTRUCTION STORES THE PHYSICAL  *  00255000
* TARGET TRACK VALUE (R7) INTO CTRK (CURRENT TRACK LOCATION).  THE   *  00256000
* FOLLOWING INSTRUCTION INVOKES THE PHYSICAL SEEK ROUTINE (PSEEK).   *  00257000
*       FOLLOWING THE RETURN FROM THE PHYSICAL SEEK ROUTINE, THE NEXT *  00258000
* INSTRUCTION TESTS THE COMPLETION STATUS.  THE NEXT INSTRUCTION     *  00259000
* WILL BRANCH TO LSUS FOR A SUCCESSFUL SEEK COMPLETION; OTHERWISE,   *  00260000
* THE FOLLOWING INSTRUCTION WILL TEST THE NOT READY FLAG, AND THE    *  00261000
* NEXT INSTRUCTION WILL CALL THE DRIVE RECOVERY ROUTINE IF THE FLAG  *  00262000
* INDICATES THAT THE DRIVE IS READY.  THIS WILL LEAVE THE ARM AT     *  00263000
* THE OUTSIDE CRASH STOP.  NOTE THAT IF THE DRIVE IS NOT READY, THE  *  00264000
* RECOVERY ROUTINE IS NOT CALLED AND THE ARM IS LEFT LATCHED UP.     *  00265000
*                                                                     *  00266000
************************************************************************  00267000
```

```
269   F934  3A93  7          BCPL  R2 = R3(9)        * R2 := SEEK ICW VALUE                    00269000
270   F935  0003  12         STOR  CICW = R3         * CICW := FINE SERVO ICW FOR TARGET       00270000
      F936  0064
271   F937  0007  12         STOR  CTRK = R7         * CTRK := PHYSICAL TARGET TRACK VALUE*4   00271000
      F938  0066   .
272   F939  9F52  9          CALL  ISEEK,I           * CALL SEEK ROUTINE                       00272000
273   F93A  6200  6                R2 = R2+0         * TEST COMPLETION STATUS                  00273000
274   F93B  813E  6          GOTO  LS05  IF >        * BRANCH IF SEEK SUCCESSFUL               00274000
275   F93C  2DDC  8    LS04  BTST  R5 = XR4(13)      * TEST NOT READY FLAG                     00275000
276   F93D  9243  9          CALL  RECOV IF =        * CALL DRIVE RECOVERY IF DRIVE READY      00276000
```

```
* )************************************************************   00278000
*                                                          *   00279000
*       AT LS05, R2 CONTAINS A 2 IF A BOUNDS VIOLATION WAS DETECTED IN *   00280000
*    THE ABOVE CODE, R2 CONTAINS A 1 FOR A SUCCESSFUL SEEK COMPLETION, *   00281000
*    AND R2 CONTAINS A 0 IF A SEEK FAILURE OCCURED.  THE INSTRUCTION   *   00282000
*    THEN DECREMENTS R2 THUS SETTING R2 AND R1 TO THE APPROPRIATE EXIT *   00283000
*    VALUES.  THE NEXT INSTRUCTION RETURNS TO THE CALLING PROGRAM.     *   00284000
*                                                          *   00285000
************************************************************   00286000


F93E  6A01  6  LS05          R2 = R2-1           * SET TERMINATION STATUS   00288000
F93F  8100 10        RTRN                        * RETURN                    00289000


************************************************************   00291000
*                                                          *   00292000
*       THE FOLLOWING ROUTINE PERFORMS A DELAY BY DECREMENTING THE  *   00293000
*    DELAY INDEX (R2) UNTIL IT REACHES ZERO.  THE DELAY OBTAINED IS  *   00294000
*    4.5125+2.85*(R2) MICROSECONDS FOR (R2)>0.  THE DELAY IS ABOUT   *   00295000
*    .187 SECONDS FOR (R2)=0.                               *   00296000
*                                                          *   00297000
************************************************************   00298000


F940  6A01  6  SDLAY         R2 = R2-1           * DECREMENT DELAY INDEX     00300000
F941  8540  6        GOTO    *-1   IF <>         * LOOP UNTIL INDEX=0        00301000
F942  8100 10        RTRN                        * RETURN                    00302000
```

```
*****************************************************************************       00304000
*                                                                         *       00305000
*         THE FOLLOWING ROUTINE IS CALLED IN ORDER TO BRING THE ARM OUT    *       00306000
*    OF THE LANDING ZONE AND CLEAR THE NOT READY FLAG.  THE FIRST TWO      *       00307000
*    INSTRUCTIONS SET R3 TO AN ICW VALUE WITH THE RUN BIT DISSASSERTED     *       00308000
*    AND R2 TO THE SAME ICW VALUE WITH THE RUN BIT ASSERTED.  USING        *       00309000
*    THESE TWO VALUES, THE NEXT INSTRUCTION DISSASSERTS THE RUN SIGNAL     *       00310000
*    AND THE FOLLOWING INSTRUCTION IMMEDIATELY REASSERTS RUN.  THIS        *       00311000
*    HAS THE EFFECT OF RELEASING THE ARM FROM THE LATCH.  THE NEXT         *       00312000
*    INSTRUCTION SETS THE SCW TO APPLY A SLIGHT OUTWARD FORCE TO THE       *       00313000
*    ARM IN ORDER TO MOVE IT TO THE OUTSIDE CRASHSTOP.  THE FOLLOWING      *       00314000
*    INSTRUCTION CLEARS THE NOT READY FLAG AND THE NEXT INSTRUCTION        *       00315000
*    SETS THE CURRENT ICW MEMORY VALUE TO THE VALUE IN R2.  THE NEXT       *       00316000
*    FIVE INSTRUCTIONS LOOP FOR ABOUT 1.5 SECONDS TO ALLOW THE ARM TO      *       00317000
*    REACH THE OUTSIDE CRASHSTOP FOLLOWING WHICH THE ROUTINE RETURNS.      *       00318000
*    THE ROUTINE EXITS WITH R2=R3=0 WHICH IS USED BY SOME CALLS.           *       00319000
*                                                                         *       00320000
*****************************************************************************       00321000

 F943  BB03   6  RECOV  LLIT   R3 = !HFD2             * R3 := ICW VALUE (RUN DISSASSERTED)    00323000
 F944  BFD2
 F945  5B23   8               XR0 = R3               * DISSASSERT THE RUN SIGNAL             00324000
 F946  3A33   7         BCPL  R2 = R3(3)             * R2 := ICW VALUE (RUN ASSERTED)        00325000
 F947  5B22   8               XR0 = R2               * REASSERT RUN (RELEASE LATCH)          00326000
 F948  E921   7               AR1 = !21              * SET SCW TO APPLY OUTWARD FORCE        00327000
 F949  EA05   7               XR2 = 5                * CLEAR NOT READY FLAG                  00328000
 F94A  0002  12         STOR  CICW = R2              * SET CURRENT ICW LOCATION              00329000
 F94B  0064
 F94C  E200   6               R2 = 0                 * CLEAR R2 (DELAY INDEX)                00330000
 F94D  E308   6               R3 = 8                 * SET R3 := 8 (LOOP INDEX)              00331000
 F94E  9740   9         CALL  SDLAY                  * DELAY (APPROX. 0.187 SECONDS)         00332000
 F94F  6B01   6               R3 = R3-1              * DECREMENT LOOP INDEX                  00333000
 F950  814E   6         GOTO  *-2   IF >             * LOOP ON DELAY (END WITH R2=R3=0)      00334000
 F951  6100  10         RTRN                         * RETURN                               00335000
```

26

```
                    *******************************************************************  00337000
                    *                                                               *  00338000
                    *       THE FOLLOWING CODE PROVIDES THE LINKS TO THE EXTERNAL ROUTINES *  00339000
                    * REFERENCED IN THIS PROGRAM.  ISEEK IS A LOINK TO THE PHYSICAL   *  00340000
                    * SEEK ROUTINE.  IGAP IS A LINK TO SGAP (TRACK SAMPLING ROUTINE). *  00341000
                    * THE IGAP LINK IS ONLY REFERENCED BY THIS CODE SINCE EVEN THOUGH *  00342000
                    * IT RESIDES ON THIS MEMORY PAGE, IT IS ACTUALLY DEFINED IN THE   *  00343000
                    * PHYSICAL SEEK PROGRAM.                                          *  00344000
                    *                                                               *  00345000
                    *******************************************************************  00346000


      F952  F800    ISEEK DATA   PSEEK           * LINK TO PHYSICAL SEEK ROUTINE      00348000
            F95F    IGAP  IS     ORG+!15F        * LINK TO SGAP                       00349000
            F800    PSEEK IS     ORG             * ADDRESS OF PHYSICAL SEEK ROUTINE   00350000


                    *******************************************************************  00352000
                    *                                                               *  00353000
                    *            END OF LOGICAL SEEK ROUTINE                         *  00354000
                    *                                                               *  00355000
                    *******************************************************************  00356000


                          END                                                          00358000
```

CROSS REFERENCE TABLE

| | | | | | | | |
|------|-------|----------|-----|-----|-----|-----|-----|
| CICW | 100   | LIT [61] | 329 | 270 | | | |
| CTRK | 102   | LIT [60] | 271 | 112 | | | |
| FCNT | 104   | LIT [59] | 111 | | | | |
| IGAP | -1097 | LIT [349]| 136 | 115 | | | |
| ISEEK| F952  | ROM [348]| 272 | | | | |
| LS01 | F90A  | ROM [115]| 143 | | | | |
| LS02 | F917  | ROM [165]| 141 | 114 | | | |
| LS03 | F926  | ROM [206]| 174 | | | | |
| LS04 | F93C  | ROM [275]| 145 | | | | |
| LS05 | F93E  | ROM [288]| 274 | 235 | 233 | 171 | 168 |
| LSEEK| F900  | ROM [108]| | | | | |
| MAXTR| 148   | LIT [77] | 169 | | | | |
| MXSEC| 31    | LIT [79] | 234 | | | | |
| OFSET| 15    | LIT [75] | 206 | | | | |
| ORG  | -2048 | LIT [31] | 350 | 349 | 81 | | |
| PSEEK| -2048 | LIT [350]| 346 | | | | |
| QUAD | 187   | LIT [78] | 173 | | | | |
| RECOV| F943  | ROM [323]| 276 | 109 | | | |
| SDLAY| F940  | ROM [300]| 332 | | | | |
| TARG | 105   | LIT [58] | 166 | | | | |
| THSEC| 96    | LIT [62] | 228 | | | | |
| TMOUT| 320   | LIT [76] | 110 | | | | |

NUMBER OF PASS 2 ERRORS=0
NUMBER OF PASS 2 WARNINGS=0

- 29 -

0000946

## Tabel of Contents

| Page(s) | | |
|---|---|---|
| 30 | Seek Routine | Introduction |
| 31, 32, 33, 34 | Seek Routine | Definition of Constants |
| 35, 36, 37, 38 | Seek Routine | Initial Setup |
| 39, 40, 41, 42 43, 44, 45, 46 47 | Seek Routine | Switchpoint Initialization Code |
| 48, 49 | Seek Routine | Accelerate Up Phase |
| 50, 51, 52, 53 54, 55, 56, 57, | Seek Routine | Servo Loop |
| 58, 59 | Seek Routine | One Track Seek (Special Case) |
| 60 | Seek Routine | Model Termination Phase |
| 61, 62 63, 64 65, 66, 67 | Seek Routine | Seek Termination Tests |
| 68, 69 | Seek Routine | Special Multiplication Routine (Z) |
| 70 | Seek Routine | Delay Routine |
| 71, 72 | Seek Routine | Sector Gap Routine |
| 73, 74 | Seek Routine | Seek Failure Code |
| 75 | Seek Routine | Seek Exit Code |
| 76 | Seek Analysis Patches | |
| 77 | Seek Routine | Link to SGAP Routine |
| 78, 79 | Seek Routine | Model Computation Routine |
| 80 | Seek Routine | End of Routine |

```
**********************************  SEEK16  *******************3/9/77.1000****   00002000
*                                                                         *     00003000
*                        SEEK ROUTINE                                      *     00004000
*                                                                         *     00005000
*       THIS ROUTINE EXECUTES THE FIRMWARE OPERATIONS NECESSARY            *     00006000
*    TO PERFORM A SEEK OPERATION FROM THE CURRENT TRACK TO THE             *     00007000
*    TARGET TRACK.                                                         *     00008000
*                                                                         *     00009000
*    AT ENTRY:   CTRK CONTAINS TARGET TRACK VALUE (PHYSICAL*4)             *     00010000
*                CICW CONTAINS TARGET ICW VALUE (FOR FINE SERVO)           *     00011000
*                FCNT CONTAINS TIMEOUT INDEX (REMAINING SAMPLE TIMES)      *     00012000
*                R2 CONTAINS SEEK ICW VALUE                                *     00013000
*                R3 CONTAINS FINE SERVO ICW VALUE (SAME AS CICW)           *     00014000
*                R6 CONTAINS CURRENT TRACK VALUE (PHYSICAL*4)              *     00015000
*                R7 CONTAINS TARGET TRACK VALUE (PHYSICAL*4)               *     00016000
*    AT EXIT:    R2 = 1 FOR SUCCESSFUL SEEK COMPLETION                     *     00017000
*                R2 = 0 FOR SEEK FAILURE (TIMEOUT)                         *     00018000
*                ALL OTHER REGISTERS ARE VOLATILE                          *     00019000
*                                                                         *     00020000
*                        ***** NOTE *****                                  *     00021000
*       IF THE SEEK ROUTINE IS UNABLE TO COMPLETE THE SEEK (IF IT          *     00022000
*    EXCEEDS A GROSS TIMEOUT), IT WILL ATTEMPT TO LATCH UP THE HEAD        *     00023000
*    IN THE LANDING ZONE AND RETURN AN ERROR STATUS (REGISTER 2 = 0).     *     00024000
*                                                                         *     00025000
****************************************************************************     00026000


          F800    ORG     .F800                                              00028000
```

```
****************************************************************************  00030000
*                                                                        *  00031000
*       THE FOLLOWING VALUES ARE VARIABLES STORED IN THE RAM.            *  00032000
*       THE FIRST VALUE (M) IS THE MODEL POSITION WHICH IS COMPUTED      *  00033000
*  IN THE SERVO LOOP TO DETERMINE SERVO ERROR.  (EIGHTHS OF A TRACK)     *  00034000
*       THE NEXT TWO VALUES (ETA2 AND ETASQ) ARE FUNCTIONS OF THE        *  00035000
*  ESTIMATED TIME TO ARRIVAL AT THE TARGET TRACK (ETA).  THESE TWO       *  00036000
*  VALUES ARE INITIALIZED IN THE SINIT ROUTINE AND USED TO COMPUTE       *  00037000
*  THE MODEL POSITION (M).  ETA2 IS EQUAL TO ETA TIMES 2 AND ETASQ       *  00038000
*  IS EQUAL TO ETA SQUARED.  (TIME IS IN SAMPLE TIMES WHICH EQUAL        *  00039000
*  THE TIME BETWEEN SUCCESSIVE SAMPLES, 625 MICROSECONDS)                *  00040000
*       THE FOURTH VARIABLE (FCNT) IS A TIMEOUT INDEX THAT IS            *  00041000
*  DECREMENTED EVERY SAMPLE TIME AND GOES TO ZERO IF THE SEEK           *  00042000
*  DOES NOT COMPLETE WITHIN 200 MILLISECONDS (320 SAMPLE TIMES).         *  00043000
*  IF DECREMENTED TO ZERO, THE SEEK ABORTS AND RETURNS AN ERROR         *  00044000
*  STATUS (SEE NOTE ABOVE).                                              *  00045000
*       THE FIFTH VARIABLE (PTARG) IS THE ADJUSTED TARGET VALUE.  THIS *  00046000
*  IS A COMPUTED VALUE THE MODEL MUST CONVERGE TO IN ORDER TO HAVE       *  00047000
*  THE ACTUAL HEAD POSITION COME INTO THE ACTUAL TARGET TRACK.  (SEE *  00048000
*  THE EXPLANATION GIVEN IN SINIT).                                      *  00049000
*       THE SIXTH VARIABLE (CTRK) IS THE PHYSICAL TARGET TRACK VALUE     *  00050000
*  AND IS SET PRIOR TO ENTRY INTO THIS ROUTINE.  THE SEEK ROUTINE        *  00051000
*  DOES NOT CHANGE THIS VALUE.                                           *  00052000
*       THE SEVENTH VARIABLE (CICW) IS THE CURRENT ICW VALUE.  IT IS     *  00053000
*  SET UP BY THE CALLING PROGRAM, AND DURING THE SEEK IT CONTAINS        *  00054000
*  THE VALUE OF THE ICW FOR FINE SERVOING AT THE TARGET TRACK.           *  00055000
*                                                                        *  00056000
```

```
* THE FINAL VARIABLE (SSLIM) IS THE SEEK SERVO LIMITS CODE
* WORD.  IF ANY OF THE LOWER 15 BITS OF THE WORD IS A ONE THEN,   * 00057000
* DURING THE SERVO PORTION OF THE SEEK, THE CURRENT COMMAND IS    * 00058000
* ALLOWED TO VARY OVER THE ENTIRE RANGE (-1 AMP TO +1 AMP); THIS  * 00059000
* IS ALLOWED ONLY WHEN THE SEEK MODEL HAS REACHED THE TARGET      * 00060000
* TRACK.  PRIOR TO THIS, THE CURRENT IS ALLOWED TO VARY OVER      * 00061000
* ONLY HALF OF THE ENTIRE RANGE.  IF BIT(0)=0 AND BITS(1-15)=0    * 00062000
* (SSLIM=0) THEN THE CURRENT IS ALLOWED TO VARY WITHIN THE RANGE  * 00063000
* -1 AMP TO 0 AMPS.  IF BIT(0)=1 AND BITS(1-15)=0 (SSLIM=!8000)   * 00064000
* THEN THE CURRENT IS ALLOWED TO VARY WITHIN THE RANGE 0 AMPS TO  * 00065000
* +1 AMP.  THIS VALUE IS KEPT IN R0 RATHER THAN A MEMORY LOCATION,* 00066000
* BUT ITS USE IS COMPLICATED ENOUGH TO REQUIRE SOME EXPANATION AT * 00067000
* THIS POINT.                                                     * 00068000
*                                                                 * 00069000
******************************************************************* 00070000

     006C    M     IS   !006C        * MODEL POSITION                        00072000
     006B    ETA2  IS   !006B        * ESTIMATED TIME TO ARRIVAL TIMES 2     00073000
     006A    ETASQ IS   !006A        * ESTIMATED TIME TO ARRIVAL SQUARED     00074000
     0068    FCNT  IS   !0068        * SEEK TIMEOUT COUNT                    00075000
     0067    PTARG IS   !0067        * ADJUSTED TARGET VALUE                 00076000
     0066    CTRK  IS   !0066        * TARGET TRACK (PHYSICAL*4)             00077000
     0064    CICW  IS   !0064        * TARGET FINE SERVO ICW VALUE           00078000
     0002    SSLIM IS   R0           * MINIMUM/MAXIMUM SCW SERVO VALUES      00079000
```

```
************************************************************************   00081000
*                                                                     *   00082000
*     THE FOLLOWING VALUES ARE CONSTANTS USED BY THE SEEK ROUTINE.    *   00083000
*  THE FIRST FOUR CONSTANTS ARE VALUES USED TO SET UP THE SCW.        *   00084000
*     MAXV IS EQUAL TO THE MAXIMUM VELOCITY THAT THE ARM CAN REACH     *   00085000
*  DURING A SEEK.  THE VALUE IS GIVEN IN QUARTER TRACKS.  SCWMX IS     *   00086000
*  THE MAXIMUM VALUE THAT THE SCW CAN BE SET TO (MAGNITUDE ONLY).     *   00087000
*  FVAL IS THE ICW VALUE THAT IS SET FOR A SEEK FAILURE.              *   00088000
*     TCNT1 AND TERR1 ARE TWO TERMINATION PARAMETERS THAT DETERMINE   *   00089000
*  WHEN THE SEEK TURNS CONTROL OVER TO FINE SERVO.  THIS OCCURS       *   00090000
*  WHEN THE MODEL HAS ARRIVED ON TARGET AND THE SEEK SERVO HAS HELD   *   00091000
*  THE HEAD ON TRACK WITH A MAXIMUM ERROR OF TERR1 FOR TCNT1 SAMPLE   *   00092000
*  TIMES.  LIKEWISE, TCNT2 AND TERR2 ARE TWO TERMINATION PARAMETERS   *   00093000
*  THAT DETERMINE WHEN THE SEEK ROUTINE EXITS.  THIS OCCURS WHEN THE  *   00094000
*  FINE SERVO HAS HELD THE HEAD ON TRACK WITH A MAXIMUM ERROR OF      *   00095000
*  TERR2 DURING WHICH TIME TCNT2 SEQUENTIAL SAMPLES ARE READ WITHOUT *   00096000
*  AN OFF TRACK CONDITION OCCURING.                                   *   00097000
*     DLY1 AND DLY2 ARE TWO DELAY INDEXES THAT COME INTO PLAY DURING *   00098000
*  A ONE TRACK SEEK.  FOR A ONE TRACK SEEK, THE HEAD IS ACCELERATED   *   00099000
*  TOWARDS THE TARGET TRACK FOR A TIME DETERMINED BY DLY1 AND IS      *   00100000
*  THEN DEACCELERATED FOR A TIME DETERMINED BY DLY2 AFTER WHICH THE   *   00101000
*  CODE DROPS INTO THE SERVO LOOP.                                    *   00102000
*                                                                     *   00103000
************************************************************************   00104000
```

```
106    U01F    SCW31 IS    31     * ACCELERATE UP VALUE FOR INWARD SEEKS           00106000
107    003F    SCW63 IS    63     * ACCELERATE UP VALUE FOR OUTWARD SEEKS          00107000
108    0000    SCW0  IS    0      * NO ACCELERATION VALUE                          00108000
109    0010    SCW16 IS    16     * HALF ACCELERATION VALUE TOWARDS LANDING ZONE   00109000

111    003C    MAXV  IS    60     * MAXIMUM VELOCITY EQUALS 15 TRACKS/SAMPLE TIME  00111000
112    AFFE    FVAL  IS    !AFFE  * SEEK FAILURE ICW VALUE                         00112000
113    U01F    SCWMX IS    31     * SCW MAXIMUM MAGNITUDE != 31   (5 BITS)          00113000
114    0003    TCNT1 IS    3      * SERVO TERMINATION COUNT != 3                    00114000
115    U002    TERR1 IS    2      * SERVO TERMINATION ERROR != 2 EIGHTHS OF A TRACK 00115000
116    0008    TCNT2 IS    8      * FINE SERVO TERMINATION COUNT != 8               00116000
117    0004    TERR2 IS    4      * FINE SERVO TERM. ERROR != 4 EIGHTHS OF A TRACK  00117000
118    0198    DLY1  IS    !0198  * TRACK-TO-TRACK DELAY INDEX 1 != 408 (1.16 MSEC) 00118000
119    022C    DLY2  IS    !022C  * TRACK-TO-TRACK DELAY INDEX 2 != 556 (1.58 MSEC) 00119000
```

```
                PURG   ORG                                        00121000
                DORG   *                                          00122000


****************************************************************  00124000
*                                                             *   00125000
*       THE SEEK ROUTINE BEGINS BY PUSHING THE RETURN ADDRESS ONTO  *   00126000
*    THE STACK.  THIS FREES R0 FOR COMPUTATIONAL USE.  THE FOLLOWING  *   00127000
*    TWO INSTRUCTIONS PLACE THE TERMINATION COUNT IN THE STACK.  THE  *   00128000
*    TERMINATION COUNT IS AN INDEX VALUE THAT DECREMENTS TO ZERO WHILE *   00129000
*    THE SERVO HOLDS THE HEAD ON TARGET.  UPON REACHING ZERO, FINE    *   00130000
*    SERVO IS INVOKED AND THE TERMINATION COUNT IS SET TO A NEGATIVE  *   00131000
*    VALUE FROM WHERE IT IS INCREMENTED TO ZERO UPON WHICH THE SEEK   *   00132000
*    EXITS.                                                       *   00133000
*       THE NEXT TWO INSTRUCTIONS INITIALIZE THE SSLIM VALUE (R0) AND  *   00134000
*    THE SCW ACCELERATE UP VALUE (R4) FOR AN OUTWARD SEEK.        *   00135000
*       TRACKS ARE NUMBERED BEGINNING WITH 0 AT THE OUTSIDE EDGE AND  *   00136000
*    INCREASING TO JUST ABOUT 800 AT THE INSIDE EDGE; THEREFORE, FOR  *   00137000
*    INWARD SEEKS, THE CURRENT TRACK IS LESS THAT THE TARGET TRACK,  *   00138000
*    AND FOR OUTWARD SEEKS THE CURRENT TRACK IS GREATER THAN THE   *   00139000
*    TARGET TRACK.  THE FOLLOWING CODE SAVES THE TARGET TRACK NUMBER  *   00140000
*    IN R3.  R7 THEN GETS THE OUTWARD SEEK DISTANCE (CURRENT TRACK -  *   00141000
*    TARGET TRACK).  THIS VALUE IS ZERO FOR A SEEK SELF (TO CURRENT  *   00142000
*    TRACK).  IT IS NEGATIVE IF THE SEEK IS INWARD AND POSITIVE IF THE *   00143000
*    SEEK IS OUTWARD.  FOR AN OUTWARD SEEK, A BRANCH TO SK02 OCCURS.  *   00144000
*    A BRANCH TO SK01 OCCURS FOR AN INWARD SEEK, AND FOR A SEEK SELF  *   00145000
*    CONTROL DROPS THROUGH TO THE FOLLOWING INSTRUCTIONS WHICH SET THE *   00146000
*    ICW TO THE APPROPRIATE VALUE, WAIT TWO SAMPLE TIMES TO ALLOW THE *   00147000
*    ELECTRONICS TO SETTLE OUT, AND BRANCH TO SK07.              *   00148000
*                                                             *   00149000
****************************************************************  00150000
```

- 35 -

0000946

```
152  F800  8000  8  SEEK  PUSH  R0              * SAVE RETURN ADDRESS                        00152000
153  F801  E303  6              R3 = TCNT1      * TERMINATION COUNT := 3                      00153000
154  F802  8003  8        PUSH  R3              * SAVE TERMINATION COUNT                      00154000
155  F803  BH00  6        LLIT  R0 = !8000      * R0 (SSLIM) := !8000                         00155000
     F804  8000
156  F805  E43F  6              R4 = SCW63      * SCW ACCELERATE UP VALUE (OUTWARD)           00156000
157  F806  5327  7              R3 = R7         * R3 := TARGET TRACK                          00157000
158  F807  7F26  7              R7 = R6-R7      * R7 := CURRENT TRK - TARGET TRK              00158000
159  F808  8112  8        GOTO  SK02  IF >      * BRANCH IF SEEK OUTWARD                      00159000
160  F809  840F  6        GOTO  SK01  IF <      * BRANCH IF SEEK INWARD                       00160000
161  F80A  3B92  7        HCPL  R3 = R2(9)      * R3 := FINE SERVO ICW VALUE FOR TARGET       00161000
162  F80B  5823  8              XR0 = R3        * SET ICW (FINE SERVO)                        00162000
163  F80C  970D  9        CALL  SGAP            * WAIT FOR SECTOR GAP                         00163000
164  F80D  970D  9        CALL  SGAP            * WAIT FOR SECTOR GAP                         00164000
165  F80E  87A1  0        GOTO  SK07            * BRANCH (SEEK SELF)                          00165000
```

```
****************************************************************************   00167000
*                                                                        *   00168000
*        AFTER DETERMINING THE SEEK DIRECTION, SOME SET UP IS REQUIRED    *   00169000
*     BEFORE THE SEEK BEGINS.  FIRST OF ALL SSLIM MUST BE SET (SEE        *   00170000
*     DESCRIPTION OF SSLIM).  THE SEEK STARTS BY SUPPLYING FULL CURRENT   *   00171000
*     ACCELERATING THE ARM TOWARDS THE TARGET TRACK UNTIL REACHING A      *   00172000
*     SWITCHPOINT WHERE THE CURRENT IS REVERSED AND SUPPLYS A VARIABLE    *   00173000
*     AMOUNT OF BRAKING FORCE TO THE ARM FOLLOWING A MATHEMATICALLY       *   00174000
*     COMPUTED APPROACH TO THE TARGET TRACK.  POSITIVE CURRENT SUPPLYS    *   00175000
*     INWARD ACCELERATION; THEREFORE, DURING THE BRAKING PORTION OF AN    *   00176000
*     OUTWARD SEEK SSLIM SHOULD BE !8000 TO ALLOW THE CURRENT TO VARY     *   00177000
*     FROM 0 TO +1 AMP.  LIKEWISE, IN THE BRAKING PORTION OF AN INWARD    *   00178000
*     SEEK, SSLIM SHOULD BE 0 LIMITING THE CURRENT FROM 0 TO -1 AMP.      *   00179000
*        THE SCW REGISTER CONTROLS THE CURRENT.  IT IS A SIGN/MAGNITUDE   *   00180000
*     VALUE WITH A 5 BIT MAGNITUDE ALLOWING THE CURRENT TO BE SET TO A    *   00181000
*     1/32 AMP RESOLUTION.  THE CURRENT IS NEGATIVE FOR A SIGN (BIT 10)   *   00182000
*     OF 1 AND IS POSITIVE FOR A SIGN OF 0.  THE MAXIMUM SERVO VALUE IS   *   00183000
*     THE VALUE OF THE SCW THAT SUPPLYS FULL BRAKING CURRENT TO THE ARM   *   00184000
*     DURING THE SERVO PORTION OF THE SEEK.  THIS VALUE IS PLACED IN      *   00185000
*     THE SCW AT THE SWITCHPOINT IMMEDIATLY FOLLOWING THE ACCELERATE UP   *   00186000
*     PHASE OF THE SEEK.  SINCE THE ACCELERATE UP SCW VALUE PROVIDES      *   00187000
*     FULL CURRENT ACCELERATING, THE MAXIMUM SERVO VALUE IS THIS VALUE    *   00188000
*     WITH THE SIGN BIT (BIT 10) COMPLEMENTED.                           *   00189000
*        TO START THE SEEK AT FULL CURRENT REQUIRES THE SCW BE SET TO     *   00190000
*     63 (31+SIGN) FOR AN OUTWARD SEEK AND 31 FOR AN INWARD SEEK.         *   00191000
*        THE FOLLOWING CODE IS ENTERED AT SK01 FOR AN INWARD SEEK.  THE   *   00192000
*     CODE SETS UP THE SEEK DISTANCE (R7), THE SSLIM VALUE (R0), AND      *   00193000
*     THE ACCELERATE UP SCW VALUE (R4).  AT SK02, THESE REGISTERS HAVE    *   00194000
*     THE APPROPRIATE VALUES REGARDLESS OF SEEK DIRECTION.  THE MAXIMUM   *   00195000
*     SERVO VALUE (R5) IS THEN COMPUTED FROM R4 (ACCELERATE UP VALUE).    *   00196000
*                                                                        *   00197000
****************************************************************************   00198000


F80F  B337  6  SK01            R7 = -R7          * R7 := SEEK DISTANCE            00200000
F810  E000  0                  R0 = 0            * R0 (SSLIM) := 0               00201000
F811  E41F  6                  R4 = SCW31        * ACCELERATE UP VALUE = 31      00202000
F812  3DA4  7  SK02  BCPL      R5 = R4(10)       * R5 := MAXIMUM SERVO VALUE     00203000
```

```
***************************************************************     00205000
*                                                            *     00206000
*        AT FOLLOWING CODE:              STACK:              *     00207000
*    R0 := SSLIM VALUE                                       *     00208000
*    R2 := SEEK ICW VALUE           TERMINATION COUNT        *     00209000
*    R3 := TARGET TRACK             SEEK RETURN ADDRESS      *     00210000
*    R4 := ACCELERATE UP SCW VALUE                           *     00211000
*    R5 := MAXIMUM SERVO VALUE                               *     00212000
*    R6 := CURRENT TRACK                                     *     00213000
*    R7 := POSITIVE SEEK DISTANCE                            *     00214000
*                                                            *     00215000
***************************************************************     00216000


***************************************************************     00218000
*                                                            *     00219000
*     THE FOLLOWING INSTRUCTIONS SAVE THE MAXIMUM SERVO VALUE (R5) ON *  00220000
*  THE STACK FOR SUBSEQUENT USE, PLACES THE ACCELERATE UP VALUE (R4) *   00221000
*  IN THE SCW (XR1), AND THEN SETS THE ICW (XR0) WITH SEEK ICW VALUE *   00222000
*  (R2).   THIS TAKES THE DISC OUT OF THE FINE SERVO MODE AND STARTS *   00223000
*  THE ARM ACCELERATING TOWARDS THE TARGET TRACK.           *     00224000
*     THE CODE THEN TESTS THE POSITIVE SEEK DISTANCE (R7) AND IF THE *   00225000
*  DISTANCE IS ONE TRACK (4 QUARTERS OF A TRACK), BRANCHES TO SK06.  *   00226000
*                                                            *     00227000
***************************************************************     00228000


F813  0005  8     PUSH  R5            * SAVE MAXIMUM SERVO VALUE     00230000
F814  5924  8           XR1 = R4      * SCW := R4                   00231000
F815  9FFA  9     CALL  SCWST,I       * ANALYSIS PATCH              00232000
F816  5822  8           XR0 = R2      * SET SEEK ICW (START MOTION) 00233000
F817  9FF8  9     CALL  SKSET,I       * ANALYSIS PATCH              00234000
F818  A704  6     CMP   R7,4          * TEST DISTANCE               00235000
F819  8298  6     GOTO  SK06  IF =    * BRANCH IF ONE TRACK SEEK    00236000
```

```
***********************************************************************
*                                                                     *
*          AT SINIT:                                       STACK:     *
*     R0 := SSLIM VALUE                                               *
*     R2 := SCRATCH                              MAXIMUM SERVO VALUE   *
*     R3 := TARGET TRACK ADDRESS                 TERMINATION COUNT     *
*     R4 := SCRATCH                              SEEK RETURN ADDRESS   *
*     R5 := SCRATCH                                                   *
*     R6 := CURRENT TRACK ADDRESS                                     *
*     R7 := POSITIVE SEEK DISTANCE                                    *
*                                                                     *
***********************************************************************


***********************************************************************
*                                                                     *
*        THE PURPOSE OF THE SINIT IS TO INITIALIZE THE MODEL PARAMETERS *
*    AND THE SWITCHPOINT VALUE.  AT THE END OF THIS CODE, THE MODEL    *
*    POSITION IS CONTAINED IN MEMORY LOCATION M, THE ETA SQUARED VALUE *
*    IS CONTAINED IN ETASQ, ETA TIMES 2 IS IN ETA2, THE SWITCHPOINT    *
*    VALUE IS IN R5, AND THE ADJUSTED MODEL TARGET IS IN PTARG.  ALL   *
*    REGISTERS ARE VOLATILE (EXCEPT FOR R0 AND R5).                    *
*        THE SEEK SERVO ALGORITHM DEVELOPES A STEADY STATE SERVO ERROR  *
*    OF ABOUT 3.75 TRACKS.  THIS MEANS THAT THE ACTUAL ARM WILL TEND   *
*    TO LEAD THE MODEL BY ABOUT 3.75 TRACKS AND THUS WHEN THE MODEL    *
*    REACHES THE TARGET TRACK, THE ACTUAL ARM WILL HAVE OVERSHOT BY    *
*    3.75 TRACKS.  THE SEEK ROUTINE COMPENSATES FOR THIS BY HAVING     *
*    THE MODEL CONVERGE 3.75 TRACKS SHORT OF THE ACTUAL TARGET TRACK,  *
*    AND THEN JUMPING THE MODEL POSITION TO THE TARGET TRACK AFTER THE *
*    MODEL ETA HAS REACHED 0.  THIS SCHEME HAS THE DISADVANTAGE THAT   *
*    FOR SHORT SEEKS THE MODEL NEVER REACHES ITS STEADY STATE SERVO    *
*    ERROR.  TO REMEDY THIS PROBLEM, THE SEEK ROUTINE REDUCES THE SEEK *
*    DISTANCE BY ONLY ONE TRACK (INSTEAD OF 3.75) IF THE ACTUAL SEEK   *
*    DISTANCE IS LESS THAN 6 TRACKS (EXCEPT 0 OR 1 TRACK SEEKS WHICH   *
*    ARE DEALT WITH SEPARATELY).                                      *
```

```
*       IN ORDER TO ACCOMPLISH THIS DISTANCE OFFSETTING, THE ROUTINE   *   00271000
*  USES THE THREE CONSTANTS DOFF1, DOFF2, & DOFF3 (DEFINED BELOW).      *   00272000
*  THE ROUTINE SUBTRACTS 6 (DOFF1) FROM THE SEEK DISTANCE AND IF        *   00273000
*  THIS IS NEGATIVE THEN IT ADDS 2.75 (DOFF2) TO THE DISTANCE; NEXT,    *   00274000
*  2.25 (DOFF3) IS ADDED TO THE SEEK DISTANCE REGARDLESS OF LENGTH.     *   00275000
*  .THEREFORE, FOR 2,3,4, OR 5 TRACK SEEKS THE SEEK DISTANCE OFFSET     *   00276000
*  IS DOFF2+DOFF3-DOFF1 = -1 TRACK.  FOR SEEKS OF 6 TRACKS OR LONGER    *   00277000
*  THE SEEK DISTANCE OFFSET IS DOFF3-DOFF1 = -3.75 TRACKS.  NOTE        *   00278000
*  THAT ALL VALUES ARE COMPUTED IN QUARTER TRACKS.                      *   00279000
*                                                                           00280000
*                                                                       *   00281000
****************************************************************************  00282000


            0018    DOFF1 IS    24   * DISTANCE OFFSET 1 IS 6.00 TRACKS       00284000
            0008    DOFF2 IS    11   * DISTANCE OFFSET 2 IS 2.75 TRACKS       00285000
            0009    DOFF3 IS     9   * DISTANCE OFFSET 3 IS 2.25 TRACKS       00286000
```

```
**********************************************************************   00288000
*                                                                    *   00289000
*        THE FOLLOWING CODE PERFORMS THE SEEK DISTANCE OFFSETTING (SEE *  00290000
* THE ABOVE DESCRIPTION) AND STORES THE ADJUSTED RESULT IN PTARG.     *   00291000
* THE FIRST INSTRUCTION SUBTRACTS DOFF1 OFF THE SEEK DISTANCE (R7).   *   00292000
* IF THE SEEK DISTANCE IS GREATER THAN OR EQUAL DOFF1 THEN THE NEXT   *   00293000
* INSTRUCTION BRANCHES; OTHERWISE, THE THIRD INSTRUCTION ADDS DOFF2   *   00294000
* TO THE PARTIALLY ADJUSTED SEEK DISTANCE (R7).  REGARDLESS OF THE    *   00295000
* SEEK DISTANCE, THE NEXT INSTRUCTION ADDS DOFF3 LEAVING R7 WITH      *   00296000
* THE FULLY ADJUSTED SEEK DISTANCE FOR USE IN THE ETA CALCULATIONS    *   00297000
* BELOW.  PTARG IS THE ADJUSTED MODEL TARGET.  FOR OUTWARD SEEKS,     *   00298000
* PTARG EQUALS THE CURRENT TRACK LOCATION MINUS THE DISTANCE WHICH    *   00299000
* EQUALS R6-R7.  FOR INWARD SEEKS, PTARG EQUALS MINUS THE CURRENT     *   00300000
* TRACK LOCATION MINUS THE DISTANCE WHICH EQUALS -R6-R7.  NOTE THAT   *   00301000
* PTARG IS NEGATIVE FOR INWARD SEEKS.  THESE TWO EQUATIONS DIFFER     *   00302000
* ONLY IN THE SIGN OF R6; THEREFORE, THE NEXT THREE INSTRUCTIONS      *   00303000
* TEST THE SEEK DIRECTION AND NEGATE R6 IF THE SEEK IS OUTWARD.       *   00304000
* THUS THE EQUATION FOR PTARG REDUCES TO -(R6+R7) REGARDLESS OF THE   *   00305000
* DIRECTION.  THE NEXT THREE INSTRUCTIONS PERFORM THIS OPERATION      *   00306000
* LEAVING THE RESULT IN R3.  THIS VALUE IS IN QUARTER TRACK UNITS     *   00307000
* THEREFORE, THE NEXT INSTRUCTION SHIFTS R3 LEFT 1 PLACE TO YIELD     *   00308000
* PTARG IN EIGHTHS OF A TRACK.  THE FOLLOWING INSTRUCTION STORES      *   00309000
* THIS VALUE IN PTARG.                                                *   00310000
*                                                                    *   00311000
**********************************************************************   00312000
```

```
314   F81A  6F18   6   SINIT       R7 = R7-DOFF1      * R7 I= SEEK DISTANCE - DOFF1
315   F81B  811D   6           GOTO  *+2  IF >       * BRANCH IF > 0
316   F81C  670B   6                 R7 = R7+DOFF2    * ADJUST SEEK DISTANCE (ADD DOFF2)
317   F81D  6709   6                 R7 = R7+DOFF3    * R7 I= FULLY ADJUSTED SEEK DISTANCE
318   F81E  2623   7           CMP   R3,R6           * TEST DIRECTION OF SEEK
319   F81F  8121   6           GOTO  *+2  IF >       * SKIP ON INWARD SEEK
320   F820  8336   6                 R6 = -R6        * R6 I= - CURRENT TRACK (OUTWARD SEEK)
321   F821  5327   7                 R3 = R7         * R3 I= ADJUSTED SEEK DISTANCE
322   F822  7326   7                 R3 = R3+R6      * R3 I= - ADJUSTED TARGET
323   F823  8333   6                 R3 = -R3        * R3 I= ADJUSTED TARGET (*4)
324   F824  8703   6           LSL   R3             * R3 I= ADJUSTED TARGET (*8)
325   F825  D003  12           STOR  PIANG = R3     * STORE ADJUSTED TARGET VALUE
      F826  0067
```

```
****************************************************************     00327000
*                            .                                 *     00328000
*       THE MODEL COMPUTATIONS ARE BASED ON A TIME VALUE WHICH IS THE  *     00329000
*   ESTIMATED TIME TO ARRIVAL AT THE TARGET TRACK.  THIS VALUE IS      *     00330000
*   COMPUTED FROM THE EQUATION T=SQRT(2*X/A) WHERE X IS THE DISTANCE   *     00331000
*   TRAVELED BY THE MODEL AND A IS THE MODEL ACCELERATION.  THE ETA    *     00332000
*   IS THEN ROUNDED TO THE NEAREST WHOLE NUMBER SO THAT THE MODEL      *     00333000
*   WILL CONVERGE EXACTLY TO THE (ADJUSTED) TARGET TRACK.  FROM THIS   *     00334000
*   ROUNDED VALUE THE MODEL PARAMETERS ETAC AND ETASQ ARE COMPUTED.    *     00335000
*       IN THE EQUATION T=SQRT(2*X/A), X IS EQUAL TO THE DISTANCE FROM *     00336000
*   THE SWITCHPOINT TO THE ADJUSTED TARGET WHICH EQUALS D*20/37 WHERE  *     00337000
*   D IS THE ADJUSTED DISTANCE WHICH IS CONTAINED IN R7.  THUS THE     *     00338000
*   EQUATION REDUCES TO T=SQRT(R7)*SQRT(2*(4/7)/A).  THE FOLLOWING     *     00339000
*   CODE COMPUTES SQRT(R7).  THE ADJUSTED TARGET (R3) IN INVOLATILE.   *     00340000
*       THE FIRST TWO INSTRUCTIONS CLEAR R2 AND R5.  R2 WILL CONTAIN   *     00341000
*   THE OPERAND MINUS THE ROOT SQUARED (ERROR INDICATION) AND R5 WILL  *     00342000
*   CONTAIN THE ROOT.  THE NEXT INSTRUCTION SETS R6 TO 9 WHICH IS THE  *     00343000
*   ITERATION INDEX (THE PROGRAM WILL LOOP 9 TIMES).  THE NEXT FOUR    *     00344000
*   INSTRUCTIONS SHIFT (R2,R7) LEFT TWO PLACES.  THIS MULTIPLIES THE   *     00345000
*   OPERAND BY FOUR BRINGING IN TWO NEW BITS.  THE NEXT INSTRUCTION    *     00346000
*   SHIFTS THE ROOT (R5) LEFT ONE PLACE.  THE EFFECT OF THESE LAST 5   *     00347000
*   INSTRUCTIONS IS THAT THE OPERAND HAS BEEN MULTIPLIED BY 4 AND THE  *     00348000
*   ROOT BY 2.  THE NEXT 3 INSTRUCTIONS SET R4 TO 2*ROOT+1 WHICH IS    *     00349000
*   THE DIFFERENCE BETWEEN ROOT**2 AND (ROOT+1)**2.  THE FOLLOWING     *     00350000
*   INSTRUCTION TESTS THIS VALUE.  IF IT IS LESS THAN OR EQUAL TO THE  *     00351000
*   OPERAND MINUS THE ROOT**2 THEN THE NEXT INSTRUCTION BRANCHES;      *     00352000
*   OTHERWISE THE NEXT 3 INSTRUCTIONS INCREMENT THE ROOT (R5) AND      *     00353000
*   UPDATE R2 BY SUBTRACTING R4.  THE NEXT INSTRUCTION DECREMENTS THE  *     00354000
*   INDEX (R6) AND THE NEXT INSTRUCTION LOOPS BACK TO SINT1 IF NOT 0;  *     00355000
*   OTHERWISE, THE ROUTINE DROPS THROUGH WITH R5 HAVING THE SQUARE     *     00356000
*   ROOT OF THE SEEK DISTANCE IN 1/4 TRACK UNITS.                      *     00357000
*                                                                      *     00358000
****************************************************************     00359000
```

```
361   F827  E200  6           R2 = 0        * R2 IS OPERAND - SQUARE
362   F828  E500  6           R5 = 0        * R5 IS ROOT
363   F829  E609  6           R6 = 9        * R6 IS INDEX
364   F82A  8707  6   SINT1 LSL  R7         * SHIFT (R2*R7) LEFT TWO BITS
365   F82B  8722  6         RRL  R2,C        *   THIS BRINGS TWO NEW BITS
366   F82C  8707  6         LSL  R7          *   INTO R2
367   F82D  8722  6         RRL  R2,C
368   F82E  8705  6         LSL  R5         * SHIFT ROOT LEFT ONE BIT
369   F82F  E401  6           R4 = 1        * R4 = ROOT+ROOT+1
370   F830  7425  7           R4 = R4+R5
371   F831  7425  7           R4 = R4+R5
372   F832  2224  7         CMP  R4,R2       * IF 2*ROOT+1 > OPERAND-ROOT**2
373   F833  8137  6         GOTO SINT2 IF >  * THEN GOTO SINT2
374   F834  6501  6           R5 = R5+1     * ELSE    ROOT = ROOT+1
375   F835  7A24  7           R2 = R4-R2     *   AND    R2 = OPERAND-ROOT**2
376   F836  8332  6           R2 = -R2
377   F837  6E01  6   SINT2   R6 = R6-1     * DECREMENT INDEX
378   F838  812A  6         GOTO SINT1 IF >  * LOOP TILL DONE
```

```
************************************************************************
*                                                                    *
*        AT ENTRY INTO THE FOLLOWING CODE, R3 HAS THE ADJUSTED TARGET *
* VALUE AND R5 CONTAINS THE SQRT(D) WHERE D IS THE ADJUSTED SEEK      *
* DISTANCE.  SINCE THE ETA IS EQUAL TO SQRT(D)*SQRT(2*(4/7)/A),       *
* R5 MUST BE MULTIPLIED BY SQRT(2*(4/7)/A) WHICH IS A CONSTANT        *
* EQUAL TO APPROXIMATELY 2.515625.  THE FOLLOWING CODE THEREFORE      *
* MULTIPLIES THE SQRT(D) BY 2.515625.                                 *
*        THE MULTIPLICATION IS DONE BY THE FIRST EIGHT INSTRUCTIONS.  *
* THE SINT4 ROUTINE PERFORMS A SHIFT AND ADD OPERATION, THE SHIFT     *
* ONLY IS DONE EXPLICITLY.  SINCE THE SQRT(D) CONTAINED IN R5 WAS     *
* EXPRESSED IN QUARTER TRACK UNITS AND SINCE THE ROUTINE PERFORMS     *
* SIX SHIFTS IN ADDITION TO THE MULTIPLY BY 2.X SHIFT, THE RESULT     *
* LEFT IN R6 AFTER THE EIGHTH INSTRUCTION HAS THE INTEGER PART IN     *
* THE HIGH BYTE.  THE NEXT INSTRUCTION ROUNDS THE VALUE BY ADDING     *
* 1/2 AND THE FOLLOWING INSTRUCTION TRUNCATES THE RESULTING VALUE     *
* BY MOVING DOWN THE HIGH BYTE.  THIS CODE EXITS WITH THE INTEGER     *
* VALUE OF THE ETA CONTAINED IN R6.                                   *
*                                                                    *
************************************************************************


      F039  5625  7              R6 = R5       * R6 := R5*2.515625 := ETA
      F03A  8705  6        LSL   R5
      F03B  8705  6        LSL   R5
      F03C  8705  6        LSL   R5
      F03D  8705  6        LSL   R5
      F03E  9706  9        CALL  SINT4
      F03F  8705  6        LSL   R5
      F040  9706  9        CALL  SINT4
      F041  6680  6              R6 = R6+!80   * ROUND OFF
      F042  5696  7              R6 = R6(80)   * MOVE DOWN INTEGER PART
```

```
*********************************************************************
*                                                                   *
*        AT ENTRY INTO THE FOLLOWING CODE, R6 CONTAINS THE ETA AND R3 *
*    CONTAINS THE ADJUSTED TARGET VALUE.  USING THESE VALUES THIS CODE *
*    COMPUTES THE SWITCHPOINT AND THE INITIAL VALUES FOR THE MODEL    *
*    PARAMTERS ETASQ, ETA2, AND M.                                    *
*        THE ETA SQUARED PARAMETER (ETASQ) IS COMPUTED BY SQUARING THE *
*    ETA (R6).  THE FIRST 3 INSTRUCTIONS SET UP THE LOOP INDEX (R2),  *
*    THE PRODUCT (R4) AND THE MULTIPLIER (R5).  THE NEXT INSTRUCTION  *
*    DOUBLES THE PRODUCT (R4) (INITIALLY ZERO).  THE FOLLOWING TWO    *
*    SHIFT UP A NEW MULTIPLIER BIT AND SKIP IF THE BIT IS ZERO.  THE  *
*    NEXT INSTRUCTION WILL ADD THE ETA VALUE (R6) TO THE PRODUCT (R4) *
*    IF THE MULTIPLIER BIT WAS A ONE.  THE FOLLOWING TWO INSTRUCTIONS *
*    DECREMENT THE INDEX VALUE (R2) AND LOOP BACK TO SINT3 UNTIL THE  *
*    INDEX GOES TO ZERO.  THE FOLLOWING INSTRUCTION STORES THE SQUARED *
*    VALUE IN ETASQ.                                                  *
*        THE NEXT TWO INSTRUCTIONS COMPUTE THE ETA TIMES 2 VALUE (ETA2) *
*    BY SHIFTING ETA (R6) LEFT ONE PLACE AND THEN STORING THE VALUE IN *
*    ETA2.                                                            *
*        AT THIS POINT R3 CONTAINS THE ADJUSTED TARGET VALUE AND R4 HAS *
*    THE ETASQ VALUE.  THE NEXT INSTRUCTION CALLS THE MCOMP ROUTINE   *
*    WHICH COMPUTES THE MODEL LOCATION PARAMETER FROM THESE VALUES AND *
*    STORES IT IN M (IN EIGHTHS OF TRACKS).  THE CODE EXITS WITH THIS *
*    INITIAL MODEL VALUE IN R5.                                       *
*        THE SWITCHPOINT IS THE SAME AS THE INITIAL MODEL VALUE EXCEPT *
*    IT IS EXPRESSED IN QUARTER TRACKS.  THE NEXT INSTRUCTION SHIFTS  *
*    INITIAL MODEL VALUE (R5) RIGHT ONE PLACE AND THE MODEL INITIALIZE *
*    ROUTINE THEN RETURNS WITH THE SWITCHPOINT IN R5 (QUARTER TRACKS). *
*                                                                   *
*********************************************************************
```

00412000
00413000
00414000
00415000
00416000
00417000
00418000
00419000
00420000
00421000
00422000
00423000
00424000
00425000
00426000
00427000
00428000
00429000
00430000
00431000
00432000
00433000
00434000
00435000
00436000
00437000
00438000
00439000
00440000
00441000

0000946

```
443   F843  E207  6              R2 = 7            * R2 = LOOP INDEX                              00443000
444   F844  E400  6              R4 = 0            * CLEAR R4                                     00444000
445   F845  5516  7              R5 = R6(HB1)      * R5 := MULTIPLIER (HIGH BYTE)                 00445000
446   F846  B704  6    SINT3 LSL  R4              * R4 *= R4*2                                   00446000
447   F847  B705  6          LSL  R5              * SHIFT UP NEXT MULTIPLIER BIT                 00447000
448   F848  634A  6          GOTO *+2   .IF >=    * SKIP IF BIT = 0                              00448000
449   F849  7426  7              R4 = R4+R6       * ADD MULTIPLICAND (R6)                        00449000
450   F84A  6A01  6              R2 = R2-1        * DECREMENT INDEX                              00450000
451   F84B  6146  6          GOTO SINT3 IF >     * LOOP TILL DONE                               00451000
452   F84C  D004  12         STOR ETASQ = R4     * STORE ETA SQUARED VALUE                      00452000
      F84D  006A
453   F84E  B706  6          LSL  R6             * R6 := ETA TIMES 2  .                         00453000
454   F84F  D006  12         STOR ETA2 = R6      * STORE ETA TIMES 2 VALUE                      00454000
      F850  006D
455   F851  9FD9  9          CALL ICOMP,I        * COMPUTE MODEL LOCATION                       00455000
456   F852  B545  6          LSR  R5             * R5 := SWITCHPOINT (QUARTER TRACKS)           00456000
```

```
***************************************************************  00458000
*                                                            *  00459000
*       THE FOLLOWING CODE LOOPS ON ITSELF UNTIL THE ACTUATOR REACHES  *  00460000
*  THE SWITCHPOINT.  AT ENTRY INTO THE CODE, R5 CONTAINS THE VALUE  *  00461000
*  OF THE SWITCHPOINT (QUARTER TRACKS), R4 CONTAINS THE ACCELERATION *  00462000
*  SERVO VALUE, AND R0 CONTAINS THE SSLIM VALUE (THE SSLIM VALUE AT  *  00463000
*  THIS POINT IS EITHER 0 FOR INWARD SEEKS OR !8000 FOR AN OUTWARD  *  00464000
*  SEEK).  DURING THIS PHASE A SINGLE ERRONEOUS TRACK SAMPLE IS NOT  *  00465000
*  ALLOWED TO PREMATURELY INDICATE SWITCHPOINT ARRIVAL.  THIS IS  *  00466000
*  ACHIEVED BY TESTING THE DISTANCE BETWEEN THE TRACK SAMPLE WHICH  *  00467000
*  APPEARS TO HAVE REACHED THE SWITCHPOINT AND THE PREVIOUS SAMPLE.  *  00468000
*  IF THIS DISTANCE IS GREATER THAN THE MAXIMUM VELOCITY (MAXV) THEN *  00469000
*  THE SAMPLE IS IGNORED AND THE CODE EXECUTES ANOTHER SAMPLE READ.  *  00470000
*       THE FIRST INSTRUCTION POPS THE STACK TO GET THE MAXIMUM SERVO  *  00471000
*  VALUE (R4).  THE NEXT INSTRUCTION PROVIDES A SECTOR TIME DELAY IN *  00472000
*  ORDER TO SYNC THE ROUTINE TO THE GAP AND ALLOW THE ELECTRONICS  *  00473000
*  TIME TO SETTLE OUT.                                        *  00474000
*       THE NEXT INSTRUCTION READS A TRACK SAMPLE INTO R2.  THIS SETS  *  00475000
*  UP THE LOOP.  THE NEXT INSTRUCTION TRANSFERS THE PREVIOUS TRACK  *  00476000
*  SAMPLE TO R3 AND THE FOLLOWING INSTRUCTION READS A NEW TRACK  *  00477000
*  SAMPLE INTO R2.  THE NEXT TWO INSTRUCTIONS SET R6 WITH THE VALUE  *  00478000
*  OF THE SWITCHPOINT - THE CURRENT TRACK SAMPLE.  THE SIGN OF THIS  *  00479000
*  VALUE INDICATES TO WHICH SIDE OF THE SWITCHPOINT THE TRACK SAMPLE *  00480000
*  LIES.  THE NEXT INSTRUCTION EXCLUSIVE ORS R6 WITH THE SSLIM VALUE *  00481000
*  WHICH HAS THE EFFECT OF COMPLEMENTING THE SIGN BIT IF AND ONLY IF *  00482000
*  THE SEEK IS OUTWARD.  THUS THE SIGN OF R6 NOW INDICATES WHETHER  *  00483000
*  OR NOT SWITCHPOINT HAS BEEN PASSED.  THE NEXT INSTRUCTION LOOPS  *  00484000
*  BACK TO SK03 IF THE R6 IS POSITIVE INDICATING THE SWITCHPOINT HAS *  00485000
*  NOT YET BEEN REACHED.                                      *  00486000
```

```
*        THE NEXT THREE INSTRUCTIONS SET R3 WITH THE DISTANCE BETWEEN   *  00487000
*     THE LAST TWO TRACK SAMPLES (ABSOLUTE VALUE).  THIS VALUE IS THEN  *  00488000
*     COMPARED TO THE MAXIMUM VELOCITY BY THE NEXT INSTRUCTION, AND THE *  00489000
*     FOLLOWING INSTRUCTION LOOPS BACK TO SKU3 IF THE DISTANCE IS TOO   *  00490000
*     LARGE (INDICATING A TRACK SAMPLING ERROR).                        *  00491000
*        WHEN THE SWITCHPOINT HAS BEEN REACHED, THE SERVO ERROR (R6) IS *  00492000
*     SET TO ZERO AND THE CODE THEN BRANCHES INTO THE SERVO LOOP AT THE *  00493000
*     POINT WHERE THE SCW VALUE IS SET (FROM R4).                       *  00494000
*                                                                       *  00495000
*************************************************************************   00496000

     F853  H904  9        POP   R4           * R4 := MAXIMUM SERVO VALUE           00498000
     F854  97DD  9        CALL  SGAP         * WAIT ONE SECTOR TIME DELAY          00499000
     F855  97DD  9        CALL  SGAP         * R2 := TRACK SAMPLE (QUARTER TRACKS) 00500000
     F856  5322  7  SK03        R3 = R2      * R3 := OLD TRACK SAMPLE              00501000
     F857  97DD  9        CALL  SGAP         * R2 := NEW TRACK SAMPLE              00502000
     F858  5622  7              R6 = R2      * R6 := NEW TRACK SAMPLE              00503000
     F859  7E25  7              R6 = R5-R6   * R6 := DISTANCE FROM SWITCHPOINT     00504000
     F85A  3620  7              R6 = R6 XOR R0  * TEST DIRECTION FROM SWITCHPOINT  00505000
     F85B  8156  6        GOTO  SK03  IF >   * LOOP IF NOT PAST SWITCHPOINT        00506000
     F85C  7H22  7              R3 = R2-R3   * R3 := NEW SAMPLE - OLD SAMPLE       00507000
     F85D  835F  6        GOTO  *+2   IF >=  * SKIP IF POSITIVE                    00508000
     F85E  6333  6              R3 = -R3     * R3 := ABS(NEW SAMPLE - OLD SAMPLE)  00509000
     F85F  A33C  6        CMP   R3,MAXV      * TEST DISTANCE BETWEEN SAMPLES       00510000
     F860  8156  6        GOTO  SK03  IF >   * LOOP IF TRACK SAMPLE READ ERROR     00511000

     F861  7A25  7              R2 = R5-R2   * ANALYSIS PATCH                      00512000
     F862  8732  6        LSL   R2,F         * ANALYSIS PATCH                      00513000
     F863  9FFC  9        CALL  ERSET,I      * ANALYSIS PATCH                      00514000
     F864  E600  6              R6 = 0       * SET INITIAL ERROR TO ZERO           00515000
     F865  8784  6        GOTO  SK05         * BRANCH INTO SERVO LOOP              00516000
```

```
*************************************************************  00518000
*                                                          *  00519000
*          AT SK04:                          STACK:        *  00520000
*    R0 := SSLIM VALUE                                     *  00521000
*    R2 := SCRATCH                        TERMINATION COUNT *  00522000
*    R3 := SCRATCH                        SEEK RETURN ADDRESS  00523000
*    R4 := SCRATCH                                         *  00524000
*    R5 := SCRATCH                                         *  00525000
*    R6 := SERVO ERROR * COMPENSATION GAIN (HIGH WORD)     *  00526000
*    R7 := SCRATCH                                         *  00527000
*                                                          *  00528000
*************************************************************  00529000

*************************************************************  00531000
*                                                          *  00532000
*       THE FOLLOWING CODE IS THE START OF THE SERVO LOOP.  THE SERVO *  00533000
*    LOOP COMPUTES NEW VALUES FOR THE SCW BASED ON THE SERVO ERRORS *  00534000
*    AND UPDATES THE SERVO MODEL.  AT EACH ITERATION THROUGH THE LOOP, * 00535000
*    THE SCW IS SET EQUAL TO (K*E1)-(Z*K*E0) WHERE K IS THE GAIN OF *  00536000
*    THE COMPENSATION, Z IS THE COMPENSATION'S ZERO LOCATION, E0 IS *  00537000
*    THE PREVIOUS SERVO ERROR, AND E1 IS THE CURRENT SERVO ERROR. *  00538000
*       AT THE START OF THE SERVO LOOP R6 CONTAINS THE K*E1 TERM FROM * 00539000
*    THE PREVIOUS SERVO LOOP ITERATION.  THIS VALUE IS EQUAL TO K*E0 *  00540000
*    FOR THE PRESENT SERVO LOOP ITERATION AND CAN BE CONVERTED TO THE *  00541000
*    SECOND TERM OF THE SERVO EQUATION BY NEGATING AND MULTIPLYING BY * 00542000
*    Z (GIVES -Z*K*E0).                                    *  00543000
*       THE FIRST INSTRUCTION NEGATE R6 LEAVING IT WITH -K*E0.  THE * 00544000
*    NEXT INSTRUCTION SAVES THE SIGN BIT FOR USE IN THE MULTIPLY.  THE * 00545000
*    NEXT INSTRUCTION CLEARS R4 WHICH IS TO RECEIVE THE RESULT OF THE * 00546000
*    MULTIPLY BY Z.                                        *  00547000
```

```
*        SINCE Z IS EQUAL TO 7/8, R4 MUST BE SET EQUAL TO -(7/8)*K*E0.  *   00548000
*   THIS IS ACCOMPLISHED BY THREE CALLS TO ZMULT.  ZMULT DIVIDES R6     *   00549000
*   BY TWO AND ADDS THE RESULT TO R4.  PRIOR TO THE CALLS TO ZMULT,     *   00550000
*   R4=0 AND R6=-K*E0.  AFTER THE FIRST CALL TO ZMULT, R4=R6=-K*E0/2.   *   00551000
*   AFTER THE SECOND ZMULT CALL, R4=-(3/4)*K*E0 AND R6=-(1/4)*K*E0.     *   00552000
*   AFTER THE THIRD CALL TO ZMULT, R4=-(7/8)*K*E0 WHICH IS THE SECOND   *   00553000
*   TERM OF THE SERVO EQUATION.  (R6,R7)=-(1/8)*K*E0.                   *   00554000
*                                                                       *   00555000
*****************************************************************************   00556000


F866  6336  6  SK04          R6 = -R6          * R6 := -K*E0            00558000
F867  2806  7          BTSI  R3 = R6(0)        * R3 := SIGN BIT         00559000
F868  6400  6                R4 = 0            * R4 := 0                00560000
F869  9702  9          CALL  ZMULT             * R4 := R6*7/8 := -Z*K*E0 00561000
F86A  9702  9          CALL  ZMULT                                      00562000
F86B  2AF6  7          BTST  R2 = R6(15)       * R2 := LSB OF R6        00563000
F86C  9702  9          CALL  ZMULT                                      00564000
F86D  7422  7                R4 = R4+R2        * ROUND OFF R4           00565000
```

```
*****************************************************************     00567000
*                                                                *     00568000
*       HAVING COMPUTED THE SECOND TERM OF THE SERVO EQUATION IN THE *  00569000
*  ABOVE CODE, THERE REMAINS THE FIRST TERM (K*E1) TO BE COMPUTED. *    00570000
*  THE FIRST STEP TO ACCOMPLISH THIS IS TO COMPUTE THE SERVO ERROR *    00571000
*  WHICH IS THE MODEL POSTION MINUS THE ACTUAL POSITION.  THE ACTUAL *  00572000
*  POSITION IS READ FROM A TRACK SAMPLING WHICH YIELDS TWO BINARY *     00573000
*  PLACES; HOWEVER, THE FOUR STATES REPRESENTED BY THESE TWO BITS *     00574000
*  (00,01,10,11) CORRESPOND TO 1/8, 3/8, 5/8, AND 7/8 RESPECTIVELY. *   00575000
*  THE ERROR IS THEREFORE COMPUTED TO THREE BINARY PLACES (EIGHTHS). *  00576000
*      TO COMPUTE THE ERROR, THE MODEL POSITION IS FIRST LOADED FROM *  00577000
*  ITS MEMORY LOCATION (M).  (M IS IN EIGHTHS OF TRACKS) *              00578000
*      THE NEXT INSTRUCTION CALLS THE SGAP ROUTINE WHICH WAITS FOR A *  00579000
*  SECTOR GAP AND THEN READS THE TRACK ADDRESS SAMPLE.  THIS VALUE *    00580000
*  IS RETURNED IN R2 WITH A 2 BIT FRACTION.  THE NEXT INSTRUCTION *     00581000
*  SHIFTS THE VALUE LEFT ONE PLACE, SHIFTING A 1 INTO THE LSB, THUS *   00582000
*  LEAVING R2 WITH THE ACTUAL POSITION AND A FRACTIONAL PART OF 1/8, *  00583000
*  3/8, 5/8 OR 7/8.  THE NEXT INSTRUCTION SETS R2 TO THE SERVO ERROR *  00584000
*  (MODEL POSITION - ACTUAL POSITION) TO AN EIGHTH OF A TRACK. *        00585000
*      THE NEXT THREE INSTRUCTIONS SET R6 TO K*E1 WHERE K=32 AND E1 *   00586000
*  IS IN R2 (IN EIGHTHS).  SINCE R2 IS IN EIGHTHS R6 SHOULD BE SET *    00587000
*  EQUAL TO K*(R2)/8 = (R2)*K/8 = (R2)*4.  THIS IS PERFORMED BY THE *   00588000
*  TWO SHIFTS. *                                                        00589000
*      THE FOLLOWING INSTRUCTION ADDS R6 (K*E1) TO R4 (-Z*K*E0) WHICH * 00590000
*  LEAVES R4 WITH (K*E1)-(Z*K*E0) WHICH IS THE SERVO EQUATION.  THE *   00591000
*  NEXT THREE INSTRUCTIONS RESULT IN R5 BEING SET TO THE SIGN OF THE *  00592000
*  RESULT AND R4 IS SET TO THE MAGNITUDE OF THE RESULT. *               00593000
*                                                                *     00594000
*****************************************************************     00595000
```

```
597    F86E   C003  12     LOAD   R3 = M        * R3 := MODEL POSITION * 8
       F86F   006C
598    F870   97DD   9     CALL   SWAP          * R2 := ACTUAL POSITION * 4
599    F871   B732   6     LSL    R2,F          * R2 := ACTUAL POSITION * 8
600    F872   7A23   7            R2 = R3-R2    * R2 := ERROR * 8
601    F873   9FFC   9     CALL   ERSET,I       * ANALYSIS PATCH
602    F874   5622   7            R6 = R2       * R6 := K*EI
603    F875   B706   6     LSL    R6
604    F876   B706   6     LSL    R6
605    F877   7426   7            R4 = R4+R6    * R4 := (K*EI)-(Z*K*EO)
606    F878   2D04   7     BTST   R5 = R4(0)    * R5 := SIGN BIT OF R4 (SCW)
607    F879   827B   6     GOTO   *+2   IF =    * SKIP IF R4 POSITIVE
608    F87A   B334   6            R4 = -R4      * R4 := ABSOLUTE VALUE (R4)
```

```
**************************************************************

*                                                          *
*          AT FOLLOWING CODE:                     STACK:    *
*    R0 := SSLIM VALUE                                      *
*    R2 := SERVO ERROR VALUE (EIGHTHS)     TERMINATION COUNT *
*    R3 := SCRATCH                         SEEK RETURN ADDRESS *
*    R4 := NEW SCW VALUE (MAGNITUDE)                        *
*    R5 := SIGN OF NEW SCW VALUE (MSB)                      *
*    R6 := K*(SERVO ERROR)                                  *
*    R7 := SCRATCH                                          *
*                                                          *
**************************************************************


**************************************************************
*                                                          *
*      THE FOLLOWING CODE BOUNDS CHECKS THE NEW SCW VALUE, ADJUSTS  *
*  THE VALUE IF NECESSARY, AND OUTPUTS IT TO THE SCW REGISTER (XR1). *
*  DEPENDING ON THE CONTENTS OF SSLIM (R0), THE SCW (XR1) BOUNDS ARE *
*  EITHER -SCWMX TO 0, 0 TO SCWMX, OR -SCWMX TO SCWMX.  REGARDLESS,  *
*  THE SCW CANNOT EXCEED SCWMX.  THE FIRST INSTRUCTION COMPARES THE  *
*  MAGNITUDE OF THE SCW (R4) WITH SCWMX.  THE NEXT TWO INSTRUCTIONS  *
*  WILL SET THE SCW MAGNITUDE TO SCWMX (LARGEST VALUE IN BOUNDS) IF  *
*  IT EXCEEDS THIS BOUND.  THE NEXT INSTRUCTION TESTS THE SIGN OF    *
*  THE SCW VALUE (R5).  THE FOLLOWING TWO INSTRUCTIONS SET THE SCW   *
*  SIGN BIT IN R4 (BIT 10) IF THE SCW SHOULD BE NEGATIVE.           *
```

00610000
00611000
00612000
00613000
00614000
00615000
00616000
00617000
00618000
00619000
00620000
00621000

00623000
00624000
00625000
00626000
00627000
00628000
00629000
00630000
00631000
00632000
00633000
00634000

- 54 -

0000946

```
*     THE RESULT OF THE FOLLOWING XOR INSTRUCTION HAS ITS LOW ORDER    *    00635000
*     15 BITS EQUAL TO THE 15 LOW ORDER BITS OF SSLIM (R0).  THESE BITS *    00636000
*     ARE ALL ZERO IF THE SCW RANGE IS SIGNED (EITHER -SCWMX TO ZERO OR *    00637000
*     ZERO TO SCWMX).  IF THE RANGE IS UNSIGNED (-SCWMX TO SCWMX) THEN  *    00638000
*     AT LEAST ONE OF THESE BITS WILL BE A ONE.  THE SIGN BIT OF THE    *    00639000
*     EXCLUSIVE OR RESULT IS THE EXCLUSIVE OR OF THE SIGN OF THE SCW    *    00640000
*     VALUE (R5) AND THE SIGN OF SSLIM (R0).  IF THE RANGE IS SIGNED    *    00641000
*     THEN THIS BIT IS A ZERO ONLY IF THE SCW VALUE HAS THE WRONG SIGN. *    00642000
*     THEREFORE, THE 16 BIT RESULT WILL BE ZERO ONLY IF THE SCW VALUE   *    00643000
*     SET THE SCW VALUE TO ZERO IF IT HAS AN INAPPROPRIATE SIGN BIT.    *    00644000
*        AT THIS POINT THE SCW VALUE (R4) HAS BEEN PROPERLY BOUNDED AND *    00645000
*     THE NEXT INSTRUCTION OUTPUTS IT TO THE SCW.  THIS INSTRUCTION IS  *    00646000
*     ALSO THE POINT AT WHICH THE SERVO LOOP IS ENTERED FROM THE        *    00647000
*     ACCELERATE UP PHASE AFTER THE SWITCHPOINT HAS BEEN REACHED.       *    00648000
*                                                                       *    00649000
***********************************************************************       00650000


      F87B  A41F  6        CMP    R4,SCWMX      * TEST MAGNITUDE OF R4 (SCW)           00652000
      F87C  867E  6        GOTO   *+2  IF <=    *    SKIP IF LESS THAN OR EQUAL SCWMX  00653000
      F87D  E41F  6               R4 = SCWMX    *    ELSE SET TO SCWMX                 00654000
      F87E  6500  6               R5 = R5+0     * TEST SIGN OF SCW (R5)                00655000
      F87F  B281  6        GOTO   *+2  IF =     *    SKIP IF POSITIVE                  00656000
      F880  1CA4  7        BSET   R4(10)        *    ELSE SET SIGN OF R4 (SCW)         00657000
      F881  3520  7               R5 = R5 XOR R0  * TEST SERVO LIMITS                 00658000
      F882  B584  6        GOTO   *+2  IF <>    * SKIP IF IN BOUNDS                    00659000
      F883  E400  6               R4 = 0        * SET R4 = 0   (SCW)                   00660000
      F884  5924  8   SK05        XR1 = R4      * SCW 1= R4                            00661000
      F885  9FFA  9        CALL   SCWST,I       * ANALYSIS PATCH                       00662000
```

```
*******************************************************************************   00664000
*                                                                            *   00665000
*          THE FOLLOWING CODE UPDATES THE MODEL PARAMETERS: AT ENTRY INTO    *   00666000
*    THIS CODE, THE MODEL PARAMETERS ETA2, ETASQ, AND M CONTAIN THE          *   00667000
*    APPROPRIATE VALUES FOR THE SERVO PASS JUST COMPLETED.  AT EXIT          *   00668000
*    FROM THIS CODE THESE VALUES MUST BE SET APPROPRIATELY FOR THE           *   00669000
*    NEXT PASS THROUGH THE SERVO LOOP.   (ETA = ETA-1)                       *   00670000
*          THE FIRST INSTRUCTION LOADS THE ETA TIMES 2 PARAMETER (ETA2)      *   00671000
*    INTO R4.  THE NEXT TWO INSTRUCTIONS WILL CAUSE A BRANCH TO SK09         *   00672000
*    IF ETA2 IS ZERO WHICH INDICATES THAT THE MODEL HAS COMPLETED THE        *   00673000
*    APPROACH AND IS NOW AT TARGET.                                          *   00674000
*          SINCE (X-1)*2 = X-2 THE NEXT INSTRUCTION UPDATES THE ETA2         *   00675000
*    PARAMETER BY SUBTRACTING 2 FROM IT.  IF THIS CAUSES THE VALUE TO        *   00676000
*    GO TO ZERO THEN THE MODEL HAS ARRIVED AT TARGET AND THE FOLLOWING       *   00677000
*    INSTRUCTION DOES A BRANCH TO SK08 WHERE THE MODEL IS PROPERLY           *   00678000
*    TERMINATED.  OTHERWISE THE NEXT INSTRUCTION STORES THE NEW ETA2.        *   00679000
*          THE NEXT INSTRUCTION LOADS THE ETA SQUARED VALUE (ETASQ) INTO     *   00680000
*    R5.  SINCE (X-1)**2 = X**2 - 2*X + 1 = X**2 - 2*(X-1) - 1, THE          *   00681000
*    ETASQ VALUE IS UPDATED BY THE NEXT TWO VALUES WHICH SUBTRACT THE        *   00682000
*    UPDATED ETA2 VALUE (=2*(X-1)) AND SUBTRACTING 1.  THE FOLLOWING         *   00683000
*    INSTRUCTION STORES THE UPDATED ETASQ.                                   *   00684000
*          THE NEXT INSTRUCTION SETS UP A CALL TO MCOMP BY LOADING THE       *   00685000
*    PTARG VALUE INTO R3.  THE NEXT INSTRUCTION CALLS MCOMP WHERE THE        *   00686000
*    NEW MODEL POSITION IS COMPUTED AND STORED IN M.  (SEE DESCRIPTION       *   00687000
*    OF MCOMP).  THE LAST INSTRUCTION BRANCHES BACK TO THE START OF          *   00688000
*    THE SERVO LOOP.                                                         *   00689000
*                                                                            *   00690000
*******************************************************************************   00691000
```

```
693    FAA6   C004  12      LOAD   R4 = ETA2        * R4 := ETA TIMES 2              00693000
       F9A7   006B
694    FAA8   6400   6             R4 = R4+0        * TEST ETA                       00694000
695    FAA9   82AE   6      GOTO   SK09  IF =       * BRANCH IF ETA = 0              00695000
696    FAAA   6C02   6             R4 = R4-2        * UPDATE ETA TIMES 2             00696000
697    FAAB   86A5   6      GOTO   SK0A  IF <=      * BRANCH IF NEW ETA = 0          00697000
698    FA8C   D004  12      STOR   ETA2 = R4        * STORE UPDATED ETA TIMES 2      00698000
       FAAD   006B
699    FAAE   C005  12      LOAD   R5 = ETASQ       * R5 := ETA SQUARED              00699000
       FAAF   006A
700    FA90   7C25   7             R4 = R5-R4       * UPDATE ETA SQUARED             00700000
701    FA91   6C01   6             R4 = R4-1        * R4 := NEW ETA SQUARED          00701000
702    FA92   D004  12      STOR   ETASQ = R4       * STORE UPDATED ETA SQUARED      00702000
       FA93   006A
703    FA94   C003  12      LOAD   R3 = PTARG       * R3 := ADJUSTED TARGET VALUE    00703000
       FA95   0067
704    FA96   9FD9   9      CALL   ICOMP,I          * COMPUTE MODEL POSITION VALUE   00704000
705    FA97   8766   6      GOTO   SK04             * BRANCH TO START OF SERVO LOOP  00705000
```

- 57 -

SEEK ROUTINE        ONE TRACK SEEK (SPECIAL CASE)

```
************************************************************************  00707000
*                                                                      *  00708000
*       A1 SK06:                                    STACK:             *  00709000
*    R0 := SSLIM VALUE                                                 *  00710000
*    R2 := SEEK ICW VALUE                   MAXIMUM SERVO VALUE        *  00711000
*    R3 := TARGET TRACK                     TERMINATION COUNT          *  00712000
*    R4 := ACCELERATE UP SCW VALUE          SEEK RETURN ADDRESS        *  00713000
*    R5 := MAXIMUM SERVO VALUE                                         *  00714000
*    R6 := CURRENT TRACK                                               *  00715000
*    R7 := POSITIVE SEEK DISTANCE                                      *  00716000
*                                                                      *  00717000
************************************************************************  00718000


************************************************************************  00720000
*                                                                      *  00721000
*       THE FOLLOWING CODE PERFORMS A ONF TRACK SEEK.  IT IS ENTERED   *  00722000
*    RIGHT AFTER THE ICW HAS BEEN SET AND SEEK MOTION STARTED.  THE    *  00723000
*    FIRST TWO INSTRUCTIONS SET UP THE DELAY INDEX AND CALL THE DELAY  *  00724000
*    ROUTINE, THUS INVOKING A DELAY WHILE THE ARM ACCELERATES TO ABOUT *  00725000
*    THE MIDPOINT OF THE SEEK.  THE FOLLOWING TWO INSTRUCTIONS GET THE *  00726000
*    MAXIMUM SERVO VALUE FROM THE STACK (R2) AND OUTPUT IT TO THE SCW  *  00727000
*    REGISTER.  THIS REVERSES THE CURRENT IN THE ACTUATOR AND BEGINS   *  00728000
*    DEACCELERATING THE ARM.  THE NEXT TWO INSTRUCTIONS SET UP THE     *  00729000
*    DELAY INDEX (R2) AND AGAIN CALL THE DELAY ROUTINE WHICH RESULTS   *  00730000
*    IN A DELAY WHILE THE ARM DEACCELERATES TO ZERO APPROXIMATELY ON   *  00731000
*    TARGET.  THE FOLLOWING BLOCK OF CODE IS ENTERED EITHER FROM THE   *  00732000
*    TRACK-TO-TRACK SEEK CODE OR FOR THE START OF A SEEK SELF.  IN     *  00733000
*    EITHER OF THESE CASES THE CODE EXITS DIRECTLY INTO FINE SERVOING. *  00734000
*    THIS IS ACCOMPLISHED BY SETTING THE TERMINATION COUNT TO ONE AS   *  00735000
*    IS DONE BY THE FOLLOWING THREE INSTRUCTIONS.  THE FOLLOWING       *  00736000
*    INSTRUCTION CLEARS R2 THUS INITIALIZING THE SERVO ERROR TO ZERO.  *  00737000
*                                                                      *  00738000
************************************************************************  00739000
```

```
741   F898  8802  6  SK06  LLIT  R2 = DLY1     * R2 := DELAY INDEX            00741000
      F899  0198
742   F89A  97DA  9        CALL  SDLAY         * CALL DELAY ROUTINE          00742000
743   F89B  8902  9        POP   R2            * R2 := MAXIMUM SERVO VALUE    00743000
744   F89C  5922  8              XR1 = R2      * SCW := R2                    00744000
745   F89D  8802  6        LLIT  R2 = DLY2     * R2 := DELAY INDEX            00745000
      F89E  022C
746   F89F  97DA  9        CALL  SDLAY         * CALL DELAY ROUTINE          00746000
747   F8A0  9FFA  9        CALL  SCWST,I       * ANALYSIS PATCH              00747000
748   F8A1  8902  9  SK07  POP   R2            * R2 := TERMINATION COUNT     00748000
749   F8A2  E201  6              R2 = 1        * SET TERMINATION COUNT := 1  00749000
750   F8A3  8002  8        PUSH  R2            * SAVE TERMINATION COUNT      00750000
751   F8A4  E200  6              R2 = 0        * CLEAR R2 (SERVO ERROR)      00751000
```

SEEK ROUTINE     MODEL TERMINATION PHASE

```
***********************************************************************   00753000
*                                                                    *   00754000
*           AT SKUB:                              STACK:              *   00755000
*    R0 := SCRATCH                                                    *   00756000
*    R2 := CURRENT SERVO ERROR         TERMINATION COUNT             *   00757000
*    R3 := SCRATCH                     SEEK RETURN ADDRESS            *   00758000
*    R4 := SCRATCH                                                    *   00759000
*    R5 := SCRATCH                                                    *   00760000
*    R6 := SCRATCH                                                    *   00761000
*    R7 := SCRATCH                                                    *   00762000
*                                                                    *   00763000
*                                                                    *   00764000
***********************************************************************   00765000


***********************************************************************   00767000
*                                                                    *   00768000
*        THE FOLLOWING CODE IS EXECUTED ONLY ONCE DURING A SEEK.  IT IS *  00769000
*   ENTERED EITHER AT THE START OF A SEEK SELF (0 TRACK SEEK), JUST   *   00770000
*   AFTER THE OPEN LOOP PORTION OF A ONE TRACK SEEK, OR WHEN THE      *   00771000
*   ESTIMATED TIME TO ARRIVAL REACHES ZERO DURING ANY OTHER SEEK.    *   00772000
*        THE FIRST THREE INSTRUCTIONS SET THE MODEL POSITION PARAMETER *  00773000
*   (M) TO THE ACTUAL TARGET TRACK.  THE NEXT INSTRUCTION SETS THE    *   00774000
*   SSLIM VALUE (R0) SUCH THAT THE SERVO RANGE EXTENDS FROM -SCWMX TO *   00775000
*   SCWMX (FULL RANGE).  THE NEXT INSTRUCTION CLEARS THE SERVO ERROR  *   00776000
*   TERM (R6).  THE FOLLOWING INSTRUCTION SETS THE ESTIMATED TIME TO  *   00777000
*   ARRIVAL TO ZERO (ETA2) TO INDICATE ARRIVAL AT TARGET.            *   00778000
*                                                                    *   00779000
***********************************************************************   00780000


    F8A5  C005 12  SKUB  LOAD  R5 = CTRK      * R5 := TARGET TRACK (PHYSICAL*4)    00782000
    F8A6  0066
    F8A7  B705  6        LSL   R5             * R5 := TARGET TRACK * 8            00783000
    F8A8  0005 12        STOR  M = R5         * SET MODEL TO TARGET TRACKS (EIGHTHS) 00784000
    F8A9  006C
    F8AA  0001  6              R0 = R0+1      * SET SSLIM: MIN = -31; MAX = 31    00785000
    F8AB  E600  6              R0 = 0         * CLEAR SERVO ERROR TERM            00786000
    F8AC  0000 12        STOR  ETA2 = R6      * CLEAR ETA2                        00787000
    F8AD  006B
```

```
********************************************************************    00789000
*                                                                 *    00790000
*       AT SK09:                              STACK:              *    00791000
*   R0 := SSLIM VALUE (FULL RANGE)                               *    00792000
*   R2 := CURRENT SERVO ERROR            TERMINATION COUNT       *    00793000
*   R3 := SCRATCH                        SEEK RETURN ADDRESS     *    00794000
*   R4 := SCRATCH                                               *    00795000
*   R5 := SCRATCH                                               *    00796000
*   R6 := K*SERVO ERROR                                         *    00797000
*   R7 := SCRATCH                                               *    00798000
*                                                                 *    00799000
********************************************************************    00800000


********************************************************************    00802000
*                                                                 *    00803000
*       THE FOLLOWING CODE IS ENTERED FROM THE MODEL UPDATE CODE IF *   00804000
*   THE MODEL VELOCITY HAS REACHED ZERO.  THIS CODE CHECKS THE SERVO *  00805000
*   ERROR AND DETERMINES AT WHAT POINT TO SWITCH TO FINE SERVO AND AT * 00806000
*   WHAT POINT TO EXIT THE SEEK ROUTINE.  THE TERMINATION IS DONE IN * 00807000
*   TWO PHASES.  THE FIRST PHASE IS UNDER CONTROL OF THE TCNT1 AND  *  00808000
*   TERR1 PARAMETERS.  DURING THIS PHASE THE TERMINATION COUNT (WHICH * 00809000
*   WAS INITIALIZED TO TCNT1) IS DECREMENTED EACH PASS IF THE SERVO *  00810000
*   ERROR IS LESS THAN OR EQUAL TERR1.  IF THE ERROR EXCEEDS TERR1  *  00811000
*   THEN THE TERMINATION COUNT IS REINITIALIZED TO TCNT1 AND THE    *  00812000
*   TERMINATION SEQUENCE STARTS OVER.  WHEN THE TERMINATION COUNT IS *  00813000
*   DECREMENTED TO ZERO, FINE SERVO IS INVOKED.  THE TERMINATION COUNT * 00814000
*   IS SET TO -TCNT2, AND THE TERMINATION SEQUENCE PROGRESSES TO THE *  00815000
*   SECOND PHASE.  THIS PHASE IS UNDER CONTROL OF THE TCNT2 AND TERR2 * 00816000
*   PARAMETERS.  AT THE START OF THIS PHASE THE TERMINATION COUNT IS *  00817000
*   EQUAL TO -TCNT2.  THEREAFTER THE TERMINATION COUNT IS INCREMENTED * 00818000
*   EACH PASS IF THE SERVO ERROR IS LESS THAN OR EQUAL TERR2.  IF THE * 00819000
*   ERROR EXCEEDS TERR2 THEN SEEK SERVO IS REINVOKED, THE TERMINATION * 00820000
*   COUNT IS REINITIALIZED TO TCNT1, AND THE TERMINATION SEQUENCE   *   00821000
*   STARTS OVER FROM THE BEGINNING.  WHEN THE TERMINATION COUNT IS  *   00822000
*   INCREMENTED TO ZERO (IN THE SECOND PHASE) THE SEEK ROUTINE EXITS. * 00823000
```

```
*       THE FOLLOWING CODE BEGINS BY COPYING THE ERROR VALUE INTO R5.   *    00824000
*    IF THE ERROR IS NEGATIVE, THE FOLLOWING TWO INSTRUCTIONS NEGATE    *    00825000
*    R5, LEAVING IT WITH THE POSITIVE ERROR VALUE.   THE FOLLOWING TWO  *    00826000
*    TWO INSTRUCTIONS POP AND TEST THE TERMINATION VALUE.   THE NEXT     *    00827000
*    INSTRUCTION BRANCHES TO SK10 IF THE TERMINATION COUNT IS NEGATIVE  *    00828000
*    (SECOND PHASE OF TERMINATION SEQUENCE): OTHERWISE, THE CODE DROPS   *    00829000
*    THROUGH TO THE NEXT BLOCK (FIRST PHASE OF TERMINATION SEQUENCE).   *    00830000
*                                                                        *    00831000
***********************************************************************  00832000


F6AE  5522  7  SK09            R5 = R2         * R5 := ERROR * 8                00834000
F8AF  8361  6        GOTO      *+2    IF >=    * SKIP IF POSITIVE               00835000
F8B0  8335  6                  R5 = -R5        * R5 := ABS(ERROR*8)             00836000
F8B1  8902  9        POP       R2              * R2 := TERMINATION COUNT        00837000
F8B2  6200  6                  R2 = R2+0       * TEST TERMINATION COUNT         00838000
F8B3  848E  6        GOTO      SK10   IF <     * BRANCH IF NEGATIVE             00839000
```

```
*************************************************************************
*                                                                       *
*        AT ENTRY INTO THE FOLLOWING CODE, R2 CONTAINS THE TERMINATION   *
*  COUNT (>0), AND R5 CONTAINS THE SERVO ERROR (>0).  SEEK SERVO IS      *
*  IN EFFECT AND THE TERMINATION SEQUENCE IS IN ITS FIRST PHASE.         *
*        THE FOLLOWING CODE BEGINS BY COMPARING THE SERVO ERROR WITH     *
*  TERR1.  IF THE SERVO ERROR IS GREATER THAN TERR1, THE FOLLOWING       *
*  INSTRUCTION WILL BRANCH TO SK13 WHERE THE TERMINATION COUNT WILL      *
*  BE RESET TO TCNT1; OTHERWISE, THE TERMINATION COUNT (R2) WILL BE      *
*  DECREMENTED BY THE FOLLOWING INSTRUCTION.  IF THE COUNT HAS NOT       *
*  YET REACHED ZERO, THE NEXT INSTRUCTION WILL BRANCH TO SK14 WHERE      *
*  THE TERMINATION COUNT WILL BE PUT BACK ON THE STACK AND CONTROL       *
*  PASSED BACK TO THE SERVO LOOP.                                        *
*        IF THE TERMINATION COUNT HAS REACHED ZERO THEN THE FIRST PHASE  *
*  OF THE TERMINATION SEQUENCE IS ENDED.  THE NEXT INSTRUCTION GETS      *
*  THE FINE SERVO ICW VALUE FROM CICW WHICH WAS SET UP PRIOR TO          *
*  ENTERING THIS ROUTINE.  THE NEXT INSTRUCTION OUTPUTS THIS VALUE       *
*  TO THE ICW THUS INVOKING FINE SERVO.  THE FOLLOWING INSTRUCTION       *
*  SETS THE TERMINATION COUNT (R2), WHICH IS CURRENTLY ZERO, TO THE      *
*  NEGATIVE VALUE OF TCNT2 BY SUBTRACTING (0-TCNT2=-TCNT2).  THE         *
*  NEXT INSTRUCTION BRANCHES TO SK14 FOLLOWING WHICH THE TERMINATION     *
*  COUNT IS PUSHED ONTO THE STACK AND CONTROL GIVEN BACK TO THE          *
*  SERVO LOOP.                                                           *
*                                                                       *
*************************************************************************
```

```
      F8B4   A502  6      CMP    R5,TERR1        * TEST ERROR*A
      F8B5   81CF  6      GOTO   SK13   IF >     * BRANCH IF > TERR1
      F8B6   6A01  6             R2 = R2-1       * DECREMENT TERMINATION COUNT
      F8B7   810D  6      GOTO   SK14   IF >     * BRANCH IF > 0
      F8B8   C005 12      LOAD   R5 = CICW       * R5 I= FINE SERVO ICW
      F8B9   0064
      F8BA   5825  8             XR0 = R5        * SET ICW (WITH FINE SERVO)
      F8BB   9FF9  9      CALL   SKCLR,I         * ANALYSIS PATCH
      F8BC   6A08  6             R2 = R2-TCNT2   * SET FINE SERVO TERM COUNT
      F8BD   6700  6      GOTO   SK14            * BRANCH
```

```
******************************************************************
*                                                                *
*            AT SK10:                          STACK:            *
*   R0 := SSLIM VALUE (FULL RANGE)                              *
*   R2 := TERMINATION COUNT           SEEK RETURN ADDRESS       *
*   R3 := SCRATCH                                               *
*   R4 := SCRATCH                                               *
*   R5 := POSITIVE SERVO ERROR (EIGHTHS)                        *
*   R6 := K*SERVO ERROR                                         *
*   R7 := SCRATCH                                               *
*                                                                *
******************************************************************


******************************************************************
*                                                                *
*       AT ENTRY INTO THE FOLLOWING CODE, THE TERMINATION COUNT (R2) *
*   IS NEGATIVE AND FINE SERVO IS IN EFFECT (THE TERMINATION SEQUENCE *
*   IS IN ITS SECOND PHASE).  THE FIRST INSTRUCTION TESTS THE SERVO *
*   ERROR (R5) AGAINST TERR2.  IF THE ERROR IS GREATER THAN TERR2, *
*   THE NEXT INSTRUCTION BRANCHES TO SK12 WHERE THE 1ST PHASE OF THE *
*   SEEK TERMINATION IS REINVOKED; ELSE, THE NEXT INSTRUCTION TESTS *
*   THE OFF TRACK FLAG.  IF THE FLAG IS SET THE NEXT INSTRUCTION WILL *
*   DROP TO THE NEXT THREE INSTRUCTIONS WHERE THE OFF TRACK COUNT IS *
*   RESET AND THE OFF TRACK FLAG IS CLEARED FOLLOWED BY A BRANCH TO *
*   SK14.  IF THE FLAG IS CLEAR THEN THE CODE BRANCHES TO SK11 WHERE *
*   THE OFF TRACK COUNT IS UPDATED AND TESTED.  IF LESS THAN ZERO, *
*   THE SEEK IS NOT DONE AND THE CODE BRANCHES TO SK14 WHERE THE OFF *
*   TRACK COUNT (R2) IS PUSHED BACK ON THE STACK AND THE SERVO LOOP *
*   IS REEXECUTED.  IF THE COUNT HAS REACHED ZERO, THEN THE SEEK HAS *
*   SUCCESSFULLY COMPLETED, SO THE CODE SETS R2 TO 1 FOR SUCCESSFUL *
*   COMPLETION STATUS AND BRANCHES TO THE EXIT CODE.             *
*                                                                *
******************************************************************
```

- 64 -

```
911   FBBE   A504   6   SK10   CMP    R5,TERR2      * TEST ERROR#A
912   FBBF   B1CA   6          GOTO   SK12  IF >    * BRANCH IF > TERR2
913   FBC0   2CEC   B          BTST   R4 = XR4(14)  * TEST OFF TRACK FLAG
914   FBC1   B2C6   6          GOTO   SK11  IF =    * BRANCH IF ON TRACK
915   FBC2   E200   6                 R2 = 0        * CLEAR R2 (TERMINATION COUNT)
916   FBC3   6A08   6                 R2 = R2-TCNT2 * R2 I= -TERMINATION COUNT
917   FBC4   EA06   7                 XR2 = 6       * CLEAR OFF TRACK FLAG
918   FBC5   87D0   6          GOTO   SK14          * BRANCH
919   FBC6   6201   6   SK11          R2 = R2+1     * INCREMENT TERMINATION COUNT
920   FBC7   84D0   6          GOTO   SK14  IF <    * BRANCH IF NOT DONE
921   FBC8   E201   6                 R2 = 1        * SET STATUS FOR SUCCESSFUL SEEK
922   FBC9   87F6   6          GOTO   EXIT          * BRANCH TO EXIT CODE
```

```
***************************************************************  00924000
*                                                            *  00925000
*          AT SK12, SK13, OR SK14:              STACK:       *  00926000
*   R0 := SSLIM VALUE (FULL RANGE)                           *  00927000
*   R2 := TERMINATION COUNT           SEEK RETURN ADDRESS    *  00928000
*   R3 := SCRATCH                                            *  00929000
*   R4 := SCRATCH                                            *  00930000
*   R5 := SCRATCH                                            *  00931000
*   R6 := K*SERVO ERROR                                      *  00932000
*   R7 := SCRATCH                                            *  00933000
*                                                            *  00934000
***************************************************************  00935000
```

```
***************************************************************  00937000
*                                                            *  00938000
*     AT SK12, FINE SERVO IS IN EFFECT AND THE TERMINATION SEQUENCE  *  00939000
*  IS IN ITS SECOND PHASE, BUT THE SERVO ERROR HAS EXCEEDED TERR2.   *  00940000
*  THEREFORE, THE CODE MUST REINITIALIZE THE TERMINATION SEQUENCE.   *  00941000
*  THE FIRST STEP IN DOING THIS IS TO REINVOKE THE SEEK SERVO.  THE  *  00942000
*  FIRST INSTRUCTION GETS THE FINE SERVO ICW VALUE FROM CICW.  THE   *  00943000
*  FOLLOWING TWO INSTRUCTIONS SET THE SEEK BIT IN THE ICW VALUE (R5) *  00944000
*  AND OUTPUT THIS VALUE TO THE ICW THUS INVOKING SEEK SERVO.        *  00945000
*     AT SK13, SEEK SERVO IS IN EFFECT (EITHER JUST SET IN THE PRIOR *  00946000
*  INSTRUCTIONS OR FROM THE FIRST PHASE OF THE TERMINATION SEQUENCE) *  00947000
*  BUT THE SERVO ERROR HAS EXCEEDED THE ERROR BOUND (TERR1 OR TERR2) *  00948000
*  AND THERFORE, THE TERMINATION COUNT (R2) MUST BE RESET TO TCNT1.  *  00949000
*  THIS IS DONE BY THE INSTRUCTION AT SK13.                          *  00950000
*     AT SK14, THE APPROPRIATE SERVO VALUE IS IN THE ICW AND THE     *  00951000
*  APPROPRIATE TERMINATION COUNT IS IN R2.  THESE TWO INSTRUCTIONS   *  00952000
*  PUT THE TERMINATION COUNT (R2) BACK ONTO THE STACK AND BRANCH TO  *  00953000
*  SK04 THUS REEXECUTING THE SERVO LOOP.                             *  00954000
*                                                            *  00955000
***************************************************************  00956000
```

| | | | | | | | | | |
|---|---|---|---|---|---|---|---|---|---|
| 958 | F8CA | C005 | 12 | SK12 | LOAD | R5 = CIC4 | * R5 := FINE SERVO ICW | 00958000 |
| | F8CB | 0064 | | | | | | |
| 959 | F8CC | 3D95 | 7 | | BCPL | R5(9) | * SET SEEK BIT OF ICW MASK | 00959000 |
| 960 | F8CD | 5825 | 8 | | . | AND = R5 | * SET ICW (WITH SEEK) | 00960000 |
| 961 | F8CE | 9FF8 | 9 | | CALL | SKSET,I | * ANALYSIS PATCH | 00961000 |
| 963 | F8CF | E203 | 6 | SK13 | | R2 = TCNT1 | * RESET TERMINATION COUNT | 00963000 |
| 965 | F8D0 | 0002 | 6 | SK14 | PUSH | R2 | * SAVE TERMINATION COUNT | 00965000 |
| 966 | F8D1 | 8766 | 6 | | GOTO | SK04 | * LOOP | 00966000 |

SEEK ROUTINE        SPECIAL MULTIPLICATION ROUTINE (Z)

```
***********************************************************************          00968000
*                                                                    *          00969000
*              AT ZMULT:                           STACK:            *          00970000
*       R0 :=  ZMULT RETURN ADDRESS                                  *          00971000
*       R2 :=  SCRATCH                        SSLIM VALUE            *          00972000
*       R3 :=  SIGN BIT OF R6                 TERMINATION COUNT      *          00973000
*       R4 :=  Z*K*E0                         SEEK RETURN ADDRESS    *          00974000
*       R5 :=  SCRATCH                                               *          00975000
*       R6 :=  SERVO ERROR * K (K*E0)                                *          00976000
*       R7 :=  SCRATCH                                               *          00977000
*                                                                    *          00978000
*** NOTE ***    K := COMPENSATION GAIN                               *          00979000
*                                                                    *          00980000
***********************************************************************          00981000


***********************************************************************          00983000
*                                                                    *          00984000
*       THE ZMULT ROUTINE IS USED IN THE SERVO LOOP TO MULTIPLY BY Z *          00985000
*    (Z = 7/8).  TO PERFORM THIS OPERATION ZMULT IS CALLED 3 TIMES.  *          00986000
*    THE PURPOSE OF ZMULT IS TO DIVIDE R6 BY TWO AND ADD THIS TO R4. *          00987000
*    THUS IN CALLING ZMULT 3 TIMES WITH R6 BEING DIVIDED BY TWO EACH *          00988000
*    TIME, R4 IS SET AS FOLLOWS: R4 = R4 + R6/2 + R6/4 + R6/8.  THUS,*          00989000
*    SINCE R4 IS INITIALLY ZERO, R4 IS SET TO R6*7/8.                *          00990000
*       THE FIRST INSTRUCTION SHIFTS R6 RIGHT ONE PLACE, BUT THIS    *          00991000
*    CLEARS THE MSB OF R6; THEREFORE, THE NEXT INSTRUCTION ADDS THE  *          00992000
*    SIGN BIT (R3) TO R6 THUS PROPAGATING THE SIGN.  THE FOLLOWING   *          00993000
*    INSTRUCTION ADDS R6 TO R4 AND THE LAST INSTRUCTION RETURNS TO THE*         00994000
*    SERVO LOOP.                                                     *          00995000
*                                                                    *          00996000
***********************************************************************          00997000


999   F802  8546   6   ZMULT LSR   R6            * R6 := R6/2              00999000
1000  F803  7623   7               R6 = R6+R3                             01000000
1001  F804  7426   7               R4 = R4+R6    * R4 := PARTIAL SUM      01001000
1002  F805  0100  10               RTRN          * RETURN                 01002000
```

```
              **********************************************************************  01004000
              *                                                                  *  01005000
              *     THE SIN14 ROUTINE IS USED IN THE SINIT ROUTINE TO PERFORM A  *  01006000
              * SHIFT AND ADD OPERATION (SHIFT R5 AND ADD TO R6).                *  01007000
              *     ICOMP IS AN INDIRECT LINK TO THE MCOMP ROUTINE WHICH COMPUTES *  01008000
              * THE MODEL VALUE M.                                               *  01009000
              *                                                                  *  01010000
              **********************************************************************  01011000


    F8D6  B705  6  SIN14 LSL   R5                  * R5 := R5*2          01013000
    F8D7  7625  7        R6 = R6+R5                * ADD TO PRODUCT (R6)  01014000
    F8D8  B100  10       RTRN                      * RETURN              01015000


    F8D9  F960     ICOMP DATA  MCOMP               * LINK TO MCOMP ROUTINE  01017000
```

```
**************************************************************************    01019000
*                                                                        *    01020000
*                        SHORT DELAY ROUTINE                             *    01021000
*       THE SHORT DELAY ROUTINE IS USED BY THE SEEK ROUTINE AT THOSE     *    01022000
*    THOSE PLACES WHERE THE PROGRAM MUST PAUSE FOR A FIXED PERIOD OF     *    01023000
*    TIME.  THIS OCCURS IN THE ONE TRACK OPEN LOOP SEEK CODE, IN THE     *    01024000
*    TRACK ADDRESS SAMPLING CODE, AND IN THE SEEK FAILURE CODE.          *    01025000
*       THE OPEN LOOP CODE IN THE TRACK-TO-TRACK SEEK ACCELERATES UP     *    01026000
*    FOR A FIXED TIME PERIOD, AND THEN DEACCELERATTES FOR A FIXED TIME   *    01027000
*    PERIOD.  THESE TWO DELAYS USE THIS ROUTINE.                         *    01028000
*       THE TRACK ADDRESS SAMPLING CODE MUST PAUSE BRIEFLY AFTER THE     *    01029000
*    EOG (END OF GAP) FLAG HAS OCCURED IN ORDER TO INSURE THAT THE       *    01030000
*    TRACK ADDRESS HAS BEEN LOADED INTO THE SPIBF (XR3).  THIS DELAY     *    01031000
*    ALSO USES THIS ROUTINE.                                             *    01032000
*       THE SEEK FAILURE CODE RETRACTS THE ARM INTO THE LANDING ZONE     *    01033000
*    FOLLOWING A SEEK FAILURE (INABILITY TO LATCH UP ON TRACK).  IT      *    01034000
*    ACCOMPLISHES THIS BY SUPPLYING HALF ACCELERATION TOWARDS THE        *    01035000
*    LANDING ZONE LONG ENOUGH TO INSURE THAT THE ARM IS THERE.  THIS     *    01036000
*    DELAY USES THIS ROUTINE AS WELL.                                    *    01037000
*       AT ENTRY INTO THIS ROUTINE, R2 CONTAINS THE DELAY INDEX.  THE    *    01038000
*    DELAY IS PERFORMED BY LOOPING ON THE FIRST TWO INSTRUCTIONS UNTIL   *    01039000
*    THE INDEX HAS BEEN DECREMENTED TO ZERO AT WHICH POINT THE CODE      *    01040000
*    FALLS THROUGH TO THE THIRD INSTRUCTION WHICH RETURNS.  IF THE       *    01041000
*    INDEX IS EQUAL TO ZERO AT ENTRY, THE LOOP IS PERFORMED 64K TIMES.   *    01042000
*       THE LOOP EXECUTES IN 12 MACHINE CYCLES.  THE OVERHEAD INVOLVED   *    01043000
*    IN CALLING THE ROUTINE AND RETURNING IS 19 MACHINE CYCLES.  THUS    *    01044000
*    FOR AN INDEX GREATER THAN ZERO THE DELAY IS 19+12*(INDEX) MACHINE   *    01045000
*    CYCLES.  A MACHINE CYCLE IS FIXED AT 237.5 NANOSECONDS BY A         *    01046000
*    CRYSTAL OSCILLATOR; THERFORE, FOR A DELAY INDEX GREATER THAN 0,     *    01047000
*    THE DELAY OF THIS ROUTINE IS 4.5125 + 2.85*(INDEX) MICROSECONDS.    *    01048000
*                                                                        *    01049000
**************************************************************************    01050000


F8DA  6A01   6  SDLAY          R2 = R2 - 1          * DECREMENT DELAY INDEX     01052000
F8DB  B5DA   6                 GOTO  SDLAY IF <>    * LOOP UNTIL ZERO           01053000
F8DC  0100  10                 RTRN                 * RETURN                    01054000
```

```
***************************************************************************
*                                                                         *
*                          SGAP ROUTINE                                   *
*     THE SGAP ROUTINE SERVES THE TRIPLE PURPOSE OF (1) WAITING FOR       *
* FOR A SECTOR GAP TO OCCUR, THUS KEEPING TIME DEPENDENT PROCESSES        *
* SUCH AS THE SERVO LOOP IN STEP, (2) READING THE TRACK ADDRESS OUT       *
* OF THE SPIBF FOLLOWING EOG (END OF GAP), AND (3) MONITORING THE         *
* NUMBER OF SAMPLE TIMES SINCE THE SEEK BEGAN AND ABORTING THE SEEK       *
* AFTER A SPECIFIED GROSS TIMEOUT.  THIS ROUTINE DOES NOT ALTER THE       *
* CONTENTS OF ANY REGISTER EXCEPT R2 IN WHICH IT RETURNS THE TRACK        *
* ADDRESS SAMPLE.                                                         *
*     THE ROUTINE BEGINS BY WRITING A 7 TO THE FLAG REGISTER (XR2).       *
* THIS CLEARS THE EOG FLAG (END OF GAP).  THE NEXT TWO INSTRUCTIONS       *
* TEST THE EOF FLAG AND LOOPS UNTIL IT SETS, THUS WAITING FOR THE         *
* END OF THE SECTOR GAP TO ARRIVE BEFORE CONTINUING.  THE FOLLOWING       *
* INSTRUCTION LOADS THE FAILURE COUNT (FCNT) INTO R2.  FCNT IS A          *
* IS A VALUE THAT WAS INITIALIZED TO THOUT AT THE START OF THE SEEK       *
* AND IS DECREMENTED EACH TIME THIS ROUTINE IS CALLED (ONCE EACH          *
* SAMPLE TIME); IF IT EVER REACHES ZERO BEFORE THE SEEK COMPLETES,        *
* THE SEEK IS ABORTED.  THE NEXT INSTRUCTION DECREMENTS THE FAILURE       *
* COUNT (R2) AND THE FOLLOWING INSTRUCTION BRANCHES TO THE FAILURE        *
* CODE IF THE COUNT HAS REACHED ZERO; OTHERWISE, THE FAILURE COUNT        *
* IS STORED BACK INTO MEMORY BY THE FOLLOWING INSTRUCTION.                *
*     THE NEXT TWO INSTRUCTIONS LOAD R2 WITH A DELAY INDEX AND CALL       *
* THE DELAY ROUTINE.  THIS SHORT DELAY IS NECESSARY TO INSURE THAT        *
* THE TRACK ADDRESS SAMPLE HAS BEEN LOADED INTO THE SPIBF (XR3)           *
* BEFORE THAT REGISTER IS READ.  THE FOLLOWING INSTRUCTION LOADS          *
* THE GROUND TRUE TRACK ADDRESS INTO R2 FROM THE SPIBF (XR3).  THE        *
* NEXT INSTRUCTION COMPLEMENTS R2 LEVING IT WITH HIGH TRUE DATA.          *
*     THE TRACK ADDRESS SAMPLE AS READ FROM THE SPIBF HAS THE TRACK       *
* ADDRESS VALUE IN THE HIGH ORDER 14 BITS WITH GARBAGE IN THE TWO         *
* LOW ORDER BITS.  THE NEXT TWO INSTRUCTIONS THEREFORE SHIFT OUT          *
* THE GARBAGE BITS LEAVING R2 WITH THE TRACK ADDRESS SAMPLE.  THE         *
* NEXT INSTRUCTION RETURNS TO THE CALLING CODE.                           *
*                                                                         *
***************************************************************************
```

```
1093  F8DD  EA07  7   SGAP          XR2 = 7        * CLEAR FOG FLAG
1094  F8DE  2AFC  8          BTST   R2 = XR4(15)   * TEST FOG FLAG
1095  F8DF  820E  6          GOTO   *-1    IF =    * LOOP UNTIL FLAG SETS
1096  F8E0  C002 12          LOAD   R2 = FCNT      * R2 := TIMEOUT COUNT
      F8E1  0068
1097  F8E2  6A01  6                 R2 = R2-1      * DECREMENT COUNT
1098  F8E3  82EE  6          GOTO   SFAIL IF =     * BRANCH IF TIMEOUT FAILURE
1099  F8E4  D002 12          STOR   FCNT = R2      * STORE UPDATED TIMEOUT COUNT
      F8E5  0068
1100  F8E6  E201  6                 R2 = 1         * R2 := DELAY INDEX
1101  F8E7  97DA  9          CALL   SDLAY          * CALL SHORT DELAY ROUTINE
1102  F8E8  522B  8                 R2 = XR3       * R2 := TRACK ADDRESS (*16)
1103  F8E9  B302  6                 R2 = NOT R2    * R2 := HIGH TRUE ADDRESS (*16)
1104  F8EA  8542  6          LSR    R2             * R2 := TRACK ADDRESS * 8
1105  F8EB  8542  6          LSR    R2             * R2 := TRACK ADDRESS * 4
1106  F8EC  9FFB  9          CALL   TRSET,I        * ANALYSIS PATCH
1107  F8ED  8100 10          RTRN                  * RETURN
```

```
*******************************************************************
*                                                                 *
*              AT SFAIL:                           STACK:         *
*     R0 := SGAP RETURN ADDRESS                                   *
*     R2 := 0                               SSLIM VALUE           *
*     R3 := SCRATCH                         TERMINATION COUNT     *
*     R4 := SCRATCH                         SEEK RETURN ADDRESS   *
*     R5 := SCRATCH                                               *
*     R6 := SCRATCH                                               *
*     R7 := SCRATCH                                               *
*                                                                 *
*******************************************************************


*******************************************************************
*                                                                 *
*       THE FOLLOWING CODE IS ENTERED FROM THE SGAP ROUTINE IF THE *
*  SEEK FAILS TO COMPLETE WITHIN 200 MSEC.  THE PURPOSE OF THIS CODE *
*  IS TO PUT THE HEAD IN THE LANDING ZONE, TURN OFF CURRENT IN THE *
*  ARM, RETURN R2 EQUAL TO ZERO IN ORDER TO REPORT SEEK FAILURE, AND *
*  RESTORE THE STACK BEFORE RETURNING TO THE CALLING PROGRAM.     *
*       THE FIRST INSTRUCTION LOADS R7 WITH A SEEK ICW VALUE.  THE *
*  FOLLOWING INSTRUCTION OUTPUTS THIS VALUE TO THE ICW THUS INVOKING *
*  SEEK SERVO AND ENABLING THE SCW TO MOVE THE ARM TO THE LANDING *
*  ZONE.  THE FOLLOWING INSTRUCTION LOADS THE SCW WITH A VALUE THAT *
*  ACCELERATES THE ARM TOWARD THE LANDING ZONE AT HALF MAXIMUM    *
*  ACCELERATION.  THE NEXT INSTRUCTION CALLS THE DELAY ROUTINE WHICH *
*  (SINCE THE DELAY INDEX .(R2) = 0) DELAYS FOR ABOUT 187 MSEC.  THIS *
*  IS SUFFICIENT TIME FOR THE ARM TO REACH THE LANDING ZONE.  THE *
*  NEXT INSTRUCTION OUTPUTS A ZERO TO THE SCW WHICH TURNS OFF THE *
*  CURRENT IN THE ACTUATOR.  THE NEXT TWO INSTRUCTIONS REMOVE THE *
*  TOP TWO ITEMS IN THE STACK (SSLIM AND THE TERMINATION COUNT).  *
*                                                                 *
*******************************************************************
```

```
1143  F8EE  8807  6  SFAIL LLIT  R7 = FVAL    *'R7 !=  TCW VALUE FOR SEEK FAILURE
      F8EF  AFFE
1144  F8F0  5827  0             XR0 = R7      *  SET  ICW
1145  F8F1  E910  7             XR1 = SCW16   *  SET SCW TO HALF INWARD CURRENT
1146  F8F2  970A  9    CALL  SDLAY            *  DELAY = APPROX. 187 MSEC.
1147  F8F3  E900  7             XR1 = SCW0    *  SET SCW TO 0 (NO ACCELERATION)
1148  F8F4  8900  9    POP   R0               *  R0 := SSLIM VALUE
1149  F8F5  8900  9    POP   R0               *  R0 := TERMINATION COUNT
```

```
**************************************************************         01151000
*                                                            *         01152000
*            AT EXIT:                            STACK:       *         01153000
*      R0 := SCRATCH                                          *         01154000
*      R2 := SEEK TERMINATION STATUS       SEEK RETURN ADDRESS *        01155000
*      R3 := SCRATCH                                          *         01156000
*      R4 := SCRATCH                                          *         01157000
*      R5 := SCRATCH                                          *         01158000
*      R6 := SCRATCH                                          *         01159000
*      R7 := SCRATCH                                          *         01160000
*                                                            *         01161000
**************************************************************         01162000


**************************************************************         01164000
*                                                            *         01165000
*      AT ENTRY INTO THE FOLLOWING CODE, EITHER THE SEEK HAS BEEN *     01166000
*  SUCCESSFULLY COMPLETED AND THE HEAD IS LATCHED UP ON THE TARGET *    01167000
*  TRACK (R7=0) OR THE SEEK FAILED AND THE HEAD IS IN THE LANDING *     01168000
*  ZONE (R7 NOT EQUAL 0).  THE PURPOSE OF THE FOLLOWING CODE IS TO *    01169000
*  RESTORE THE STACK AND RETURN TO THE CALLING PROGRAM.       *         01170000
*      THE FIRST INSTRUCTION RESTORES THE STACK BY POPPING THE SEEK *   01171000
*  RETURN ADDRESS BACK TO THE TOP OF THE STACK (R0).  THE FOLLOWING *   01172000
*  INSTRUCTION THEN RETURNS TO THE CALLING PROGRAM.          *          01173000
*                                                            *         01174000
**************************************************************         01175000


F8F6  8900  9  EXIT  POP   R0          * R0 := SEEK RETURN ADDRESS      01177000
F8F7  d100 10        RTRN              * RETURN FROM SEEK               01178000
```

SEEK ANALYSIS PATCHES

```
        ************************************************************************   01180000
        *                                                                     *   01181000
        *       THE FOLLOWING DATA VALUES PROVIDE THE LINK BETWEEN THE SEEK    *   01182000
        * ROUTINE ANALYSIS HOOKS AND THE DATA EXTRACTION ROUTINES IN THE       *   01183000
        * SEEK CONTROL PROGRAM.                                                *   01184000
        *                                                                     *   01185000
        ************************************************************************   01186000


  F8F8  FA01    SKSET DATA   ORG+!201    * LINK TO SKSET ROUTINE                   01188000
  F8F9  FA02    SKCLR DATA   ORG+!202    * LINK TO SKCLR ROUTINE                   01189000
  F8FA  FA03    SCWST DATA   ORG+!203    * LINK TO SCWST ROUTINE                   01190000
  F8FB  FA04    TKSET DATA   ORG+!204    * LINK TO TKSET ROUTINE                   01191000
  F8FC  FA05    EKSET DATA   ORG+!205    * LINK TO EKSET ROUTINE                   01192000
```

```
            SEEK ROUTINE        LINK TO SGAP ROUTINE

                                PORG   ORG+!15F                                        01194000
                                DORG   *                                               01195000


            ****************************************************************************   01197000
            *                                                                        *   01198000
            *       LINK TO SGAP ROUTINE (USED IN LOGICAL SEEK ROUTINE)              *   01199000
            *                                                                        *   01200000
            ****************************************************************************   01201000


      F95F  F8DD      IGAP   DATA   SGAP        * LINK TO SGAP ROUTINE                  01203000
```

```
*********************************************************************
*                                                                   *
*       THIS ROUTINE COMPUTES THE MODEL POSITION FROM THE ETASQ VALUE *
*  AND THE MODEL ACCELERATION.  AT ENTRY INTO THIS ROUTINE, ETASQ IS *
*  CONTAINED IN R4 (THE ETA SQUARED VALUE), AND THE PTARG VALUE IS   *
*  CONTAINED IN R3.  PTARG IS THE ADJUSTED TARGET VALUE FOR MODEL    *
*  COMPUTATIONS; IT IS POSITVE FOR OUTWARD SEEKS AND NEGATIVE FOR    *
*  INWARD SEEKS.                                                     *
*       THE MODEL POSITION IS COMPUTED USING THE PTARG VALUE AND THE *
*  EQUATION X=A*T**2/2, WHERE X IS DISTANCE, A IS ACCELLERATION, AND *
*  T IS TIME.  IN THIS EQUATION IF T**2 IS EQUAL TO ETASQ AND A IS   *
*  EQUAL TO THE MODEL ACCELLERATION, THEN X WILL BE THE DISTANCE     *
*  FROM THE MODEL TARGET (PTARG).  SINCE THE MODEL POSITION IS TO BE *
*  COMPUTED IN EIGHTHS OF TRACKS, THE EQUATION MUST BE MULTIPLIED BY *
*  EIGHT TO YIELD X=4*A*ETASQ (IN EIGHTHS OF TRACKS).  ACCELLERATION *
*  OF THE MODEL IS EQUAL TO 75% OF THE FULL ACCELERATION OF THE ARM. *
*  THIS VALUE IS A CONSTANT EQUAL TO .1796875 TRACKS/SAMPLE**2.  THE *
*  VALUE OF 4*A IS THEREFORE EQUAL TO .71875 TRACKS/SAMPLE**2.  THE  *
*  EQUATION IS THEREFORE Y=ETASQ*.71875.  THIS COMPUTATION IS DONE   *
*  BY THE FIRST TEN INSTRUCTIONS WHICH MULTIPLY ETASQ (R4) BY THE    *
*  VALUE .71875 AND LEAVE THE ROUNDED RESULT IN R5.                  *
*       THE NEXT INSTRUCTION ADDS THIS VALUE TO PTARG.  FOR OUTWARD  *
*  SEEKS THIS VALUE IS PTARG+X WHICH EQUALS THE MODEL POSITION AND   *
*  FOR INWARD SEEKS THIS VALUE IS -(ABS(PTARG)-X) WHICH EQUALS THE   *
*  NEGATIVE MODEL POSTION.  THE NEXT TWO INSTRUCTIONS CONVERT THE    *
*  MODEL POSITION TO A POSITIVE VALUE WHICH IS STORED IN M BY THE    *
*  FOLLOWING INSTRUCTION.  THE ROUTINE THEN RETURNS WITH THE MODEL   *
*  POSITION IN R5.                                                   *
*                                                                   *
*********************************************************************
```

```
1236   F960   5524   7   MCOMP         R5 = R4        * R5 := R4*.71875 := M*8     01236000
1237   F961   8545   6         LSR     R5                                         01237000
1238   F962   7524   7                 R5 = R5+R4                                 01238000
1239   F963   8545   6         LSR     R5                                         01239000
1240   F964   7524   7                 R5 = R5+R4                                 01240000
1241   F965   8545   6         LSR     R5                                         01241000
1242   F966   8545   6         LSR     R5                                         01242000
1243   F967   7524   7                 R5 = R5+R4                                 01243000
1244   F968   8545   6         LSR     R5                                         01244000
1245   F969   8225   6         ADDC.   R5             * ROUND TO NEAREST EIGHTH OF A TRACK   01245000
1246   F96A   7523   7                 R5 = R5+R3     * ADD ADJUSTED TARGET VALUE  01246000
1247   F96B   8160   6         GOTO    *+2   IF >     * SKIP IF POSITIVE           01247000
1248   F96C   8335   6                 R5 = -R5       * R5 := MODEL POSITION * 8   01248000
1249   F96D   D005  12         STOR    M = R5         * STOR NEW MODEL POSTION VALUE  01249000
       F96E   006C
1250   F96F   8100  10         RTRN                   * RETURN                     01250000
```

SEEK ROUTINE      END OF ROUTINE

```
********************************************************************    01252000
*                                                                 *    01253000
*                    END OF SEEK ROUTINE                          *    01254000
*                                                                 *    01255000
********************************************************************    01256000


               END                                                     01258000
```

CROSS REFERENCE TABLE

| | | | | | | | | | | |
|---|---|---|---|---|---|---|---|---|---|---|
| CICW | 100 | LIT [78] | 958 | 871 | | | | | | |
| CTRK | 102 | LIT [77] | 782 | | | | | | | |
| DLY1 | 408 | LIT [118] | 741 | | | | | | | |
| DLY2 | 556 | LIT [119] | 745 | | | | | | | |
| DOFF1 | 24 | LIT [284] | 314 | | | | | | | |
| DOFF2 | 11 | LIT [285] | 316 | | | | | | | |
| DOFF3 | 9 | LIT [286] | 317 | | | | | | | |
| ERSET | F8FC | ROM [1192] | 601 | 514 | | | | | | |
| ETA2 | 107 | LIT [73] | 787 | 698 | 693 | 454 | | | | |
| ETASQ | 106 | LIT [74] | 702 | 699 | 452 | | | | | |
| EXIT | F8F6 | ROM [1177] | 922 | | | | | | | |
| FCNT | 104 | LIT [75] | 1099 | 1096 | | | | | | |
| FVAL | -20482 | LIT [112] | 1143 | | | | | | | |
| ICOMP | F8D9 | ROM [1017] | 704 | 455 | | | | | | |
| IGAP | F95F | ROM [1203] | | | | | | | | |
| M | 108 | LIT [72] | 1249 | 784 | 597 | | | | | |
| MAXV | 60 | LIT [111] | 510 | | | | | | | |
| MCOMP | F960 | ROM [1236] | 1017 | | | | | | | |
| ORG | -2048 | LIT [28] | 1194 | 1192 | 1191 | 1190 | 1189 | 1188 | 121 | |
| PTARG | 103 | LIT [76] | 703 | 325 | | | | | | |
| SCW0 | 0 | LIT [108] | 1147 | | | | | | | |
| SCW16 | 16 | LIT [109] | 1145 | | | | | | | |
| SCW31 | 31 | LIT [106] | 202 | | | | | | | |
| SCW63 | 63 | LIT [107] | 156 | | | | | | | |
| SCWMX | 31 | LIT [113] | 654 | 652 | | | | | | |
| SCWST | F6FA | ROM [1190] | 747 | 662 | 232 | | | | | |
| SDLAY | F8DA | ROM [1052] | 1146 | 1101 | 1053 | 746 | 742 | | | |
| SEEK | F800 | ROM [152] | | | | | | | | |
| SFAIL | F8EE | ROM [1143] | 1098 | | | | | | | |
| SGAP | F8DD | ROM [1093] | 1203 | 598 | 502 | 500 | 499 | 164 | 163 | |
| SINIT | F81A | ROM [314] | | | | | | | | |
| SINT1 | F82A | ROM [364] | 378 | | | | | | | |

| | | | | | | | |
|---|---|---|---|---|---|---|---|
| SINT2 | F837 | ROM | [377] | 373 | | | |
| SINT3 | F846 | ROM | [446] | 451 | | | |
| SINT4 | F8D6 | ROM | [1013] | 408 | 406 | | |
| SK01 | F80F | ROM | [200] | 160 | | | |
| SK02 | F812 | ROM | [203] | 159 | | | |
| SK03 | F856 | ROM | [501] | 511 | 506 | | |
| SK04 | F866 | ROM | [558] | 966 | 705 | | |
| SK05 | F884 | ROM | [661] | 516 | | | |
| SK06 | F898 | ROM | [741] | 236 | | | |
| SK07 | F8A1 | ROM | [748] | 165 | | | |
| SK08 | F8A5 | ROM | [782] | 697 | | | |
| SK09 | F8AE | ROM | [834] | 695 | | | |
| SK10 | F8BE | ROM | [911] | 839 | | | |
| SK11 | F8C6 | ROM | [919] | 914 | | | |
| SK12 | F8CA | ROM | [958] | 912 | | | |
| SK13 | F8CF | ROM | [963] | 868 | | | |
| SK14 | F8D0 | ROM | [965] | 920 | 918 | 875 | 870 |
| SKCLR | F8F9 | ROM | [1189] | 873 | | | |
| SKSET | F8F8 | ROM | [1188] | 961 | 234 | | |
| SSLIM | 40 | REG | [79] | | | | |
| TCNT1 | 3 | LIT | [114] | 963 | 153 | | |
| TCNT2 | 8 | LIT | [116] | 916 | 674 | | |
| TERR1 | 2 | LIT | [115] | 867 | | | |
| TERR2 | 4 | LIT | [117] | 911 | | | |
| TRSET | F8F8 | ROM | [1191] | 1106 | | | |
| ZMULT | F8D2 | ROM· | [999] | 564 | 562 | 561 | |

NUMBER OF PASS 2 ERRORS=0
NUMBER OF PASS 2 WARNINGS=0

0000946

Int. Re: Case 1205
Hewlett-Packard Company

22th August 1978

C L A I M S :

1. Apparatus for controlling the movement of the data head in a moving-head data recording system, characterized by: signal conditioner (41) for receiving electronic signals representing data from the data head (46 a/b), said data including informational data recorded along tracks on a recording medium, and track following data and track addresses recorded at regular intervals in the informational data along the tracks; track following means (42) coupled to the signal conditioner (41) for guiding the data head (46 a/b) along a track of recorded data in response to electronic signals representing track following data received from the signal conditioner (41); and track locating means (43, 44, 45) coupled to the signal conditioner (41) and track following means (42) for moving the data head from one data track to another in response to the electronic signals representing track addresses and track following data received from the signal conditioner (41).

2. Apparatus as in claim 1, characterized in that the track following means (42) includes means for producing additional track locating data from the electronic signals representing track following data received from the signal conditioner (41).

3. Apparatus as in claims 1 or 2, characterized in that the informational data is recorded in sectors on magnetic recording medium, and the track following data and track addresses are recorded in the inter-sector gap between informational data sectors.

0000946

Int. Re: Case 1205
Hewlett-Packard Company

4. Apparatus as in any of claims 1 through 3, characterized in that
   the track addresses are recorded in a unit distance code format.

5. Apparatus as in any of claims 1 through 4, characterized in that
   the track following data for each track comprises two magnetic
   transitions serially disposed along the data track each extending
   from approximately the midpoint of the track to approximately
   the midpoint of the distance between tracks.

6. Apparatus as in claim 4 or 5, characterized in that the unit
   distance code format is a Gray code.

Figure 1

CURRENT
DRIVER
AMPLIFIER

LINEAR ACTUATOR

TARGET TRACK

SUBTRACTOR — D/A — $\sqrt{\phantom{x}}$ — $+$ / $-$ — $K_1$ — $\dfrac{K}{S}$ — $\dfrac{1}{S}$ — HEAD POSITION

CURRENT TRACK

UP/DOWN COUNTER

$K_3$

VELOCITY TRANSDUCER

$K_2$

POSITION TRANSDUCER

Figure 2

2/2

PRIOR ART

Figure 3

PRIOR ART

Figure 4

Figure 5

Figure 6

Figure 7

DATA       INTERSECTOR GAP       DATA

DATA-TRACK Ø
DATA-TRACK 1
DATA TRACK 2
DATA TRACK 3
DATA TRACK 4
DATA-TRACK 5
DATA-TRACK 6
DATA-TRACK 7

$W_n$   $W_7$ $W_6$ $W_5$ $W_4$ $W_3$ $W_2$ $W_1$

DATA-TRACK Ø
DATA TRACK 1

Figure 8

Figure 9

Figure 10

Figure II

Figure 12A-1

0000946

COMPUTE: TARGET OFFSET
$\sqrt{}$ OF DISTANCE
ETA, ETA2, ETASQ

CALL MCOMP

INITIALIZE SWITCHPOINT

CALL SGAP

CALL SGAP

CALL SGAP

PAST SWITCHPOINT ?

N

Y

DIFFERENCE OF
LAST TWO SAMPLES

> MAXV ?

Y

N

COMPUTE:
SECTION TERM OF
SERVO =

CALL SGAP

COMPUTE:
SERVO ERROR (SERR)
FIRST TERM
NEW SCW

SCW > SCWMX ?

N

Y

SCW←SCWMX

SCW > 0 ?

Y

N

SET SCW SIGN BIT

SCW ⊕ SSLTM = 0 ?

N

Y

Figure 12 A-2

Figure 12A-3

15/14

0000946

```
┌──────────────────────┐        ┌──────────────────┐
│  CLEAR SERVO ERROR   │        │     SCW ← 0      │
└──────────────────────┘        └──────────────────┘
```

OUTPUT SCW
(DECELERATION)

ETA2 = 0 ?

ETA2 ← ETA2 −2

TCNT ← TCNT +1

ETA2 = 0 ?

A

TCNT < 0 ?

STORE ETA2
UPDATE ETASQ
STORE ETASQ

SET STATUS

CALL MCOMP

RETURN

Figure 12A-4

```
         ┌──────────────┐                      ┌──────────────┐
         │    SGAP      │                      │   SDLAY 1    │
         └──────┬───────┘                      └──────┬───────┘
                │                                     │◄──────────┐
                ▼                                     ▼           │
         ┌──────────────┐                      ┌──────────────┐   │
         │    CLEAR     │                      │   COUNT ◄─   │   │
         │   EOG FLAG   │                      │   COUNT-1    │   │
         └──────┬───────┘                      └──────┬───────┘   │
                │◄──────────┐                         │           │
                ▼           │                         ▼           │
            ╱───────╲       │                     ╱───────╲   N   │
           ╱  EOG = 1 ╲  N  │                    ╱ COUNT = 0 ╲────┘
           ╲    ?     ╱─────┘                    ╲    ?      ╱
            ╲───────╱                             ╲───────╱
                │ Y                                   │ Y
                ▼                                     ▼
         ┌──────────────┐                      ┌──────────────┐
         │  DECREMENT   │                      │    RETURN    │
         │ FAILURE COUNT│                      └──────────────┘
         │(FCNT)◄─(FCNT)-1│
         └──────┬───────┘                          Figure 12C
                ▼
            ╱───────╲   Y
           ╱(FCNT) = 0╲──────────────────────────────┐
           ╲    ?     ╱                               │
            ╲───────╱                                 ▼
                │ N                            ┌──────────────┐
                ▼                              │ ICW ◄─ ! AFFE│
         ┌──────────────┐                      │ SCW ◄─ ! 10  │
         │SET DELAY COUNT│                     │(SEEK INWARD) │
         └──────┬───────┘                      └──────┬───────┘
                ▼                                     ▼
         ┌─┤├──────────┤├─┐                    ┌─┤├──────────┤├─┐
         │  CALL SDLAY1  │                     │  CALL SDLAY1  │
         └──────┬────────┘                     └──────┬────────┘
                ▼                                     ▼
         ┌──────────────┐                      ┌──────────────┐
         │ READ TRACK   │                      │   SCW ◄─ 0   │
         │ ADDRESS FROM │                      │ CLEAR STACK  │
         │SPIBUF (14 MSB)│                     └──────┬───────┘
         └──────┬───────┘                             ▼
                ▼                              ┌──────────────┐
         ┌──────────────┐                      │RETURN FROM PSEEK│
         │    RETURN    │                      └──────────────┘
         └──────────────┘
```

Figure 12B

STEADY
STATE
ERROR

SETTLING
TIME

TARGET

ACTUATOR

POSITION

MODEL

TIME

Figure 13A

STEADY
STATE
ERROR

REDUCED SETTLING TIME

TARGET

MODEL STEP

ACTUATOR

POSITION

MODEL

TIME

Figure 13B